(19) Europäisches Patentamt
European Patent Office
Office européen des brevets

(11) **EP 4 429 390 A1**

(12) **EUROPEAN PATENT APPLICATION**
published in accordance with Art. 153(4) EPC

(43) Date of publication:
**11.09.2024   Bulletin 2024/37**

(21) Application number: **22897693.2**

(22) Date of filing: **17.11.2022**

(51) International Patent Classification (IPC):
***H04W 74/08*** (2024.01)

(52) Cooperative Patent Classification (CPC):
**H04J 11/00; H04L 5/00; H04W 72/231;
H04W 72/232; H04W 74/08**

(86) International application number:
**PCT/CN2022/132544**

(87) International publication number:
**WO 2023/093610 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021   CN 202111432232**

(71) Applicant: **Huawei Technologies Co., Ltd.
Shenzhen, Guangdong 518129 (CN)**

(72) Inventors:
• **XU, Xiuqiang**
  **Shenzhen, Guangdong 518129 (CN)**
• **WANG, Lei**
  **Shenzhen, Guangdong 518129 (CN)**
• **WEI, Fan**
  **Shenzhen, Guangdong 518129 (CN)**
• **CHEN, Yan**
  **Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57)   This application relates to the communication field, and discloses a communication method and apparatus, to prevent a network device from frequently configuring signatures for a terminal device, and reduce signaling overheads and power consumption of the network device and the terminal device. The method includes: A terminal device determines a first downlink signal from a plurality of downlink signals; the terminal device determines, based on the first downlink signal, at least one signature from a plurality of signatures that have a mapping relationship or an association relationship with the plurality of downlink signals; and the terminal device sends data by using the at least one signature.

FIG. 4

**Description**

**CROSS-REFERENCE TO RELATED APPLICATIONS**

This application claims priority to Chinese Patent Application No. 202111432232.0, filed with the China National Intellectual Property Administration on November 29, 2021 and entitled "COMMUNICATION METHOD AND APPARATUS", which is incorporated herein by reference in its entirety.

**TECHNICAL FIELD**

Embodiments of this application relate to the field of communication technologies, and in particular, to a communication method and apparatus.

**BACKGROUND**

In wireless communication, data is sent from one device to another device by using radio resources. Physically, the radio resources are classified into time-domain resources and frequency-domain resources. When a plurality of users are simultaneously served, because freedom of the physical radio resources is limited, a problem of how to allocate the physical radio resources among the plurality of users occurs, and the problem is a multiple access (multiple access, MA) problem. From a perspective of resource multiplexing, the MA technology may be classified into orthogonal multiple access (orthogonal multiple access, OMA) and non-orthogonal multiple access (non-orthogonal multiple access, NOMA). "Orthogonal" herein means that each user has independent freedom in at least one resource domain (such as time domain, frequency domain, code domain, and space domain), that is, data transmission of one user is not affected by another user in at least one resource domain.

In the OMA technology, radio resources are allocated to users in an orthogonal manner. Therefore, a quantity of users that can be simultaneously served is strictly limited by a quantity of orthogonal resources in a resource dimension, and ultra-large connections cannot be implemented. In addition, a future smart city, a smart life, a smart factory, and another scenario and application that requires ultra-large connections cannot be supported. The NOMA technology is developed to compensate for the limitation of the OMA technology. In the NOMA technology, resource collision over an orthogonal channel may be tolerated, and therefore a user capacity may be expanded. The principle is to use a signature (signature) of a transmitter to suppress interference between the users and to detect and receive data of a plurality of users.

Currently, an application solution of the NOMA technology is as follows: A network device configures a plurality of signature groups, and signatures in a same signature group are orthogonal to each other. The network device groups terminal devices based on a correlation of uplink channels between accessed terminal devices, and allocates signatures in a same signature group to terminal devices in a same group, to ensure communication performance between the network device and the terminal devices. However, in this solution, the network device needs to continuously estimate the correlation of the uplink channels between the terminal devices, and when the group to which the terminal device belongs changes, the network device further needs to re-deliver indication information to allocate a signature to the terminal device. This causes large signaling overheads and power consumption overheads to the network device and the terminal devices.

**SUMMARY**

Embodiments of this application provide a communication method and apparatus, to prevent a network device from frequently configuring signatures for a terminal device, and reduce signaling overheads and power consumption of the network device and the terminal device.

According to a first aspect, an embodiment of this application provides a communication method. The method includes: A terminal device determines a first downlink signal from a plurality of downlink signals; the terminal device determines at least one signature based on the first downlink signal; and the terminal device sends data by using the at least one signature. Optionally, the downlink signal is an SSB.

The communication method may be performed by the terminal device, or may be performed by a component (for example, a processor, a chip, or a chip system) of the terminal device, or may be implemented by a logical module or software that can implement all or some functions of the terminal device. The signature may be one or more of a code-domain resource, a pilot resource, a power resource, a space-domain resource, a resource hopping pattern, and the like.

According to the foregoing method, an association or a mapping relationship between a downlink signal and a signature may be configured by using a characteristic that the downlink signal may represent different spatial directions, beam directions, or spatial characteristics (for example, quasi co-location), so that the terminal device may determine a to-be-used signature based on the determined first downlink signal. This can prevent the network device from frequently configuring the signatures for the terminal device, and reduce the signaling overheads and the power consumption of the network device and the terminal device.

In a possible design, that the terminal device determines at least one signature based on the first downlink signal includes: the terminal device determines, based on the first downlink signal, a first resource from a plurality of resources that have a mapping relationship with the plurality of downlink signals; and the terminal device determines, based on the first resource, the at least one signature from a plurality of signatures that have a mapping relationship with the plurality of resources.

According to the foregoing design, a mapping relationship between a plurality of downlink signals and a plurality of resources, and a mapping relationship between a plurality of resources and a plurality of signatures may be configured on the terminal device in a manner such as a protocol predefinition or an indication by the network device, so that the terminal device may determine a to-be-used signature based on the determined first downlink signal. This can effectively prevent the network device from frequently configuring the signatures for the terminal device.

In a possible design, the resources are a preamble (preamble) and a physical random access channel PRACH time-frequency resource for sending the preamble; and the mapping relationship between a plurality of resources and a plurality of signatures includes: a mapping relationship between N preambles on the PRACH time-frequency resource and M combinations of a physical uplink shared channel PUSCH time-frequency resource, a pilot resource, and a signature; a mapping relationship between N preambles on the PRACH time-frequency resource and M combinations of a PUSCH time-frequency resource and a signature; a mapping relationship between N preambles on the PRACH time-frequency resource and M combinations of a pilot resource and a signature; or a mapping relationship between N preambles on the PRACH time-frequency resource and M signatures, where M and N are positive integers. Optionally, at least one of M and N is 1.

Optionally, the mapping relationship between N preambles on the PRACH time-frequency resource and M combinations of a PUSCH time-frequency resource and a signature includes: the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

According to the foregoing design, a specific implementation of applying the signature during random access is provided, to help increase a quantity of terminal devices that are allowed to access the network device, and improve random access and data transmission performance.

In a possible design, the resources are a pilot resource and a PUSCH time-frequency resource, and the mapping relationship between a plurality of resources and a plurality of signatures includes: a mapping relationship between P pilot resources on the PUSCH time-frequency resource and Q signatures, where P and Q are positive integers. Optionally, at least one of P and Q is 1.

Optionally, the mapping relationship between P pilot resources on the PUSCH time-frequency resource and Q signatures includes: the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and the Q signatures mapped to the P pilot resources are first selected in increasing order of signature group indexes, and then in increasing order of indexes in a signature group, where the signature is a code-domain resource, a code-domain resource hopping pattern, a space-domain resource, or a space-domain resource hopping pattern.

According to the foregoing design, the signatures may be grouped based on a correlation (for example, whether signatures are orthogonal) of the signatures. When signatures of different access terminal devices are not orthogonal, pilot resources are orthogonal as much as possible. When pilot resources are not orthogonal, signatures are orthogonal as much as possible. This can increase a quantity of terminal devices that access the network device, and improve access and data transmission performance.

In a possible design, the method further includes: The terminal device receives configuration information from a network device, where the configuration information is used to configure the mapping relationship between a plurality of resources and a plurality of signatures.

According to the foregoing design, the mapping relationship between a plurality of resources and a plurality of signatures may be configured based on the configuration information from the network device, so that the network device and the terminal device have a consistent understanding of the mapping relationship between a plurality of resources and a plurality of signatures. This helps improve communication performance.

In a possible design, there is a mapping relationship between a plurality of downlink signals and a plurality of signatures, and the at least one signature is a signature that is in the plurality of signatures and that is mapped to the first downlink signal; and the mapping relationship between a plurality of downlink signals and a plurality of signatures includes: a mapping relationship between R downlink signals in the plurality of downlink signals and S combinations of a PUSCH time-frequency resource, a pilot resource, and a signature; a mapping relationship between R downlink signals in the plurality of downlink signals and S combinations of a PUSCH time-frequency resource and a signature; a mapping relationship between R downlink signals in the plurality of downlink signals and S combinations of a pilot resource and a signature; or a mapping relationship between R downlink signals in the plurality of downlink signals and S signatures, where R and S are positive integers. Optionally, at least one of R and S is 1.

Optionally, the mapping relationship between R downlink signals in the plurality of downlink signals and S combinations of a PUSCH time-frequency resource and a signature includes: the R downlink signals are selected from the plurality of downlink reference signals in increasing order of indexes; and the S combinations of a PUSCH time-frequency resource and a signature that correspond to the R downlink signals are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

Generally, a plurality of consecutive preambles are mapped to a same downlink signal. Signatures can be grouped based on a correlation of the signatures (for example, whether the signatures are orthogonal). This ensures that the same downlink signal is associated with signatures with a low correlation or orthogonal signatures, to improve access and data transmission performance.

In a possible design, the method further includes: The terminal device receives configuration information from a network device, where the configuration information is used to configure the mapping relationship between a plurality of downlink signals and a plurality of signatures.

In a possible design, that the terminal device determines at least one signature based on the first downlink signal includes: The terminal device determines the at least one signature in a signature set associated with the first downlink signal, where each of the plurality of downlink signals has an associated signature set.

Optionally, any two signatures in the signature set associated with the first downlink signal are orthogonal to each other; and at least one signature in the signature set associated with the first downlink signal is not orthogonal to at least one signature in a signature set associated with a fourth downlink signal, and the fourth downlink signal is one of the plurality of downlink signals.

According to the foregoing design, a characteristic that the downlink signal may represent different spatial directions, beam directions, or spatial characteristics may be used, so that any two signatures in a signature set associated with a same downlink signal are orthogonal to each other, and signature sets associated with different downlink signals may not be orthogonal to each other. This can improve signature utilization while reducing interference between terminal devices in a same downlink signal.

In a possible design, that the terminal device determines the at least one signature in a signature set associated with the first downlink signal includes: when the terminal device is determined to locate in a coverage edge area of the first downlink signal, the terminal device determines the at least one signature in a first signature subset, where the first signature subset and a signature set associated with a second downlink signal are orthogonal to each other; a correlation between the first signature subset and the signature set associated with the second downlink signal is lower than a correlation threshold; and the first signature subset is a subset of the signature set associated with the first downlink signal, and the second downlink signal is one of the plurality of downlink signals.

According to the foregoing design, the association relationship between the downlink signal and the signature set may be further refined based on coverage of the downlink signal. Different coverage areas of the downlink signal may be associated with different signature subsets. Signatures associated with non-coverage edge areas of different downlink signals may not be orthogonal or have a higher correlation. In the coverage of the downlink signal, a signature in the signature set associated with the downlink signal is partially multiplexed. This helps improve access performance.

In a possible design, that the terminal device sends data by using the at least one signature includes: when the terminal device is located in the coverage edge area of the first downlink signal, the terminal device sends the data by using a first transmission parameter and the at least one signature; or when the terminal device is located in a non-coverage edge area of the first downlink signal, the terminal device sends the data by using a second transmission parameter and the at least one signature.

According to the foregoing design, transmission parameters may be configured based on interference of different coverage areas of the downlink signal. In different coverage areas of the downlink signal, the terminal device may send data by using different transmission parameters. This helps reduce interference between terminal devices and improve data transmission performance.

In a possible design, a condition for determining that the terminal device is located in the coverage edge area of the first downlink signal includes one or more of the following: signal quality of the first downlink signal is less than or equal to a first threshold; signal quality of a third downlink signal is greater than or equal to a second threshold; an absolute value of a difference between signal quality of a third downlink signal and signal quality of the first downlink signal is less than or equal to a third threshold; or a ratio of signal quality of a third downlink signal to signal quality of the first downlink signal is greater than or equal to a fourth threshold; and the third downlink signal is a downlink signal with highest signal quality in the plurality of downlink signals other than the first downlink signal.

According to the foregoing design, the terminal device may determine the coverage area in which the terminal device is located based on the determined signal quality of the first downlink signal, or based on the determined difference between the signal quality of the first downlink signal and signal quality of another downlink signal. This provides a plurality of implementations of determining the coverage area in which the terminal device is located, and helps meet differentiated requirements applicable to different communication scenarios.

In a possible design, the method further includes: The terminal device determines an interference and/or multiplexing level of a time-frequency resource for sending the data; and the terminal device determines a third transmission parameter based on the interference and/or multiplexing level of the time-frequency resource, where the third parameter meets the following characteristic: a higher interference and/or multiplexing level of the time-frequency resource indicates a lower power corresponding to the third transmission parameter; and that the terminal device sends data by using the at least one signature includes: The terminal device sends the data by using the third transmission parameter and the at least one signature.

According to the foregoing design, the transmission parameter may be determined based on the interference and/or multiplexing level of the time-frequency resource for sending the data. This helps reduce interference between terminal devices for sending the data, and improve data transmission performance.

According to a second aspect, an embodiment of this application provides a communication method. The method includes: A network device determines configuration information, where the configuration information is used to configure a mapping relationship between a plurality of resources and a plurality of signatures, or configure a mapping relationship between a plurality of downlink signals and a plurality of signatures; and the network device sends the configuration information to a terminal device. Optionally, the downlink signal is an SSB.

The communication method may be performed by the network device, or may be performed by a component (for example, a processor, a chip, or a chip system) of the network device, or may be implemented by a logical module or software that can implement all or some functions of the terminal device.

In a possible design, the resources are a preamble (preamble) and a physical random access channel PRACH time-frequency resource for sending the preamble; and

the mapping relationship between a plurality of resources and a plurality of signatures includes: a mapping relationship between N preambles on the PRACH time-frequency resource and M combinations of a physical uplink shared channel PUSCH time-frequency resource, a pilot resource, and a signature; a mapping relationship between N preambles on the PRACH time-frequency resource and M combinations of a PUSCH time-frequency resource and a signature; a mapping relationship between N preambles on the PRACH time-frequency resource and M combinations of a pilot resource and a signature; or a mapping relationship between N preambles on the PRACH time-frequency resource and M signatures, where M and N are positive integers. Optionally, at least one of M and N is 1.

Optionally, the mapping relationship between N preambles on the PRACH time-frequency resource and M combinations of a PUSCH time-frequency resource and a signature includes: the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

In a possible design, the resources are a pilot resource and a PUSCH time-frequency resource, and the mapping relationship between a plurality of resources and a plurality of signatures includes: a mapping relationship between P pilot resources on the PUSCH time-frequency resource and Q signatures, where P and Q are positive integers. Optionally, at least one of P and Q is 1.

Optionally, the mapping relationship between P pilot resources on the PUSCH time-frequency resource and Q signatures includes: the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and the Q signatures mapped to the P pilot resources are first selected in increasing order of signature group indexes, and then in increasing order of indexes in a signature group, where the signature is a code-domain resource, a code-domain resource hopping pattern, a space-domain resource, or a space-domain resource hopping pattern.

In a possible design, the mapping relationship between a plurality of downlink signals and a plurality of signatures includes: a mapping relationship between R downlink signals in the plurality of downlink signals and S combinations of a PUSCH time-frequency resource, a pilot resource, and a signature; a mapping relationship between R downlink signals in the plurality of downlink signals and S combinations of a PUSCH time-frequency resource and a signature; a mapping relationship between R downlink signals in the plurality of downlink signals and S combinations of a pilot resource and a signature; or a mapping relationship between R downlink signals in the plurality of downlink signals and S signatures, where R and S are positive integers. Optionally, at least one of R and S is 1.

Optionally, the mapping relationship between R downlink signals in the plurality of downlink signals and S combinations of a PUSCH time-frequency resource and a signature includes: the R downlink signals are selected from the plurality of downlink reference signals in increasing order of indexes; and the S combinations of a PUSCH time-frequency resource and a signature that correspond to the R downlink signals are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

According to a third aspect, an embodiment of this application provides a communication apparatus. The communication apparatus may include an interface unit and a processing unit. The processing unit is configured to: determine a first downlink signal from a plurality of downlink signals, and determine at least one signature based on the first downlink signal; and the interface unit is configured to send data by using the at least one signature. Optionally, the downlink signal is an SSB.

In a possible design, when determining the at least one signature based on the first downlink signal, the processing unit is specifically configured to: determine, based on the first downlink signal, a first resource from a plurality of resources that have a mapping relationship with the plurality of downlink signals; and determine, based on the first resource, the at least one signature from a plurality of signatures that have a mapping relationship with the plurality of resources.

In a possible design, the resources are a preamble (preamble) and a physical random access channel PRACH time-frequency resource for sending the preamble; and the mapping relationship between a plurality of resources and a plurality of signatures includes: a mapping relationship between N preambles on the PRACH time-frequency resource and M combinations of a physical uplink shared channel PUSCH time-frequency resource, a pilot resource, and a signature; a mapping relationship between N preambles on the PRACH time-frequency resource and M combinations of a PUSCH time-frequency resource and a signature; a mapping relationship between N preambles on the PRACH time-frequency resource and M combinations of a pilot resource and a signature; or a mapping relationship between N preambles on the PRACH time-frequency resource and M signatures, where M and N are positive integers. Optionally, at least one of M and N is 1.

In a possible design, the mapping relationship between N preambles on the PRACH time-frequency resource and M combinations of a PUSCH time-frequency resource and a signature includes: the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

In a possible design, the resources are a pilot resource and a PUSCH time-frequency resource, and the mapping relationship between a plurality of resources and a plurality of signatures includes: a mapping relationship between P pilot resources on the PUSCH time-frequency resource and Q signatures, where P and Q are positive integers. Optionally, at least one of P and Q is 1.

In a possible design, the mapping relationship between P pilot resources on the PUSCH time-frequency resource and Q signatures includes: the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and the Q signatures mapped to the P pilot resources are first selected in increasing order of signature group indexes, and then in increasing order of indexes in a signature group, where the signature is a code-domain resource, a code-domain resource hopping pattern, a space-domain resource, or a space-domain resource hopping pattern.

In a possible design, the interface unit is further configured to receive configuration information from a network device, where the configuration information is used to configure the mapping relationship between a plurality of resources and a plurality of signatures.

In a possible design, there is a mapping relationship between a plurality of downlink signals and a plurality of signatures, and the at least one signature is a signature that is in the plurality of signatures and that is mapped to the first downlink signal; and the mapping relationship between a plurality of downlink signals and a plurality of signatures includes: a mapping relationship between R downlink signals in the plurality of downlink signals and S combinations of a PUSCH time-frequency resource, a pilot resource, and a signature; a mapping relationship between R downlink signals in the plurality of downlink signals and S combinations of a PUSCH time-frequency resource and a signature; a mapping relationship between R downlink signals in the plurality of downlink signals and S combinations of a pilot resource and a signature; or a mapping relationship between R downlink signals in the plurality of downlink signals and S signatures, where R and S are positive integers. Optionally, at least one of R and S is 1.

In a possible design, the mapping relationship between R downlink signals in the plurality of downlink signals and S combinations of a PUSCH time-frequency resource and a signature includes: the R downlink signals are selected from the plurality of downlink reference signals in increasing order of indexes; and the S combinations of a PUSCH time-frequency resource and a signature that correspond to the R downlink signals are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

In a possible design, the interface unit is further configured to receive configuration information from a network device, where the configuration information is used to configure the mapping relationship between a plurality of downlink signals and a plurality of signatures.

In a possible design, when determining the at least one signature based on the first downlink signal, the processing unit is specifically configured to determine the at least one signature in a signature set associated with the first downlink signal, where each of the plurality of downlink signals has an associated signature set.

In a possible design, when determining the at least one signature in the signature set associated with the first downlink signal, the processing unit is specifically configured to: when the processing unit determines that the communication apparatus is located in a coverage edge area of the first downlink signal, determine the at least one signature in a first signature subset, where the first signature subset and a signature set associated with a second downlink signal are orthogonal to each other; a correlation between the first signature subset and the signature set associated with the second downlink signal is lower than a correlation threshold; and the first signature subset is a subset of the signature set associated with the first downlink signal, and the second downlink signal is one of the plurality of downlink signals.

In a possible design, when sending the data by using the at least one signature, the interface unit is specifically configured to: when the processing unit determines that the communication apparatus is located in the coverage edge area of the first downlink signal, send the data by using a first transmission parameter and the at least one signature; or when the processing unit determines that the communication apparatus is located in a non-coverage edge area of the first downlink signal, send the data by using a second transmission parameter and the at least one signature.

In a possible design, a condition for determining, by the processing unit, that the communication apparatus is located in the coverage edge area of the first downlink signal includes one or more of the following: signal quality of the first downlink signal is less than or equal to a first threshold; signal quality of a third downlink signal is greater than or equal to a second threshold; an absolute value of a difference between signal quality of a third downlink signal and signal quality of the first downlink signal is less than or equal to a third threshold; or a ratio of signal quality of a third downlink signal to signal quality of the first downlink signal is greater than or equal to a fourth threshold; and the third downlink signal is a downlink signal with highest signal quality in the plurality of downlink signals other than the first downlink signal.

In a possible design, the processing unit is further configured to: determine an interference and/or multiplexing level of a time-frequency resource for sending the data; and determine a third transmission parameter based on the interference and/or multiplexing level of the time-frequency resource, where the third parameter meets the following characteristic: a higher interference and/or multiplexing level of the time-frequency resource indicates a lower power corresponding to the third transmission parameter; and when sending the data by using the at least one signature, the interface unit is specifically configured to send the data by using the third transmission parameter and the at least one signature.

In a possible design, any two signatures in the signature set associated with the first downlink signal are orthogonal to each other; and at least one signature in the signature set associated with the first downlink signal is not orthogonal to at least one signature in a signature set associated with a fourth downlink signal, and the fourth downlink signal is one of the plurality of downlink signals.

In a possible design, the signature is at least one of a code-domain resource, a pilot resource, a power resource, a space-domain resource, and a resource hopping pattern.

According to a fourth aspect, an embodiment of this application provides a communication apparatus. The communication apparatus may include an interface unit and a processing unit. The processing unit is configured to determine configuration information, where the configuration information is used to configure a mapping relationship between a plurality of resources and a plurality of signatures, or configure a mapping relationship between a plurality of downlink signals and a plurality of signatures; and the interface unit is configured to send the configuration information to a terminal device. Optionally, the downlink signal is an SSB.

In a possible design, the resources are a preamble (preamble) and a physical random access channel PRACH time-frequency resource for sending the preamble; and the mapping relationship between a plurality of resources and a plurality of signatures includes: a mapping relationship between N preambles on the PRACH time-frequency resource and M combinations of a physical uplink shared channel PUSCH time-frequency resource, a pilot resource, and a signature; a mapping relationship between N preambles on the PRACH time-frequency resource and M combinations of a PUSCH time-frequency resource and a signature; a mapping relationship between N preambles on the PRACH time-frequency resource and M combinations of a pilot resource and a signature; or a mapping relationship between N preambles on the PRACH time-frequency resource and M signatures, where M and N are positive integers. Optionally, at least one of M and N is 1.

In a possible design, the mapping relationship between N preambles on the PRACH time-frequency resource and M combinations of a PUSCH time-frequency resource and a signature includes: the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

In a possible design, the resources are a pilot resource and a PUSCH time-frequency resource, and the mapping relationship between a plurality of resources and a plurality of signatures includes: a mapping relationship between P pilot resources on the PUSCH time-frequency resource and Q signatures, where P and Q are positive integers. Optionally, at least one of P and Q is 1.

In a possible design, the mapping relationship between P pilot resources on the PUSCH time-frequency resource and Q signatures includes: the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and the Q signatures mapped to the P pilot resources are first selected in increasing order of signature group indexes, and then in increasing order of indexes in a signature group, where the signature is a code-domain resource, a code-domain resource hopping pattern, a space-domain resource, or a space-domain resource hopping pattern.

In a possible design, the mapping relationship between a plurality of downlink signals and a plurality of signatures includes: a mapping relationship between R downlink signals in the plurality of downlink signals and S combinations of a PUSCH time-frequency resource, a pilot resource, and a signature; a mapping relationship between R downlink signals in the plurality of downlink signals and S combinations of a PUSCH time-frequency resource and a signature; a mapping relationship between R downlink signals in the plurality of downlink signals and S combinations of a pilot resource and a signature; or a mapping relationship between R downlink signals in the plurality of downlink signals and S signatures, where R and S are positive integers. Optionally, at least one of R and S is 1.

In a possible design, the mapping relationship between R downlink signals in the plurality of downlink signals and S combinations of a PUSCH time-frequency resource and a signature includes: the R downlink signals are selected from the plurality of downlink reference signals in increasing order of indexes; and the S combinations of a PUSCH time-frequency resource and a signature that correspond to the R downlink signals are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

According to a fifth aspect, an embodiment of this application provides a communication apparatus. The communication apparatus includes an interface circuit and a processor, and the processor and the interface circuit are coupled to each other. The processor is configured to implement the method according to any one of the first aspect or the possible designs of the first aspect by using a logic circuit or executing code instructions. The interface circuit is configured to: receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transmitter and receiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a sixth aspect, an embodiment of this application provides a communication apparatus. The communication apparatus includes an interface circuit and a processor, and the processor and the interface circuit are coupled to each other. The processor is configured to implement the method according to any one of the second aspect or the possible designs of the second aspect by using a logic circuit or executing code instructions. The interface circuit is configured to: receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transmitter and receiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a seventh aspect, an embodiment of this application provides a communication system. The communication system includes a terminal device and a network device. The terminal device may implement the method according to any one of the first aspect or the possible designs of the first aspect, and the network device may implement the method according to any one of the second aspect or the possible designs of the second aspect.

According to an eighth aspect, an embodiment of this application provides a computer-readable storage medium. The storage medium stores a computer program or instructions. When the computer program or the instructions is/are executed, the method according to any one of the first aspect or the possible designs of the first aspect, or the method according to any one of the second aspect or the possible designs of the second aspect may be implemented.

According to a ninth aspect, an embodiment of this application further provides a computer program product, including a computer program or instructions. When the computer program or the instructions is/are executed, the method according to any one of the first aspect or the possible designs of the first aspect or the method according to any one of the second aspect or the possible designs of the second aspect may be implemented.

According to a tenth aspect, an embodiment of this application further provides a chip. The chip is coupled to a memory, and is configured to read and execute a program or instructions stored in the memory, to implement the method according to any one of the first aspect or the possible designs of the first aspect, or implement the method according to any one of the second aspect or the possible designs of the second aspect.

For technical effects that can be achieved in the second aspect to the tenth aspect, refer to technical effects that can be achieved in the first aspect. Details are not described herein again.

**BRIEF DESCRIPTION OF DRAWINGS**

FIG. 1 is a schematic diagram 1 of an architecture of a communication system according to an embodiment of this application;

FIG. 2 is a schematic diagram 2 of an architecture of a communication system according to an embodiment of this application;

FIG. 3 is a schematic diagram of a NOMA framework according to an embodiment of this application;

FIG. 4 is a schematic diagram 1 of a communication method according to an embodiment of this application;

FIG. 5 is a schematic diagram of a coverage area of an SSB according to an embodiment of this application;

FIG. 6 is a schematic diagram of a terminal device located in a coverage area of an SSB according to an embodiment of this application;

FIG. 7 is a schematic diagram of a time-domain hopping pattern according to an embodiment of this application;

FIG. 8 is a schematic diagram of a frequency-domain hopping pattern at a plurality of hopping moments according to an embodiment of this application;

FIG. 9 is a schematic diagram of a code-domain resource hopping pattern in a plurality of hopping units according to an embodiment of this application;

FIG. 10 is a schematic diagram of a hopping pattern of a resource group in a plurality of hopping units according to an embodiment of this application;

FIG. 11 is a schematic diagram of association between an SSB and a signature set according to an embodiment of this application;

FIG. 12 is a schematic diagram of distribution of a preamble and a PRACH time-frequency resource according to an embodiment of this application;

FIG. 13 is a schematic diagram of distribution of a PUSCH time-frequency resource and a signature according to an embodiment of this application;

FIG. 14 is a schematic diagram of distribution of a time-frequency resource group according to an embodiment of this application;

FIG. 15 is a schematic diagram of spatial location movement of a terminal device according to an embodiment of this application;

FIG. 16 is a schematic diagram 2 of a communication method according to an embodiment of this application;

FIG. 17 is a schematic diagram 3 of a communication method according to an embodiment of this application;

FIG. 18 is a schematic diagram 4 of a communication method according to an embodiment of this application;

FIG. 19 is a schematic diagram of a change of a signature set used by a terminal device according to an embodiment of this application;

FIG. 20 is a schematic diagram of a signature determining method according to an embodiment of this application;

FIG. 21 is a schematic diagram of signature sets associated with an SSB in different coverage areas according to an embodiment of this application;

FIG. 22 is a schematic diagram 1 of a communication apparatus according to an embodiment of this application; and

FIG. 23 is a schematic diagram 2 of a communication apparatus according to an embodiment of this application.

**DESCRIPTION OF EMBODIMENTS**

The technical solutions in embodiments of this application may be used in various communication systems, for example, a long-term evolution (long-term evolution, LTE) system, a worldwide interoperability for microwave access (worldwide interoperability for microwave access, WiMAX) communication system, a 5th generation (5th generation, 5G) mobile communication system, and a new radio (new radio, NR) system. The technical solutions provided in this application may be further used in a future communication system, for example, a sixth-generation mobile communication system. Alternatively, the communication system may be a Bluetooth (Bluetooth) communication system, a wireless local area network (wireless local area network, WLAN)/wireless communication technology (Wi-Fi) communication system, a narrowband internet of things (narrowband internet of things, NB-IoT) communication system, or the like.

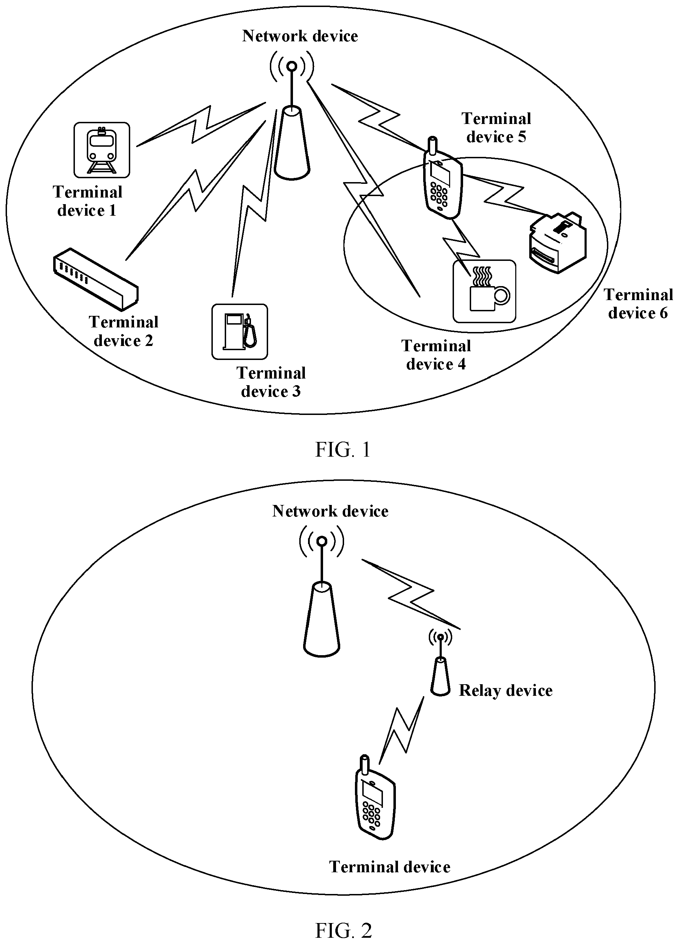

FIG. 1 is a schematic diagram of an architecture of a communication system to which an embodiment of this application is applied. As shown in FIG. 1, the communication system includes a network device and terminal devices. An example in which there is one network device and six terminal devices is used. In the communication system shown in FIG. 1, the network device may send data (or information) to the terminal devices 1 to 6, or may receive data (or information) from the terminal devices 1 to 6. The data herein may be a physical signal such as a preamble or a reference signal; physical layer control information such as downlink control information (downlink control information, DCI) and uplink control information (uplink control information, UCI); control plane (control plane, CP) data such as a radio resource control (radio resource control, RRC) message; user plane (user plane, UP) data; or other information related to a specific scenario or application, such as related data (such as gradient information, training data, and model parameters) generated by or enabling artificial intelligence (artificial intelligence, AI) or machine learning (machine learning, ML), or related data by enabling a sensing (sensing) function or generated by sensing.

In addition, the terminal devices may also form a communication system. Specifically, for example, in a smart home scenario, the terminal device 4 to the terminal device 6 may form a communication system, and the terminal device 5 may send a control instruction to the terminal device 4 and the terminal device 6. After receiving the control instruction, the terminal device 4 and the terminal device 6 perform a corresponding operation, or feed back information such as a status to the terminal device 5. For another example, in an internet of vehicles scenario, the terminal device 4 to the terminal device 6 may form a communication system, and an in-vehicle terminal device (for example, the terminal device 4) may send information to another in-vehicle terminal device (for example, the terminal device 5), or may receive information from another in-vehicle terminal device.

The communication system to which embodiments of this application are applied may be further shown in FIG. 2. In the system, data is forwarded between a network device and a terminal device by using a relay device (or referred to as a relay node). Alternatively, the relay device may be specifically a network device or a terminal device. This is not limited in this application. It should be understood that, a single-hop (single-hop) relay system is used as an example of the relay system shown in FIG. 2. In other words, there is only one relay device between the network device and the terminal device. In a specific implementation, the network device and the terminal device may further form a multi-hop (multi-hop) relay system. In other words, there may be a plurality of relay devices between the network device and the terminal device.

The network device may also be referred to as an access network (access network, AN) device or a radio access network (radio access network, RAN) device. The network device may be a base station (base station), an evolved NodeB (evolved NodeB, eNodeB), a transmission reception point (transmission reception point, TRP), an integrated access and backhaul (integrated access and backhaul, IAB) node, a next generation NodeB (next generation NodeB, gNB) in a 5th generation (5th generation, 5G) mobile communication system, a base station in a 6th generation (6th generation, 6G) mobile communication system, a base station in another future mobile communication system, an access node in a Wi-Fi system, a home base station (for example, a home evolved NodeB, or a home NodeB, HNB), an access point (access point, AP) in a wireless fidelity (wireless fidelity, Wi-Fi) system, a wireless relay node, a wireless backhaul node, and the like, or may be a module or unit that completes some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of some or all of a physical layer. For specific descriptions of the foregoing protocol layers, reference may be made to technical specifications related to the 3rd generation partnership project (3rd generation partnership project, 3GPP). The network device may also be a non-terrestrial (non-terrestrial) base station, for example, a low earth orbit (low earth orbit, LEO)/very low earth orbit (very low earth orbit, VLEO) satellite or a high-altitude platform station (high-attitude platform station, HAPS).

The terminal device may also be referred to as a terminal, user equipment (user equipment, UE), a mobile station, a mobile terminal, or the like. The terminal device may be widely used in various scenarios such as device-to-device (device-to-device, D2D) communication, vehicle-to-everything (vehicle to everything, V2X) communication, machine-type communication (machine-type communication, MTC), internet of things (internet of things, IoT), virtual reality, augmented reality, industrial control, self-driving, telemedicine, a smart grid, smart furniture, smart office, smart wearables, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, an in-vehicle terminal, an IoT terminal, a wearable device, or the like. A specific technology and a specific device form that are used by the terminal device are not limited in embodiments of this application.

The terminal device and the network device may communicate with each other by using an air interface (Uu) link, a non-terrestrial network (non-terrestrial network, NTN) communication link, or the like between the terminal device and the network device, and the terminal devices may communicate with each other by using a sidelink (sidelink, SL) such as D2D. Specifically, the terminal device may be in a connected state or an active (active) state, or may be in a non-connected state (inactive) or an idle (idle) state, or may be in another state, for example, a state in which the terminal device is not attached to a network or downlink synchronization with the network is not performed.

Communication may be performed between a network device and a terminal device, between network devices, and between terminal devices by using a licensed spectrum, or may be performed by using an unlicensed spectrum, or may be performed by using both a licensed spectrum and an unlicensed spectrum. Communication may be performed by using a spectrum below 6 GHz (gigahertz, GHz), for example, by using a 700/900 MHz (megahertz, MHz) or a 2.1/2.6/3.5 GHz frequency band, or may be performed by using a spectrum above 6 GHz, for example, by using a millimeter wave or a terahertz (terahertz, THz) wave, or may be performed by using both a spectrum below 6 GHz and a spectrum above 6 GHz. A spectrum resource used for wireless communication is not limited in embodiments of this application.

In this embodiment of this application, the function of the network device may alternatively be performed by a module (for example, a chip) in the network device, or may be performed by a control subsystem including the function of the network device. The control subsystem including the function of the network device may be a control center in the foregoing application scenarios such as a smart grid, industrial control, smart transportation, and a smart city. The function of the terminal device may alternatively be performed by a module (for example, a chip or a modem) in the terminal device, or may be performed by an apparatus including a function of the terminal device.

For ease of understanding by a person skilled in the art, the following explains and describes some terms in embodiments of this application.

(1) A synchronization signal block (synchronization signal block, SSB) may also be referred to as a synchronization signal/physical broadcast channel (physical broadcast channel, PBCH) block (synchronization signal/PBCH block, SSB). The SSB includes three parts: a primary synchronization signal (primary synchronization signal, PSS), a secondary synchronization signal (secondary synchronization signal, SSS), and a master information block (master information block, MIB). In an NR system, 4, 8, and 64 SSBs are supported. Generally, a higher frequency indicates a larger quantity of SSBs and a narrower beam of each SSB. The network device may send a plurality of SSBs through scanning. It may be understood that different SSBs may correspond to different spatial directions or beam directions, or may correspond to different spatial characteristics (for example, a quasi co-location (quasi co-location, QCL) characteristic).

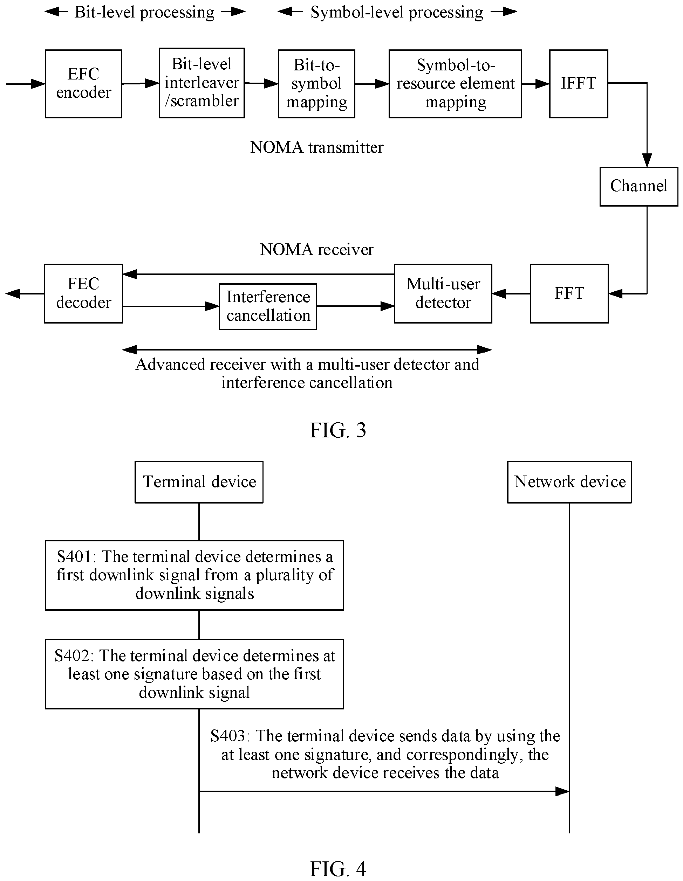

(2) NOMA framework: In an NOMA framework shown in FIG. 3, at a NOMA transmitter, after being processed by components or modules such as a forward error correction (forward error correction, EFC) encoder (encoder), a bit-level interleaver/scrambler (bit-level interleaver/scrambler), bit-to-symbol mapping (bits to symbols mapping), symbol-to-resource element (resource element, RE) mapping (symbols to REs mapping), and inverse fast Fourier transform (inverse fast Fourier transform, IFFT), data is received by a NOMA receiver through a channel (channel). The NOMA receiver has an advanced receiver with a multi-user detector and interference cancellation (advanced receiver with a multi-user detector and interference cancellation). Data is output after being processed by components or modules such as a fast Fourier transform (fast Fourier transform, FFT), a multi-user detector (multi-user detector), and an FEC decoder (decoder).

Currently, a typical NOMA technology includes sparse code multiple access (sparse code multiple access, SCMA), multi-user shared access (multi-user shared access, MUSA), resource spread multiple access (resource spread multiple access, RSMA), pattern division multiple access (pattern division multiple access, PDMA), interleave-grid multiple access (interleave-grid multiple access, IGMA), interleave-division multiple access (interleave-division multiple access, IDMA), non-orthogonal coded multiple access (non-orthogonal coded multiple access, NCMA), and the like. The technologies use a codebook, a spreading sequence, a sparse mapping sequence, and the like as signatures, and correspondingly, different bit-level processing (bit-level operation) and/or symbol-level processing (symbol-level operation) are used at the NOMA transmitter. The bit-level processing includes user-specific bit-level coding, scrambling, and interleaving (for example, IDMA uses bit-level interleaving as a signature to distinguish users). The symbol-level processing includes user-specific symbol-level spreading, modulation, scrambling, and interleaving.

The NOMA technology has a non-orthogonal characteristic, and interference between users inevitably exists at the NOMA receiver. Therefore, a key to design of a receiver at the NOMA receiver is to suppress interference between the users. The iterative design of the receiver mainly includes two parts: a multi-user detection algorithm and an iterative interference cancellation structure. The low-complexity and low-delay multi-user detection algorithm and the interference cancellation structure are of great importance for popularization of NOMA, striking a balance between performance and implementation costs.

The foregoing describes some noun concepts used in embodiments of this application. The following describes technical features of embodiments of this application.

Currently, an application solution of the NOMA technology mainly depends on that a network device groups terminal devices based on a correlation of uplink channels between accessed terminal devices, and allocates signatures in a same signature group to terminal devices in a same group. However, in this solution, the network device needs to continuously estimate the correlation of the uplink channels between the terminal devices, and when the group to which the terminal device belongs changes, the network device further re-delivers indication information to allocate a signature to the terminal device. This causes large signaling overheads and power consumption overheads to the network device and the terminal devices. Therefore, this application is intended to provide a new application solution of the NOMA technology, to avoid frequent configuration of the network device, and reduce signaling overheads and power consumption of the network device and the terminal device.

Ordinal numerals such as "first" and "second" mentioned in embodiments of this application are used to distinguish between a plurality of objects, and are not intended to limit sizes, content, a sequence, a time sequence, priorities, importance, or the like of a plurality of obj ects. For example, a first threshold and a second threshold may be a same threshold, or may be different thresholds. In addition, this type of name does not indicate that values, corresponding parameters, priorities, importance, or the like of the two thresholds are different.

In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c. Herein, a, b, and c may be singular or plural.

The following describes in detail embodiments of this application with reference to accompanying drawings.

FIG. 4 is a schematic diagram of a communication method according to an embodiment of this application. In FIG. 4, an example in which a network device and a terminal device perform steps is used to illustrate the method. However, an execution body of the method is not limited in this application. For example, the network device in FIG. 4 may alternatively be a chip, a chip system, or a processor that supports the network device in implementing the method, or may be a logic module or software that can implement all or some functions of the network device. The terminal device in FIG. 4 may alternatively be a chip, a chip system, or a processor that supports the terminal device in implementing the method, or may be a logic module or software that can implement all or some functions of the terminal device. The method includes the following steps.

S401: The terminal device determines a first downlink signal from a plurality of downlink signals. In this embodiment of this application, the downlink signal may be an SSB, a synchronization signal (synchronization signal, SS), a channel state information reference signal (channel state information reference signal, CSI-RS), a tracking reference signal (tracking reference signal, TRS), a phase tracking reference signal (phase tracking reference signal, PTRS), or the like. The plurality of reference signals may be from one network device or from a plurality of network devices. For example, the network device is a TRP, and a plurality of downlink signals are from a plurality of TRPs. Different downlink signals sent by the network device may represent different spatial directions or beam directions, or represent different spatial characteristics (for example, a QCL characteristic).

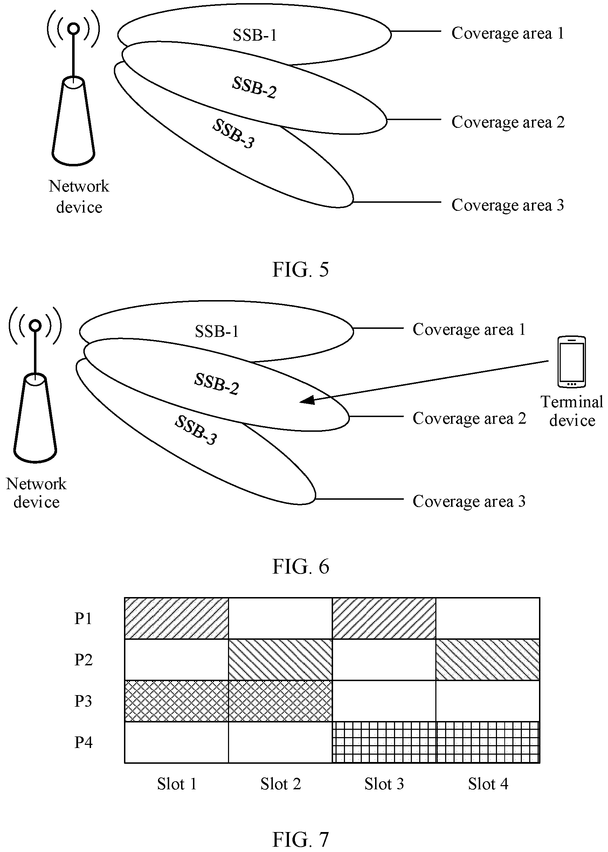

For example, the downlink signal is an SSB. As shown in FIG. 5, the network device may send a plurality of SSBs through scanning. In FIG. 5, for example, an SSB-1 to an SSB-3 are sent. Different SSBs represent different spatial directions or beam directions, and correspond to different coverage areas. For example, the SSB-1 corresponds to a coverage area 1, the SSB-2 corresponds to a coverage area 2, the SSB-3 corresponds to a coverage area 3, and the SSB-1 to the SSB-3 cover terminal devices in different areas.

Different downlink signals correspond to different coverage areas, and signal quality of a plurality of downlink signals received by terminal devices in different coverage areas is different. In some implementations, the network device may determine the selected first downlink signal based on the signal quality of the plurality of downlink signals. For example, the network device may measure signal quality of a plurality of downlink signals. Specifically, the signal quality may be one or more of a reference signal received power (reference signal received power, RSRP), reference signal received quality (reference signal received quality, RSRQ), a signal to interference plus noise ratio (signal-to-noise and interference ratio, SINR), a received signal strength indicator (received signal strength indicator, RSSI), a path loss (path loss, PL), an angle of arrival (angle of arrival, AoA) of a signal, a time difference of arrival (time difference of arrival, TDOA), and the like. When the signal quality is the RSRP, the RSRQ, the SINR, or the RSSI, a larger value of the RSRP, the RSRQ, the SINR, or the RSSI indicates higher signal quality. When the signal quality is the PL, the AoA, or the TDOA, a smaller value of the PL, the AoA, or the TDOA indicates higher signal quality.

An example in which the downlink signal is an SSB and the signal quality is a RSRP is still used. As shown in FIG. 6, the terminal device is located in coverage of the SSB-2, and a RSRP of the SSB-2 obtained through measurement is greater than a RSRP of the SSB-1 and a RSRP of the SSB-3 obtained through measurement. The terminal device may determine, from the SSB-1 to the SSB-3, that the SSB-2 is the first reference signal (or the first SSB).

In some other implementations, the terminal device may alternatively select, from a plurality of downlink signals, at least one downlink signal whose signal quality is greater than or equal to a threshold (for example, a fifth threshold) as a candidate downlink signal, and select one candidate downlink signal from the at least one candidate downlink signal as the first downlink signal.

In an example, the terminal device may randomly select one candidate downlink signal from the at least one candidate downlink signal as the first downlink signal. Alternatively, after determining the at least one candidate downlink signal, the terminal device may further send candidate downlink signal information including an identifier (such as an index) of the at least one candidate downlink signal to the network device. The network device selects one downlink signal from the at least one candidate downlink signal and indicates the downlink signal to the terminal device. The terminal device uses the downlink signal indicated by the network device as the first downlink signal. For example, the network device may determine, based on load of the at least one candidate downlink signal, one first downlink reference signal from the at least one candidate downlink signal for the terminal device, and may indicate the selected candidate downlink signal to the terminal device by using signaling such as radio resource control (radio resource control, RRC), downlink control information (downlink control information, DCI), or a medium access control-control element (medium access control-control element, MAC CE). In a manner of determining the first signal by the network device for the terminal device, a case in which the first downlink signal selected by the terminal device based on a signal quality measurement result or the like is not optimal from a perspective of an entire communication system although signal quality is good can be avoided. For example, a case in which the selected first downlink signal has good signal quality but has large load and congestion can be avoided.

S402: The terminal device determines at least one signature based on the first downlink signal.

S403: The terminal device sends data by using the at least one signature, and correspondingly, the network device receives the data.

In this embodiment of this application, a mapping relationship between a downlink signal and a signature, an association relationship between a downlink signal and a signature set, a mapping relationship between a signature and a resource corresponding to a downlink signal, and the like may be configured for the network device and the terminal device by a protocol definition, network device configuration, or the like. The terminal device may determine, based on the determined first downlink signal, the determined mapping relationship between a downlink signal and a signature, the determined association relationship between a downlink signal and a signature set, and the like, the at least one signature for sending the data.

With reference to a specific manner, the following describes in detail an implementation of how the terminal device determines the at least one signature based on the first downlink signal. For ease of description, in subsequent descriptions of this embodiment of this application, an example in which the downlink signal is an SSB is used for descriptions. It may be understood that the SSB may alternatively be another downlink signal.

Manner 1: Each of the plurality of SSBs has an associated signature set, and the terminal device determines the at least one signature in a signature set associated with the first SSB.

In this embodiment of this application, a code-domain resource, a pilot resource, a power resource, a space-domain resource, a resource hopping pattern, and the like that can be used for (or used for assisting or enhancing) multi-user detection or data receiving may be used as a signature. The signature specifically includes but is not limited to the following implementations.

(1) The signature is a code-domain resource. For example, the signature may be one or more of an SCMA codebook (codebook), an MUSA spreading sequence (spreading sequence), an RSMA spreading sequence, a PDMA pattern, an IGMA grid mapping pattern (grid mapping pattern), an NCMA sequence, a welch-bound equality (welch-bound equality, WBE) sequence, a WBE-based modified chirp (Chirp) sequence, a complex-valued sequence with a quantized element, a Grassmannian (Grassmannian) sequence, a quadrature phase shift keying (quadrature phase shift keying, QPSK) sequence, an unequal weighted sparse spreading pattern (unequal weighted sparse spreading pattern), a bit-to-symbol mapping rule, a bit-level interleaving sequence, or the like, or a generation parameter for generating the sequences (or patterns or rules), or an initial value for initializing the sequences (or patterns or rules), or the like.

Alternatively, the signature may be a Zadoff-Chu (ZC) sequence, a covered (covered)-ZC sequence, a pseudo-random noise (pseudo-random noise, PN) sequence, an M sequence, a Golden sequence, a Reed-Muller sequence, a discrete Fourier transform (discrete Fourier transform, DFT) sequence, an inverse discrete Fourier transform (inverse discrete Fourier transform, IDFT) sequence, a Hadamard (Hadamard) sequence, or the like, or may be a generation parameter for generating the sequences, or an initial value for initializing the sequences, or the like.

As shown in Table 1, an example of 32 spreading sequences (linear) with a length of 4 as signatures is used. Different spreading sequences correspond to different indexes (indexes), $c_1$, $c_2$, $c_3$, and $c_4$ respectively represent the first to the fourth elements of the spreading sequences, j is an imaginary unit, and $j*j=-1$.

**Table 1**

| Index | c1 | c2 | c3 | c4 | Index | c1 | c2 | c3 | c4 |
|-------|----|----|----|----|-------|----|----|----|----|
| 1 | 1 | 1 | 1 | 1 | 17 | 1 | 1 | 1 | -1 |

(continued)

| Index | c1 | c2 | c3 | c4 | Index | c1 | c2 | c3 | c4 |
|---|---|---|---|---|---|---|---|---|---|
| 2 | 1 | 1 | -1 | -1 | 18 | 1 | 1 | -1 | 1 |
| 3 | 1 | -1 | 1 | -1 | 19 | 1 | -1 | 1 | 1 |
| 4 | 1 | -1 | -1 | 1 | 20 | 1 | -1 | -1 | -1 |
| 5 | 1 | 1 | -j | j | 21 | 1 | 1 | -j | -j |
| 6 | 1 | 1 | j | -j | 22 | 1 | 1 | j | j |
| 7 | 1 | -1 | -j | -j | 23 | 1 | -1 | -j | j |
| 8 | 1 | -1 | j | j | 24 | 1 | -1 | j | -j |
| 9 | 1 | -j | 1 | j | 25 | 1 | -j | 1 | -j |
| 10 | 1 | -j | -1 | -j | 26 | 1 | -j | -1 | J |
| 11 | 1 | J | 1 | -j | 27 | 1 | J | 1 | J |
| 12 | 1 | J | -1 | J | 28 | 1 | J | -1 | -j |
| 13 | 1 | -j | -j | -1 | 29 | 1 | -j | -j | 1 |
| 14 | 1 | -j | j | 1 | 30 | 1 | -j | j | -1 |
| 15 | 1 | j | -j | 1 | 31 | 1 | j | -j | -1 |
| 16 | 1 | j | j | -1 | 32 | 1 | j | j | 1 |

(2) The signature is a pilot resource. For example, the signature may be a pilot port (port), a pilot sequence, a parameter for generating a pilot sequence, or an initial value for initializing a pilot sequence. The pilot includes but is not limited to a preamble (preamble), a demodulation reference signal (demodulation reference signal, DMRS), a sounding reference signal (sounding reference signal, SRS), and a reference signal having a sensing function. The pilot port includes but is not limited to a port of a reference signal such as a DMRS. The pilot sequence includes but is not limited to a ZC sequence, a covered-ZC sequence, a PN sequence, an M sequence, a Golden sequence, a Reed-Muller sequence, a DFT sequence, an IDFT sequence, a Hadamard sequence, and the like. The parameter for generating a pilot sequence includes, for example, a root (root) index of a ZC sequence, a cyclic shift (cyclic shift, CS), an initial value of a sequence, and a scrambling (scrambling) ID of a PN sequence.

(3) The signature is a power resource. For example, the signature may be a power class, a power control parameter, a power value, or the like.

(4) The signature is a space-domain resource. For example, the signature may be a parameter or a parameter value that forms a specific beam direction or space direction, such as a beamforming parameter or a precoding matrix/vector.

(5) The signature is a single resource-domain resource hopping pattern. For example, the signature may be a time-domain pattern, a hopping pattern of a frequency-domain resource/code-domain resource/pilot resource/space-domain resource/power-domain resource at a plurality of hopping moments, and a hopping pattern of a frequency-domain resource/code-domain resource/pilot resource/space-domain resource/power-domain resource in a plurality of hopping units.

The time-domain pattern may represent (or indicate) distribution of time-domain resources used by the terminal device to send data. To be specific, a plurality of time-domain resources used by the terminal device to send the data may be determined based on the time-domain pattern. Each time-domain resource may be used to send a part of data, for example, a code block (code block, CB), or may be used to send one repetition of data, for example, a redundancy version (redundancy version, RV). The time-domain pattern shown in FIG. 7 is used as an example. A pattern P1 indicates that data is sent in a slot (slot) 1 and a slot 3, a pattern P2 indicates that data is sent in a slot 2 and a slot 4, a pattern P3 indicates that data is sent in a slot 1 and a slot 2, and a pattern P4 indicates that data is sent in a slot 3 and a slot 4.

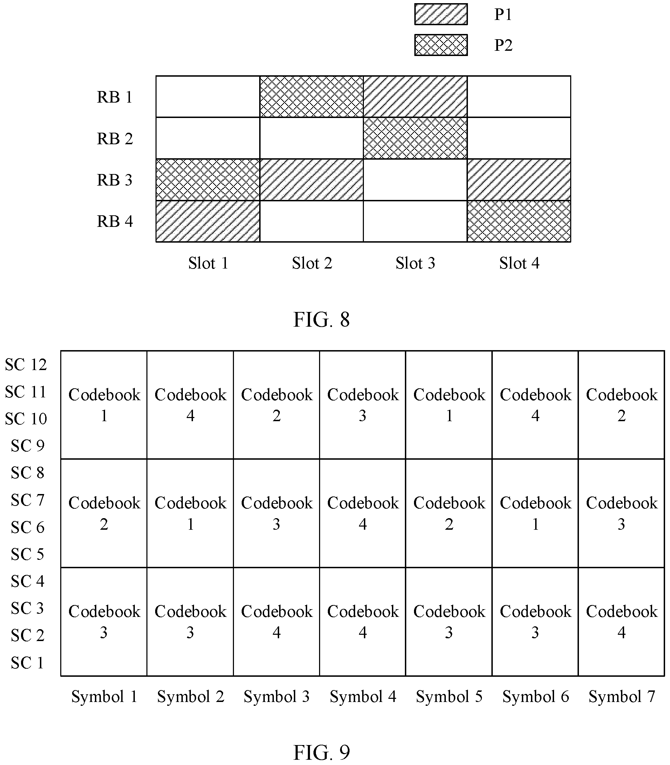

The hopping pattern of the frequency-domain resource/code-domain resource/pilot resource/space-domain resource/power-domain resource at the plurality of hopping moments may represent the frequency-domain resource/code-domain resource/pilot resource/space-domain resource/power-domain resource separately used by the terminal device at the plurality of hopping moments. In other words, the frequency-domain resource/code-domain resource/pilot resource/space-domain resource/power-domain resource separately used by the terminal device at the plurality of hopping moments may be determined based on the hopping pattern. Specifically, each hopping moment may be one or more consecutive or non-consecutive symbols/slots/mini-slots/subframes/frames/transmission occasions. The frequency-domain hopping pattern at the plurality of hopping moments shown in FIG. 8 is used as an example. Each slot is a moment, a pattern P1 indicates that data is sent in four slots by using a resource block (resource block, RB) 4, an RB 3, an RB 1 and an RB 3 respectively, and a pattern P2 indicates that data is sent in four slots by using an RB 3, an RB 1, an RB 2, and an RB 4 respectively.

The hopping pattern of the frequency-domain resource/code-domain resource/pilot resource/space-domain resource/power-domain resource in the plurality of hopping units may represent the code-domain resource/pilot resource/space-domain resource/power-domain resource separately used by the terminal device in the plurality of hopping units. In other words, the frequency-domain resource/code-domain resource/pilot resource/space-domain resource/power-domain resource separately used by the terminal device in the plurality of hopping units may be determined based on the hopping pattern. The hopping unit is defined in time-frequency (time domain and frequency domain). The time domain may be one or more consecutive or non-consecutive symbols/slots/mini-slots/subframes/frames/transmission occasions, and the like. The frequency domain may be one or more consecutive or non-consecutive subcarriers/subcarrier groups/RBs/RB groups, and the like. For example, one symbol in time domain and four consecutive subcarriers in frequency domain may form one hopping unit. A code-domain resource hopping pattern in a plurality of units shown in FIG. 9 is used as an example. A codebook 3 is used on subcarriers (subcarriers, SCs) 1 to 4 of a symbol 1, a codebook 2 is used on subcarriers 5 to 8 of the symbol 1, and a codebook 2 is used on subcarriers 9 to 12 of a symbol 7.

(6) The signature is a joint hopping pattern of multi-domain resources. For example, the signature may be a joint hopping pattern of a frequency-domain resource/code-domain resource/pilot resource/space-domain resource/power-domain resource at a plurality of hopping moments, or a hopping pattern of a frequency-domain resource/code-domain resource/pilot resource/space-domain resource/power-domain resource in a plurality of units.

The joint hopping pattern of the frequency-domain resource/code-domain resource/pilot resource/space-domain resource/power-domain resource at the plurality of hopping moments may represent a hopping pattern of a resource group including two or more types of resources such as the frequency-domain resource/code-domain resource/pilot resource/space-domain resource/power-domain resource at the plurality of hopping moments, that is, may represent a resource group used by the terminal device at each hopping moment. Each hopping moment may be one or more consecutive or non-consecutive symbols/slots/mini-slots/subframes/frames/transmission occasions. The resource group may be, for example, a two-dimensional resource group (pilot, code-domain resource) including a pilot and a code-domain resource, a two-dimensional resource group (pilot, frequency-domain resource) including a pilot and a frequency-domain resource, or a two-dimensional resource group (frequency-domain resource, code-domain resource) including a frequency-domain resource and a code-domain resource. The joint hopping pattern of multi-domain resources shown in Table 2 is used as an example, where 32 hopping patterns are included in total, the 32 hopping patterns respectively correspond to indexes (indexes) 1 to 32, T1 to T8 represent eight hopping moments, and each number represents a resource combination. For example, two pilot sequences and four frequency-domain resources have a total of 2*4=8 (pilot sequence, frequency-domain resource) combinations, and numbers 1 to 8 respectively represent combinations (1, 1), (1, 2), (1, 3), (1, 4), (2, 1), (2, 2), (2, 3), and (2, 4), where (x, y) indicates that an $x^{th}$ sequence and a $y^{th}$ frequency-domain resource are used at a corresponding hopping moment.

**Table 2**

| Index | T1 | T2 | T3 | T4 | T5 | T6 | T7 | T8 |
|---|---|---|---|---|---|---|---|---|
| 1 | 6 | 1 | 4 | 8 | 1 | 5 | 6 | 2 |
| 2 | 2 | 6 | 5 | 5 | 8 | 7 | 1 | 6 |
| 3 | 5 | 8 | 3 | 3 | 4 | 6 | 3 | 5 |
| 4 | 4 | 3 | 1 | 1 | 7 | 2 | 7 | 8 |
| 5 | 1 | 7 | 2 | 7 | 2 | 3 | 4 | 4 |
| 6 | 3 | 4 | 8 | 4 | 6 | 1 | 5 | 1 |
| 7 | 7 | 2 | 7 | 6 | 3 | 4 | 2 | 7 |
| 8 | 8 | 5 | 6 | 2 | 5 | 8 | 8 | 3 |
| 9 | 7 | 5 | 1 | 7 | 8 | 6 | 5 | 2 |
| 10 | 4 | 4 | 7 | 3 | 1 | 3 | 8 | 6 |
| 11 | 3 | 3 | 6 | 5 | 2 | 5 | 2 | 5 |
| 12 | 2 | 8 | 4 | 4 | 3 | 8 | 4 | 8 |

(continued)

| Index | T1 | T2 | T3 | T4 | T5 | T6 | T7 | T8 |
|-------|----|----|----|----|----|----|----|----|
| 13 | 8 | 2 | 8 | 8 | 4 | 7 | 7 | 4 |
| 14 | 5 | 6 | 2 | 1 | 5 | 4 | 6 | 1 |
| 15 | 6 | 7 | 5 | 2 | 7 | 1 | 3 | 7 |
| 16 | 1 | 1 | 3 | 6 | 6 | 2 | 1 | 3 |
| 17 | 6 | 3 | 8 | 3 | 8 | 4 | 4 | 3 |
| 18 | 2 | 2 | 6 | 7 | 1 | 2 | 3 | 1 |
| 19 | 5 | 5 | 7 | 8 | 2 | 1 | 1 | 8 |
| 20 | 4 | 1 | 2 | 2 | 3 | 7 | 5 | 5 |
| 21 | 1 | 4 | 1 | 5 | 4 | 8 | 6 | 7 |
| 22 | 3 | 7 | 4 | 6 | 5 | 6 | 7 | 6 |
| 23 | 7 | 6 | 3 | 4 | 7 | 5 | 8 | 4 |
| 24 | 8 | 8 | 5 | 1 | 6 | 3 | 2 | 2 |
| 25 | 2 | 5 | 8 | 6 | 7 | 3 | 6 | 5 |
| 26 | 6 | 4 | 6 | 1 | 3 | 6 | 1 | 4 |
| 27 | 1 | 3 | 7 | 4 | 5 | 7 | 3 | 2 |
| 28 | 7 | 8 | 2 | 5 | 1 | 1 | 7 | 3 |
| 29 | 5 | 2 | 1 | 2 | 6 | 5 | 4 | 6 |
| 30 | 8 | 6 | 4 | 3 | 2 | 2 | 5 | 7 |
| 31 | 4 | 7 | 3 | 8 | 8 | 8 | 2 | 1 |
| 32 | 3 | 1 | 5 | 7 | 4 | 4 | 8 | 8 |

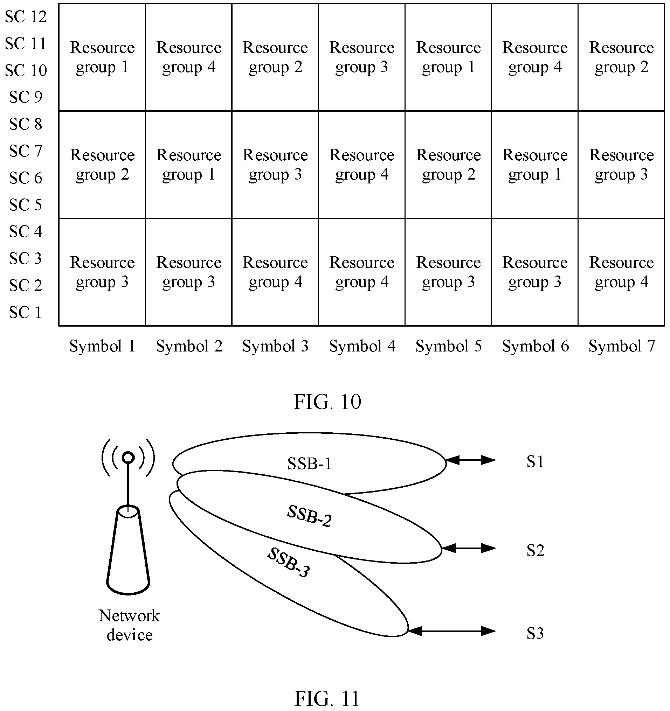

The hopping pattern of the frequency-domain resource/code-domain resource/pilot resource/space-domain resource/power-domain resource in the plurality of hopping units may represent a hopping pattern of a resource group including two or more types of resources such as the frequency-domain resource/code-domain resource/pilot resource/space-domain resource/power-domain resource in the plurality of hopping units, that is, may represent a resource group used by the terminal device in each hopping unit. The hopping unit is defined in time-frequency. The time domain may be one or more consecutive or non-consecutive symbols/slots/mini-slots/subframes/frames/transmission occasions, and the like. The frequency domain may be one or more consecutive or non-consecutive subcarriers/subcarrier groups/RBs/RB groups. For example, one symbol in time domain and four consecutive subcarriers in frequency domain may form one hopping unit. The resource group may be, for example, a two-dimensional resource group (pilot, code-domain resource) including a pilot and a code-domain resource, a two-dimensional resource group (pilot, frequency-domain resource) including a pilot and a frequency-domain resource, or a two-dimensional resource group (frequency-domain resource, code-domain resource) including a frequency-domain resource and a code-domain resource. A hopping pattern of a resource group in a plurality of hopping units shown in FIG. 10 is used as an example. A resource group 3 is used on subcarriers (SCs) 1 to 4 of a symbol 1, a resource group 2 is used on subcarriers 5 to 8 of the symbol 1, ... a resource group 2 is used on subcarriers 9 to 12 of a symbol 7.

(7) The signature is a resource group including multi-domain resources. For example, the signature may be a multi-domain resource group including two or more resources in resources such as a code-domain resource, a power-domain resource, a space-domain resource, a time-domain resource, a frequency-domain resource, a pilot resource, and a hopping pattern, for example, a two-dimensional resource group (pilot, code-domain resource) including a pilot and a code-domain resource, a two-dimensional resource group (pilot, frequency-domain resource) including a pilot and a frequency-domain resource, a two-dimensional resource group (frequency-domain resource, code-domain resource) including a frequency-domain resource and a code-domain resource, a two-dimensional resource group (pilot, hopping pattern) including a pilot and a hopping pattern, and the like. For example, a two-dimensional resource group including a pilot and a code-domain resource shown in Table 3 is used as a signature. The pilot includes 32 DMRS resources in total: eight DMRS ports (DMRS ports 1 to 8) and four DMRS sequences (seq) (DMRS sequences 1 to 4) of each port. Different DMRS ports indicate different time-frequency resources occupied by the DMRSs, or different orthogonal cover codes (orthogonal cover codes). Generally, two DMRS resources of a same port are not orthogonal, and two DMRS resources of different ports are orthogonal, or orthogonality of two DMRS resources of different ports is better than orthogonality of two DMRS resources of a same port. The 16 code-domain resources in Table 3 may be the first 16 codebooks (code) shown in Table 1. A two-dimensional resource group whose index is 1 is a combination of a DMRS port 1, a DMRS sequence 1 of the DMRS port 1, and a codebook 1, a two-dimensional resource group whose index is 2 is a combination of a DMRS port 2, a DMRS sequence 1 of the DMRS port 1, and a codebook 5, ... a two-dimensional resource group whose index is 32 is a combination of a DMRS sequence 4 of a DMRS port 8 and a codebook 16.

**Table 3**

| Index | DMRS port | DMRS sequence | Codebook |
|---|---|---|---|
| 1 | 1 | 1 | 1 |
| 2 | 2 | 1 | 5 |
| 3 | 3 | 1 | 9 |
| 4 | 4 | 1 | 13 |
| 5 | 5 | 1 | 2 |
| 6 | 6 | 1 | 6 |
| 7 | 7 | 1 | 10 |
| 8 | 8 | 1 | 14 |
| 9 | 1 | 2 | 3 |
| 10 | 2 | 2 | 7 |
| 11 | 3 | 2 | 11 |
| 12 | 4 | 2 | 15 |
| 13 | 5 | 2 | 4 |
| 14 | 6 | 2 | 8 |
| 15 | 7 | 2 | 12 |
| 16 | 8 | 2 | 16 |
| 17 | 1 | 3 | 1 |
| 18 | 2 | 3 | 5 |
| 19 | 3 | 3 | 9 |
| 20 | 4 | 3 | 13 |
| 21 | 5 | 3 | 2 |
| 22 | 6 | 3 | 6 |
| 23 | 7 | 3 | 10 |
| 24 | 8 | 3 | 14 |
| 25 | 1 | 4 | 3 |
| 26 | 2 | 4 | 7 |
| 27 | 3 | 4 | 11 |
| 28 | 4 | 4 | 15 |
| 29 | 5 | 4 | 4 |
| 30 | 6 | 4 | 8 |
| 31 | 7 | 4 | 12 |

(continued)

| Index | DMRS port | DMRS sequence | Codebook |
|-------|-----------|---------------|----------|
| 32 | 8 | 4 | 16 |

It should be understood that, the signature may be generated in advance, written into a protocol, or stored in the network device and the terminal device, and each signature has a corresponding identifier such as an ID or an index. Alternatively, the signature may be instantly generated by using a specific rule, a parameter, or a formula. When the signature is instantly generated by using a specific rule, a parameter, or a formula, the network device may configure or reconfigure, for the terminal device by using signaling such as RRC, a MAC CE, or DCI, the rule, the parameter, or the formula for generating the signature. Correspondingly, the terminal device receives the configuration information, and generates the signature. The RRC may be cell-specific RRC signaling such as broadcast (broadcast) information, system information (system information, SI), or paging information (paging information), or may be UE-specific (UE-specific) RRC signaling. The DCI may be UE-specific DCI, or may be group (group) DCI or common (common) DCI.

Signatures can be grouped based on a specific rule or method. Each signature group may include one or more signatures. A quantity of signatures in different signature groups can be the same or different. A same signature may be in a plurality of signature groups. In addition, an identifier of a signature group and an identifier of a signature in the group, such as an index, may be established. In a possible implementation, grouping may be performed based on orthogonality of signatures. According to a possible grouping rule, any two signatures in a signature group are orthogonal to each other, and different signature groups are not orthogonal, that is, at least two signatures (in different signature groups respectively) in different signature groups are not orthogonal.

The definition of orthogonality varies with a signature type. When the signature is a spreading sequence (such as a MUSA/RSMA/PDMA/NCMA sequence) or a pilot sequence, orthogonality may be defined as that an inner product of the two sequences is 0, that is, $\sum_{i=1}^{N} a_i \cdot \overline{b_i} = \sum_{i=1}^{N} b_i \cdot \overline{a_i} = 0$ , where $a_i$ and $b_i$ are respectively i$^{th}$ elements of the two sequences, N is a sequence length, and $\overline{b_i}$ represents a conjugate of $b_i$. For example, a sequence (1, 1, j, j) and a sequence (1, -1, j, j) are orthogonal to each other, and a sequence (1 1 0 0) and a sequence (0 0 1 1) are orthogonal to each other, where j is an imaginary unit, and j*j=-1. $\sum_{i=1}^{N} a_i \cdot \overline{b_i} = \sum_{i=1}^{N} b_i \cdot \overline{a_i}$ may also be defined as a correlation or non-orthogonality measure of a sequence.

The 32 spreading sequences with a length of 4 shown in Table 1 as signatures is still used as an example. As shown in Table 4, 4 signatures with indexes 1 to 4 are orthogonal and may be grouped into one signature group, similarly, 4 signatures with indexes 5 to 8 are orthogonal and may be grouped into one signature group, and similarly, 4 signatures with indexes 29 to 32 are orthogonal and may be grouped into one signature group. Different signature groups are not orthogonal.

**Table 4**

| Index | c1 | c2 | c3 | c4 | Signature group | Index | c1 | c2 | c3 | c4 | Signature group |
|-------|----|----|----|----|-----------------|-------|----|----|----|----|-----------------|
| 1 | 1 | 1 | 1 | 1 | 1 | 17 | 1 | 1 | 1 | -1 | 5 |
| 2 | 1 | 1 | -1 | -1 | | 18 | 1 | 1 | -1 | 1 | |
| 3 | 1 | -1 | 1 | -1 | | 19 | 1 | -1 | 1 | 1 | |
| 4 | 1 | -1 | -1 | 1 | | 20 | 1 | -1 | -1 | -1 | |
| 5 | 1 | 1 | -j | j | 2 | 21 | 1 | 1 | -j | -j | 6 |
| 6 | 1 | 1 | j | -j | | 22 | 1 | 1 | j | j | |
| 7 | 1 | -1 | -j | -j | | 23 | 1 | -1 | -j | j | |
| 8 | 1 | -1 | j | j | | 24 | 1 | -1 | j | -j | |
| 9 | 1 | -j | 1 | j | 3 | 25 | 1 | -j | 1 | -j | 7 |
| 10 | 1 | -j | -1 | -j | | 26 | 1 | -j | -1 | i | |
| 11 | 1 | j | 1 | -j | | 27 | 1 | j | 1 | j | |
| 12 | 1 | j | -1 | j | | 28 | 1 | j | -1 | -j | |

(continued)

| Index | c1 | c2 | c3 | c4 | Signature group | Index | c1 | c2 | c3 | c4 | Signature group |
|-------|----|----|----|----|-----------------|-------|----|----|----|----|-----------------|
| 13 | 1 | -j | -j | -1 | 4 | 29 | 1 | -j | -j | 1 | 8 |
| 14 | 1 | -j | j | 1 | | 30 | 1 | -j | j | -1 | |
| 15 | 1 | j | -j | 1 | | 31 | 1 | j | -j | -1 | |
| 16 | 1 | j | j | -1 | | 32 | 1 | j | j | 1 | |

When the signature is a sparse mapping pattern/sequence, orthogonality may be defined as that an inner product of two patterns/sequences is 0, for example, (1 1 0 0) and (0 0 11) are orthogonal, and the inner product of the two patterns/sequences may be further defined as a correlation or non-orthogonality measure of the patterns/sequences. Alternatively, orthogonality may be defined as that resources mapped to two patterns/sequences do not overlap. Alternatively, orthogonality may be defined as that a quantity of overlapping resources or a proportion of overlapping quantities of resources mapped to two patterns/sequences is a correlation or non-orthogonality measure of the patterns/sequences, or a quantity of non-overlapping resources or a proportion of non-overlapping quantities of resources mapped to two patterns/sequences is a non-correlation or orthogonality measure of the patterns/sequences.

When the signature is a hopping pattern of a single resource, orthogonality may be defined as that resources of two hopping patterns are orthogonal at any hopping moment or in any hopping unit. A quantity or proportion of hopping moments or hopping units of the two hopping pattern resources that are not orthogonal may be further defined as a correlation or non-orthogonal metric, or a quantity or proportion of hopping moments or hopping units of the two hopping pattern resources that are orthogonal may be defined as a non-correlation or orthogonal metric.

When the signature is a joint hopping pattern of multi-domain resources, orthogonality may be defined as that resources in at least one dimension of two hopping patterns is orthogonal at any hopping moment or in any hopping unit, or as that resources in all dimensions of two hopping patterns are orthogonal at any hopping moment or in any hopping unit, for example, frequency domain orthogonal, code domain orthogonal (sequence/pattern orthogonal), space domain orthogonal, or pilot orthogonal (port/time-frequency resource/sequence orthogonal). Alternatively, a hopping moment or a quantity or proportion of hopping units when two hopping patterns do not have any resource orthogonal in any dimension may be defined as a correlation or non-orthogonal metric, or a hopping moment or a quantity or proportion of hopping units when two hopping patterns have resources orthogonal in at least one dimension may be defined as a non-correlation or orthogonal metric.

The joint hopping pattern including a frequency-domain resource and a pilot resource shown in Table 2 is still used as an example of a signature. As shown in Table 5, eight patterns whose indexes are 1 to 8 may be grouped into one signature group, eight patterns whose indexes are 9 to 16 may be grouped into one signature group, eight patterns whose indexes are 17 to 24 may be grouped into one signature group, and eight patterns whose indexes are 25 to 32 may be grouped into one signature group. Signatures in a signature group are orthogonal, for example, patterns (signatures) whose indexes are 4 and 5 in a signature group 1 are orthogonal. Signatures between groups are not orthogonal, for example, a pattern (signature) whose index is 12 in a signature group 2 is not orthogonal to a pattern (signature) whose index is 20 in a signature group 3.

**Table 5**

| Index | T1 | T2 | T3 | T4 | T5 | T6 | T7 | T8 | Signature group |
|-------|----|----|----|----|----|----|----|----|-----------------|
| 1 | 6 | 1 | 4 | 8 | 1 | 5 | 6 | 2 | 1 |
| 2 | 2 | 6 | 5 | 5 | 8 | 7 | 1 | 6 | |
| 3 | 5 | 8 | 3 | 3 | 4 | 6 | 3 | 5 | |
| 4 | 4 | 3 | 1 | 1 | 7 | 2 | 7 | 8 | |
| 5 | 1 | 7 | 2 | 7 | 2 | 3 | 4 | 4 | |
| 6 | 3 | 4 | 8 | 4 | 6 | 1 | 5 | 1 | |
| 7 | 7 | 2 | 7 | 6 | 3 | 4 | 2 | 7 | |
| 8 | 8 | 5 | 6 | 2 | 5 | 8 | 8 | 3 | |

(continued)

| Index | T1 | T2 | T3 | T4 | T5 | T6 | T7 | T8 | Signature group |
|---|---|---|---|---|---|---|---|---|---|
| 9 | 7 | 5 | 1 | 7 | 8 | 6 | 5 | 2 | 2 |
| 10 | 4 | 4 | 7 | 3 | 1 | 3 | 8 | 6 | |
| 11 | 3 | 3 | 6 | 5 | 2 | 5 | 2 | 5 | |
| 12 | 2 | 8 | 4 | 4 | 3 | 8 | 4 | 8 | |
| 13 | 8 | 2 | 8 | 8 | 4 | 7 | 7 | 4 | |
| 14 | 5 | 6 | 2 | 1 | 5 | 4 | 6 | 1 | |
| 15 | 6 | 7 | 5 | 2 | 7 | 1 | 3 | 7 | |
| 16 | 1 | 1 | 3 | 6 | 6 | 2 | 1 | 3 | |
| 17 | 6 | 3 | 8 | 3 | 8 | 4 | 4 | 3 | 3 |
| 18 | 2 | 2 | 6 | 7 | 1 | 2 | 3 | 1 | |
| 19 | 5 | 5 | 7 | 8 | 2 | 1 | 1 | 8 | |
| 20 | 4 | 1 | 2 | 2 | 3 | 7 | 5 | 5 | |
| 21 | 1 | 4 | 1 | 5 | 4 | 8 | 6 | 7 | |
| 22 | 3 | 7 | 4 | 6 | 5 | 6 | 7 | 6 | |
| 23 | 7 | 6 | 3 | 4 | 7 | 5 | 8 | 4 | |
| 24 | 8 | 8 | 5 | 1 | 6 | 3 | 2 | 2 | |
| 25 | 2 | 5 | 8 | 6 | 7 | 3 | 6 | 5 | 4 |
| 26 | 6 | 4 | 6 | 1 | 3 | 6 | 1 | 4 | |
| 27 | 1 | 3 | 7 | 4 | 5 | 7 | 3 | 2 | |
| 28 | 7 | 8 | 2 | 5 | 1 | 1 | 7 | 3 | |
| 29 | 5 | 2 | 1 | 2 | 6 | 5 | 4 | 6 | |
| 30 | 8 | 6 | 4 | 3 | 2 | 2 | 5 | 7 | |
| 31 | 4 | 7 | 3 | 8 | 8 | 8 | 2 | 1 | |
| 32 | 3 | 1 | 5 | 7 | 4 | 4 | 8 | 8 | |

When the signature is a resource group including multi-domain resources, orthogonality may be defined as that resources of two resource groups in at least one dimension are orthogonal, or resources in all dimensions are orthogonal. Alternatively, a maximum value, a minimum value, or an average value of a correlation of all non-orthogonal resources in the two resource groups may be defined as a correlation or non-orthogonality measure of the two resource groups.

The two-dimensional resource group including a pilot resource and a frequency-domain resource shown in Table 3 is still used as an example of a signature. As shown in Table 6, 16 resource groups (signatures) whose indexes are 1 to 16 may be grouped into one signature group, and 16 resource groups (signatures) whose indexes are 17 to 32 may be grouped into one signature group. Signatures in the signature group are orthogonal (pilot orthogonal or code domain orthogonal), and signatures between groups are not orthogonal, for example, a DMRS port and a codebook of a resource group (signature) whose index is 5 in a signature group 1 is the same as a DMRS port and a codebook of a resource group whose index is 21 in a signature group 2, and are not orthogonal.

**Table 6**

| Index | DMRS port | DMRS sequence | Codebook | Signature group |
|-------|-----------|---------------|----------|-----------------|
| 1 | 1 | 1 | 1 | 1 |
| 2 | 2 | 1 | 5 | |
| 3 | 3 | 1 | 9 | |
| 4 | 4 | 1 | 13 | |
| 5 | 5 | 1 | 2 | |
| 6 | 6 | 1 | 6 | |
| 7 | 7 | 1 | 10 | |
| 8 | 8 | 1 | 14 | |
| 9 | 1 | 2 | 3 | |
| 10 | 2 | 2 | 7 | |
| 11 | 3 | 2 | 11 | |
| 12 | 4 | 2 | 15 | |
| 13 | 5 | 2 | 4 | |
| 14 | 6 | 2 | 8 | |
| 15 | 7 | 2 | 12 | |
| 16 | 8 | 2 | 16 | |
| 17 | 1 | 3 | 1 | 2 |
| 18 | 2 | 3 | 5 | |
| 19 | 3 | 3 | 9 | |
| 20 | 4 | 3 | 13 | |
| 21 | 5 | 3 | 2 | |
| 22 | 6 | 3 | 6 | |
| 23 | 7 | 3 | 10 | |
| 24 | 8 | 3 | 14 | |
| 25 | 1 | 4 | 3 | |
| 26 | 2 | 4 | 7 | |
| 27 | 3 | 4 | 11 | |
| 28 | 4 | 4 | 15 | |
| 29 | 5 | 4 | 4 | |
| 30 | 6 | 4 | 8 | |
| 31 | 7 | 4 | 12 | |
| 32 | 8 | 4 | 16 | |

According to another possible grouping rule, orthogonality of signatures in a signature group is better than orthogonality of signatures between signature groups. For example, a correlation in a signature group can be defined as a minimum value, a maximum value, or an average value of a correlation between any two signatures in the signature group, and a correlation between two signature groups can be defined as a minimum value, a maximum value, or an average value of a correlation between any signature in one of the two signature groups and any signature in the other group. When the correlation in a signature group is less than the correlation between signature groups, it is considered that the orthogonality of the signatures in the group is better than that of the signatures between the groups.

According to still another possible grouping rule, a correlation in a signature group is lower than a correlation threshold, a non-correlation is higher than a non-correlation threshold, a correlation between signature groups is higher than a correlation threshold, or a non-correlation is lower than a non-correlation threshold. The correlation threshold or the non-correlation threshold may be predefined, or may be indicated by the network device to the terminal device by using signaling such as RRC, a MAC CE, or DCI.

In another possible implementation, the signatures may be grouped based on indexes of the signatures. For example, signatures 1 to K are in a signature group, signatures K+1 to 2K are in a signature group, and K is an integer greater than 0. Alternatively, the signatures are grouped based on a characteristic of the signatures, for example, the signatures are grouped based on a length of a sequence.

In Manner 1, each SSB is associated with one signature set, and each signature set includes one or more signatures or one or more signature groups. Signatures or signature groups in different signature sets may be different, or may be partially the same, partially different, or completely the same. As shown in FIG. 11, because spatial directions of the SSB-1 and the SSB-3 almost do not overlap, a signature set S1 associated with the SSB-1 may be the same as a signature set S3 associated with the SSB-3. When the terminal device selects the at least one signature from the signature set associated with the first SSB, the at least one signature may be randomly selected, or may be selected according to another rule, for example, an association relationship between a terminal device ID and a signature in a signature set (for example, the last bit of the terminal device ID is used as an index of the first signature selected from the signature set), or determined based on an indication of the network device.

Optionally, to reduce mutual interference between terminal devices within coverage of a same SSB, any two signatures in the signature set are orthogonal to each other, and different signature sets may not be orthogonal, or a correlation between any two signatures in the signature set is less than a correlation threshold, or orthogonality of signatures in the signature set is better than orthogonality of signatures between signature sets. The definitions of the orthogonality of signatures in a signature set and the orthogonality of signatures between signature sets are the same as those of the orthogonality of signatures in a signature group and the orthogonality of signatures between signature groups.

In an example, any two signatures in the signature set associated with the first SSB may be orthogonal to each other, at least one signature in the signature set associated with the first SSB is not orthogonal to at least one signature in a signature set associated with a fourth SSB. The fourth SSB is one of a plurality of SSBs, and may be any one of the plurality of SSBs.

The association relationship between the SSB and the signature set may be configured by the network device, or may be determined by the terminal device according to a predefined rule or the like.

In an example, the network device may deliver configuration information by using signaling such as RRC, a MAC CE, or DCI, to configure or reconfigure a signature set (for example, one or more signature groups included in the signature set) associated with the SSB. For example, a type, an index, or the like of a signature or a signature group in a signature set associated with an SSB is configured. Alternatively, the terminal device may determine, by default, a quantity X of signatures or signature groups in a signature set associated with each SSB, and determine, based on X and a default association sequence of the signatures or the signature groups, X signatures or signature groups associated with each SSB. For example, an $S^{th}$ SSB is associated with a signature or signature group whose index is $(S*X+1)$-$(S+1)*X$. The RRC signaling may be cell-specific RRC signaling such as broadcast information, system information, or paging information, or may be UE-specific RRC signaling. The DCI may be UE-specific DCI, or may be group DCI or common DCI.

Manner 2: There is a mapping relationship between a plurality of SSBs and a plurality of resources, and there is a mapping relationship between a plurality of resources and a plurality of signatures. The terminal device determines, based on the first SSB, the first resource from the plurality of resources, and determines, based on the first resource, the at least one signature from the plurality of signatures. The resources may be a preamble and a PRACH time-frequency resource for sending the preamble, where the PRACH time-frequency resource may also be referred to as a PRACH occasion (occasion).

Specifically, the terminal device may select, based on a mapping relationship (or an association relationship) between a plurality of SSBs and a PRACH time-frequency resource and a preamble, a preamble and a PRACH time-frequency resource for sending the preamble from the PRACH time-frequency resource and the preamble that are associated with the first SSB, as the first resource.

In a possible implementation, the mapping relationship between a plurality of SSBs and a PRACH time-frequency resource and a preamble may be as follows: The plurality of SSBs are mapped to the PRACH time-frequency resource first in increasing order of preamble indexes on the PRACH time-frequency resource, then in increasing order of frequency-domain resource indexes of a plurality of frequency multiplexed PRACH time-frequency resources, thirdly in increasing order of time-domain resource indexes of a plurality of time multiplexed PRACH time-frequency resources, and fourthly in increasing order of PRACH slot indexes. It should be understood that, a selection order of the preamble, the frequency-domain resource of the plurality of frequency multiplexed PRACH time-frequency resources, the time-domain resource of the plurality of time multiplexed PRACH time-frequency resources, and the PRACH in the foregoing sequence may be further randomly combined.

The mapping relationship between a plurality of resources (a preamble and a PRACH time-frequency resource for sending the preamble) and a plurality of signatures may include: a mapping relationship (a mapping relationship 2A) between N preambles on the PRACH time-frequency resource and M combinations of a physical uplink shared channel (physical Uplink shared channel) PUSCH time-frequency resource, a pilot resource, and a signature; a mapping relationship (a mapping relationship 2B) between N preambles on the PRACH time-frequency resource and M combinations of a PUSCH time-frequency resource and a signature; a mapping relationship (a mapping relationship 2C) between N preambles on the PRACH time-frequency resource and M combinations of a pilot resource and a signature; or a mapping relationship (a mapping relationship 2D) between N preambles on the PRACH time-frequency resource and M signatures.

The mapping relationship 2A may be:

the N preambles (for example, N consecutive preambles on a PRACH occasion in one PRACH slot) may be first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and

the M combinations of a PUSCH time-frequency resource, a pilot resource, and a signature that are mapped to the N preambles may be first selected in increasing order of frequency-domain resource indexes of frequency multiplexed PUSCH time-frequency resources, then in increasing order of signature indexes, thirdly in increasing order of pilot resource indexes, and fourthly in increasing order of time-domain resource indexes of time multiplexed PUSCH time-frequency resources.

When the signature index increases, if there are a plurality of signature groups (the signature group may be determined based on a division manner of the signature group in Manner 1), the signature index may be determined in increasing order of indexes in a signature group and then in increasing order of indexes between signature groups, or first in increasing order of group indexes and then in increasing order of indexes in a signature group. The pilot resource index may be determined in increasing order of pilot port indexes and then in increasing order of pilot sequences. The time-domain resource index of a time multiplexed PUSCH time-frequency resource may be determined in increasing order of time-domain resource indexes of PUSCH time-frequency resources in a PUSCH slot and then in increasing order of PUSCH slot indexes.

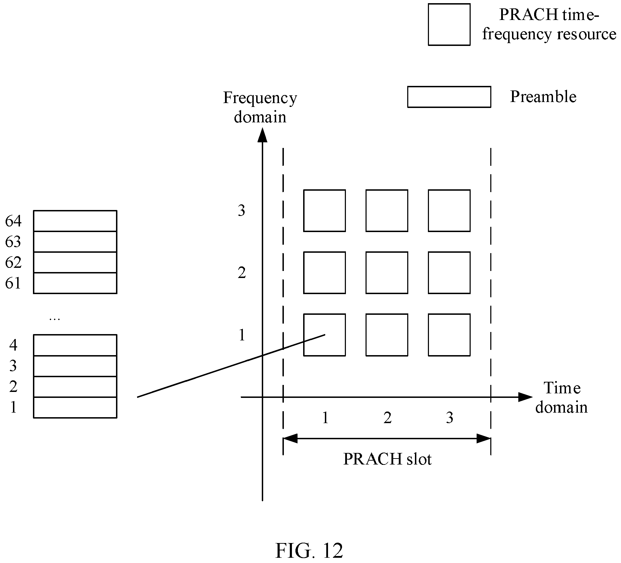

In an example, as shown in FIG. 12, for example, there are 64 preambles (whose indexes are 1 to 64) on one PRACH time-frequency resource, there are three frequency multiplexed PRACH time-frequency resources (whose frequency-domain resource indexes are 1 to 3) and three time multiplexed PRACH time-frequency resources (whose time-domain resource indexes are 1 to 3) in one PRACH slot, and N is 8. A selection sequence of the N preambles is: first (that is, for the first time) selecting eight preambles whose indexes are 1 to 8 on a PRACH time-frequency resource whose time-domain resource index is 1 and frequency-domain index is 1, then (for the second time) selecting eight preambles whose indexes are 9 to 16 on a PRACH time-frequency resource whose time-domain resource index is 1 and frequency-domain index is 1, and selecting (for the ninth time) eight preambles whose indexes are 1 to 8 on a PRACH time-frequency resource whose time-domain resource index is 1 and frequency-domain index is 2, and so on.

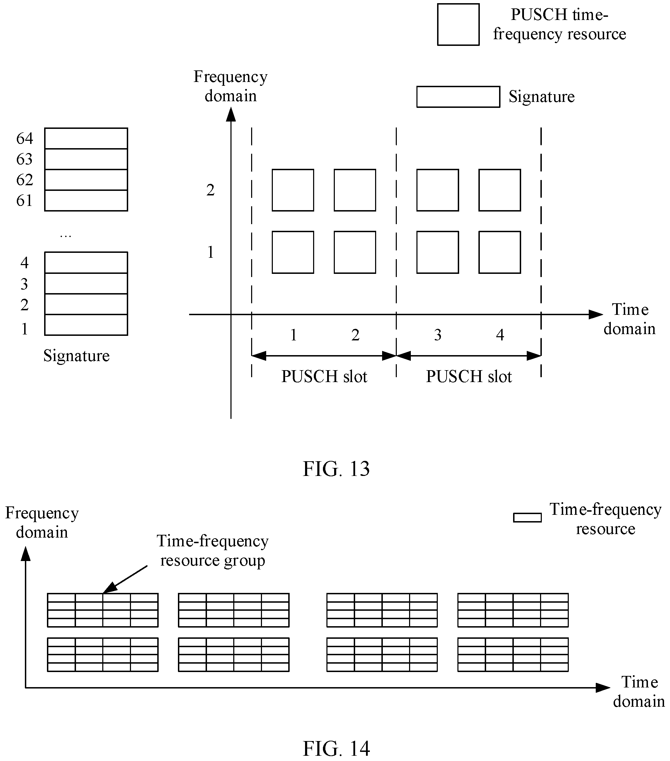

As shown in FIG. 13, for example, there are 64 signatures (whose indexes are 1 to 64), there are two PUSCH slots in time domain, there are two time multiplexed PUSCH time-frequency resources in each slot, time-domain resource indexes of four time multiplexed PUSCH time-frequency resources in the two slots are (1 to 4), there are two PUSCH slots (whose frequency-domain resource indexes are 1 to 2) in frequency domain, there are eight pilot resources (whose indexes are 1 to 8), and M is 1. The combination of a PUSCH time-frequency resource, a pilot resource, and a signature that are mapped to the eight preambles selected for the first time in FIG. 12 is a PUSCH time-frequency resource whose time-domain resource index is 1 and frequency-domain resource index is 1, a signature whose index is 1, and a pilot resource whose index is 1; the combination of a PUSCH time-frequency resource, a pilot resource, and a signature that are mapped to the eight preambles selected for the second time in FIG. 12 is a PUSCH time-frequency resource whose time-domain resource index is 1 and whose frequency-domain resource index is 2, a signature whose index is 1, and a pilot resource whose index is 1; the combination of a PUSCH time-frequency resource, a pilot resource, and a signature that are mapped to the eight preambles selected for the third time in FIG. 12 is a PUSCH time-frequency resource whose time-domain resource index is 1 and frequency-domain resource index is 1, a signature whose index is 2, and a pilot resource whose index is 1, and so on.

It should be understood that, a selection order of the preamble, the frequency multiplexed PRACH time-frequency resource, and the time multiplexed PRACH time-frequency resource in the foregoing selection order may be randomly combined, or a selection order of the signature, the frequency multiplexed PUSCH time-frequency resource, the pilot port, the pilot sequence, and the time multiplexed PUSCH time-frequency resource in the foregoing selection order may be randomly combined. When there is a signature group, a selection order of the signature in the signature group, the signature group, the frequency multiplexed PUSCH time-frequency resource, the pilot port, the pilot sequence, and the time multiplexed PUSCH time-frequency resource in the foregoing sequence may be further randomly combined.

It should be further understood that, when there are no plurality of frequency multiplexed PUSCH time-frequency resources, no plurality of time multiplexed PUSCH resources, no plurality of signature groups, no plurality of signatures, no plurality of pilot ports, or no plurality of pilot sequences, optionally, the mapping relationship may not include selection of the frequency multiplexed PUSCH time-frequency resources, the time multiplexed PUSCH time-frequency resources, the signature groups, the signatures, the pilot ports, or the pilot sequences.

The foregoing association relationship 2A is applicable to a case in which the signature is a code-domain resource or a code-domain resource hopping pattern, a space-domain resource or a space-domain resource hopping pattern, a frequency-domain resource hopping pattern, a time-domain pattern, or the like. One or more code-domain resources or space-domain resources used for sending the data on the PUSCH time-frequency resource may be determined based on the determined signature index.

In the association relationship 2A, the terminal device needs to determine one or more of the PUSCH time-frequency resource, the pilot resource, the signature, and the like that participate in mapping. The one or more of the PUSCH time-frequency resource, the pilot resource, the signature, and the like may be determined in a pre-agreed manner, or may be configured or reconfigured by the network device by using signaling such as RRC, a MAC CE, or DCI. The RRC signaling may be cell-specific RRC signaling such as broadcast information, system information, or paging information, or may be UE-specific RRC signaling. The DCI may be UE-specific DCI, or may be group DCI or common DCI.

The mapping relationship 2B may be:

the N preambles (for example, N consecutive preambles on a PRACH occasion in one PRACH slot) may be first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and

the M combinations of a PUSCH time-frequency resource and a signature that are mapped to the N preambles may be first selected in increasing order of frequency-domain resource indexes of a plurality of frequency multiplexed PUSCH time-frequency resources, then in increasing order of signature indexes, and thirdly in increasing order of time-domain resource indexes of a plurality of time multiplexed PUSCH time-frequency resources.

When the signature index increases, if there are a plurality of signature groups (the signature group may be determined based on a division manner of the signature group in Manner 1), the signature index may be determined in increasing order of indexes in a signature group and then in increasing order of indexes between signature groups, or first in increasing order of group indexes (indexes between signature groups) and then in increasing order of indexes in a signature group. The time-domain resource index of a time multiplexed PUSCH time-frequency resource may be determined in increasing order of time-domain resource indexes of PUSCH time-frequency resources in a PUSCH slot and then in increasing order of PUSCH slot indexes.

It should be understood that, a selection order of the preamble, the frequency multiplexed PRACH time-frequency resource, and the time multiplexed PRACH time-frequency resource in the foregoing selection order may be randomly combined, or a selection order of the signature, the frequency multiplexed PUSCH time-frequency resource, and the time multiplexed PUSCH time-frequency resource in the foregoing selection order may be randomly combined. When there is a signature group, a selection order of the signature in the signature group, the signature group, the frequency multiplexed PUSCH time-frequency resource, and the time multiplexed PUSCH time-frequency resource in the foregoing sequence may be further randomly combined.

It should be further understood that, when there are no plurality of frequency multiplexed PUSCH time-frequency resources, no plurality of time multiplexed PUSCH resources, no plurality of signature groups, or no plurality of signatures, optionally, the mapping relationship may not include selection of the frequency multiplexed PUSCH time-frequency resources, the time multiplexed PUSCH time-frequency resources, the signature groups, or the signatures.

The foregoing association relationship 2B may be applicable to a case in which the signature is a frequency-domain resource hopping pattern, a hopping pattern of a resource group including a frequency-domain resource, a code-domain resource, a code-domain resource hopping pattern, a space-domain resource, a space-domain resource hopping pattern, or a time-domain pattern. One or more code-domain resources, frequency-domain resources, or space-domain resources used for sending the data on the PUSCH time-frequency resource may be determined based on the determined signature index.

In the association relationship 2A, the terminal device needs to determine one or more of the PUSCH time-frequency resource, the signature, and the like that participate in mapping. The one or more of the PUSCH time-frequency resource, the signature, and the like may be determined in a pre-agreed manner, or may be configured or reconfigured by the network device by using signaling such as RRC, a MAC CE, or DCI. The RRC signaling may be cell-specific RRC signaling such as broadcast information, system information, or paging information, or may be UE-specific RRC signaling.

The DCI may be UE-specific DCI, or may be group DCI or common DCI.

The mapping relationship 2C may be:

the N preambles (for example, N consecutive preambles on a PRACH occasion in one PRACH slot) may be first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and

the M combinations of a pilot resource and a signature that are mapped to the N preambles may be first selected in increasing order of frequency-domain resource indexes of a plurality of frequency multiplexed time-frequency resource groups if there are a plurality of frequency multiplexed time-frequency resource groups, then in increasing order of signature indexes, thirdly in increasing order of pilot resource indexes, and fourthly in increasing order of time-domain resource indexes of a plurality of time multiplexed time-frequency resource groups if there are a plurality of time multiplexed time-frequency resource groups.

As shown in FIG. 14, the time-frequency resource group includes a plurality of time-frequency resources, and each time-frequency resource may be used for one repetition of data transmission, for example, one PUSCH occasion, or may be used for a plurality of repetitions of data transmission, or each time-frequency resource may be used for transmission of a part of data. The plurality of time-frequency resources in the time-frequency resource group may be consecutive or inconsecutive in time domain, or consecutive or inconsecutive in frequency domain. The time-frequency resource groups may be consecutive or inconsecutive in time domain, or consecutive or inconsecutive in frequency domain.

When the signature index increases, if there are a plurality of signature groups (the signature group may be determined based on a division manner of the signature group in Manner 1), the signature index may be determined in increasing order of indexes in a signature group and then in increasing order of indexes between signature groups, or first in increasing order of group indexes and then in increasing order of indexes in a signature group. The pilot resource index may be determined in increasing order of pilot port indexes and then in increasing order of pilot sequences.

It should be understood that, a selection order of the preamble, the frequency multiplexed PRACH time-frequency resource, and the time multiplexed PRACH time-frequency resource in the foregoing selection order may be randomly combined, or a selection order of the plurality of frequency multiplexed time-frequency resource groups, the signature, the pilot port, the pilot sequences, and the plurality of time multiplexed time-frequency resource groups may be randomly combined. When there is a signature group, a selection order of the plurality of frequency multiplexed time-frequency resource groups, the signature in the signature group, the signature group, the pilot port, the pilot sequence, and the plurality of time multiplexed time-frequency resource groups in the foregoing sequence may be further randomly combined.

It should be further understood that, when there are no plurality of frequency multiplexed PUSCH time-frequency resource groups, no plurality of time multiplexed PUSCH resource groups, no plurality of signature groups, no plurality of signatures, no plurality of pilot ports, or no plurality of pilot sequences, optionally, the mapping relationship may not include selection of the frequency multiplexed PUSCH time-frequency resource groups, the time multiplexed PUSCH time-frequency resource groups, the signature groups, the signatures, the pilot ports, or the pilot sequences.

The association relationship 2C is applicable to a case in which the signature is a frequency-domain resource hopping pattern, or a hopping pattern of a resource group including a frequency-domain resource. The terminal device may determine, based on the determined signature index, one or more frequency-domain resources (for example, a frequency-domain resource of a PUSCH time-frequency resource) used for sending data. For example, the signature is a frequency-domain hopping pattern, and the terminal device may determine, in one time-frequency resource group based on the frequency-domain hopping pattern, a frequency-domain resource used at each hopping moment.

The association relationship 2C is further applicable to a case in which the signature is a time-domain pattern. The terminal device may determine, based on the determined signature index, one or more time-domain resources used for sending data.

In the association relationship 2C, the terminal device needs to determine one or more of a time-frequency resource, such as the PUSCH time-frequency resource or the time-frequency resource group, the pilot resource, the signature, and the like that participate in mapping. The one or more of the time-frequency resource, the pilot resource, the signature, and the like may be determined in a pre-agreed manner, or may be configured or reconfigured by the network device by using signaling such as RRC, a MAC CE, or DCI. The RRC signaling may be cell-specific RRC signaling such as broadcast information, system information, or paging information, or may be UE-specific RRC signaling. The DCI may be UE-specific DCI, or may be group DCI or common DCI.

The mapping relationship 2D may be:

the N preambles (for example, N consecutive preambles on a PRACH occasion in one PRACH slot) may be first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and

the M signatures mapped to the N preambles may be first selected in increasing order of frequency-domain resource indexes of a plurality of frequency multiplexed time-frequency resource groups if there are a plurality of frequency multiplexed time-frequency resource groups, then in increasing order of signature indexes, and thirdly in increasing order of time-domain resource indexes of a plurality of time multiplexed time-frequency resource groups if there are a plurality of time multiplexed time-frequency resource groups.

For descriptions of the time-frequency resource group, refer to the descriptions of the time-frequency resource group in the mapping relationship 2C. Details are not described again. When the signature index increases, if there are a plurality of signature groups (the signature group may be determined based on a division manner of the signature group in Manner 1), the signature index may be determined in increasing order of indexes in a signature group and then in increasing order of indexes between signature groups, or first in increasing order of group indexes and then in increasing order of indexes in a signature group.

It should be understood that, a selection order of the preamble, the frequency multiplexed PRACH time-frequency resource, and the time multiplexed PRACH time-frequency resource in the foregoing selection order may be randomly combined, or a selection order of the plurality of frequency multiplexed time-frequency resource groups, the signature, and the plurality of time multiplexed time-frequency resource groups may be randomly combined. When there is a signature group, a selection order of the plurality of frequency multiplexed time-frequency resource groups, the signature in the signature group, the signature group, and the plurality of time multiplexed time-frequency resource groups in the foregoing sequence may be further randomly combined.

It should be further understood that, when there are no plurality of frequency multiplexed PUSCH time-frequency resource groups, no plurality of time multiplexed PUSCH resource groups, no plurality of signature groups, or no plurality of signatures, optionally, the mapping relationship may not include selection of the frequency multiplexed PUSCH time-frequency resource groups, the time multiplexed PUSCH time-frequency resource groups, the signature groups, or the signatures.

The association relationship 2D is applicable to a case in which the signature is a frequency-domain resource hopping pattern, or a hopping pattern of a resource group including a frequency-domain resource. The terminal device may determine, based on the determined signature index, one or more frequency-domain resources (for example, a frequency-domain resource of a PUSCH time-frequency resource) used for sending data. For example, the signature is a frequency-domain hopping pattern, and the terminal device may determine, in one time-frequency resource group based on the frequency-domain hopping pattern, a frequency-domain resource used at each hopping moment.

The association relationship 2D is further applicable to a case in which, for example, the signature includes a pilot resource and a frequency-domain resource. For example, the signature is a two-dimensional resource group including a pilot resource and a frequency-domain resource or a hopping pattern of a resource group, or a multi-dimensional resource group including a pilot resource, a frequency-domain resource, and another resource such as a code-domain resource or a space-domain resource or a hopping pattern of a resource group. The association relationship 2D is further applicable to a case in which the signature is a time-domain pattern. The terminal device may determine, based on the determined signature index, one or more time-domain resources used for sending data.

In some implementations, when a pilot resource included in the signature is a pilot port, the terminal device further needs to determine the pilot sequence. In an example, there is an association relationship between a signature or a signature group and a pilot sequence, and the terminal device may determine a used pilot sequence based on the signature or the signature group.

In another example, the pilot sequence may alternatively be used as an independent resource to participate in mapping in increasing order of indexes. For example, N consecutive preambles on a PRACH time-frequency resource in a PRACH slot are mapped to M signatures and associated pilot sequences. The M signatures and the associated pilot sequences are selected in the following order: first selecting in increasing order of frequency-domain resource indexes of a plurality of frequency multiplexed time-frequency resource groups if there are a plurality of frequency multiplexed time-frequency resource groups, then in increasing order of signature indexes, thirdly in increasing order of pilot sequence indexes, and fourthly in increasing order of time-domain resource indexes of a plurality of time multiplexed time-frequency resource groups if there are a plurality of time multiplexed time-frequency resource groups.

It should be understood that, a selection order of the plurality of frequency multiplexed time-frequency resource groups, the signature, the pilot sequence, and the plurality of time multiplexed time-frequency resource groups in the foregoing sequence may be further randomly combined. When there is a signature group, a selection order of the plurality of frequency multiplexed time-frequency resource groups, the signature in the signature group, the signature group, the pilot sequence, and the plurality of time multiplexed time-frequency resource groups in the foregoing sequence may be further randomly combined.

It should be further understood that, when there are no plurality of frequency multiplexed PUSCH time-frequency resource groups, no plurality of time multiplexed PUSCH resource groups, no plurality of signature groups, no plurality of signatures, no plurality of pilot ports, or no plurality of pilot sequences, optionally, the mapping relationship may not include selection of the frequency multiplexed PUSCH time-frequency resource groups, the time multiplexed PUSCH time-frequency resource groups, the signature groups, the signatures, the pilot ports, or the pilot sequences. In some implementations, the signature may alternatively be a frequency-domain resource hopping pattern, or a hopping pattern of a resource group including a frequency-domain resource. The terminal device may further determine, based on the determined signature index, one or more frequency-domain resources (for example, a frequency-domain resource of a PUSCH time-frequency resource) used for sending data. For example, the signature is a frequency-domain hopping pattern, and the terminal device may determine, in one time-frequency resource group based on the pattern, a frequency-domain resource used at each hopping moment.

In the association relationship 2D, the terminal device needs to determine one or more of a time-frequency resource, such as the PUSCH time-frequency resource or the time-frequency resource group, the pilot resource, the pilot sequence, the signature, and the like that participate in mapping. The one or more of the time-frequency resource, the pilot resource, the pilot sequence, the signature, and the like may be determined in a pre-agreed manner, or may be configured or reconfigured by the network device by using signaling such as RRC, a MAC CE, or DCI. The RRC signaling may be cell-specific RRC signaling such as broadcast information, system information, or paging information, or may be UE-specific RRC signaling. The DCI may be UE-specific DCI, or may be group DCI or common DCI.

It should be understood that, M and N in the association relationships 2A to 2D are positive integers. In some implementations, at least one of N and M is 1. For example, when N is an integer greater than or equal to 1, M=1; or when N=1, M is an integer greater than 1. Alternatively, in some implementations, N may be $2^X$, and X may be 0, 1, 2, or the like.

In the foregoing association relationships 2A to 2D, when signatures are not grouped, optionally, the sequence of the signature indexes meets the following requirement: a sequence of K signature indexes orthogonal to each other or with good orthogonality (for example, a correlation is lower than a correlation threshold) are consecutive. For example, in the signatures, K signatures whose indexes are from n+1 to n+K are orthogonal or the correlation is lower than the correlation threshold.

In Manner 2, the terminal device may determine the to-be-used signature during random access. Generally, consecutive preambles are mapped to a same SSB. When signatures are grouped based on orthogonality or a correlation, or signatures are not grouped but are sorted based on the consecutive sequence of K signature indexes orthogonal to each other or with good orthogonality (for example, a correlation is lower than a correlation threshold), the same SSB can be associated with signatures orthogonal to each other or with good orthogonality. This helps improve access and data transmission performance.

Manner 3: There is a mapping relationship between a plurality of SSBs and a plurality of signatures, and the at least one signature determined by the terminal device based on the first SSB is a signature that is in the plurality of signatures and that is mapped to the first SSB. In other words, the terminal device may determine the at least one signature based on the first SSB and the mapping relationship between a plurality of SSBs and a plurality of signatures.

The mapping relationship between a plurality of SSBs and a plurality of signatures may include: a mapping relationship (a mapping relationship 3A) between R SSBs in the plurality of SSBs and S combinations of a PUSCH time-frequency resource, a pilot resource, and a signature; a mapping relationship (a mapping relationship 3B) between R SSBs in the plurality of SSBs and S combinations of a PUSCH time-frequency resource and a signature; a mapping relationship (a mapping relationship 3C) between R SSBs in the plurality of SSBs and S combinations of a pilot resource and a signature; or a mapping relationship (a mapping relationship 3D) between R SSBs in a plurality of SSBs and S signatures, where R and S are positive integers.

The mapping relationship 3A may be:

the R SSBs are selected from the plurality of SSBs in increasing order of indexes of the SSBs, and S combinations of a PUSCH time-frequency resource, a pilot resource, and a signature that are mapped to the R SSBs may be first selected in increasing order of frequency-domain resource indexes of frequency multiplexed PUSCH time-frequency resources if there are frequency multiplexed PUSCH time-frequency resources, then in increasing order of signature indexes, thirdly in increasing order of pilot resource indexes, and fourthly in increasing order of time-domain resource indexes of time multiplexed PUSCH time-frequency resources if there are time multiplexed PUSCH time-frequency resources.

When the signature index increases, if there are a plurality of signature groups (the signature group may be determined based on a division manner of the signature group in Manner 1), the signature index may be determined in increasing order of indexes in a signature group and then in increasing order of indexes between signature groups, or first in increasing order of group indexes and then in increasing order of indexes in a signature group. The pilot resource index may be determined in increasing order of pilot port indexes and then in increasing order of pilot sequences. The time-domain resource index of a time multiplexed PUSCH time-frequency resource may be determined in increasing order of time-domain resource indexes of PUSCH time-frequency resources in a PUSCH slot and then in increasing order of PUSCH slot indexes.

It should be understood that, a selection order of the signature, the frequency multiplexed PUSCH time-frequency resource, the pilot port, the pilot sequence, and the time multiplexed PUSCH time-frequency resource in the foregoing sequence may be further randomly combined. When there is a signature group, a selection order of the signature in the signature group, the signature group, the frequency multiplexed PUSCH time-frequency resource, the pilot port, the pilot sequence, and the time multiplexed PUSCH time-frequency resource in the foregoing sequence may be further randomly combined.

It should be further understood that, when there are no plurality of frequency multiplexed PUSCH time-frequency resources, no plurality of time multiplexed PUSCH resources, no plurality of signature groups, no plurality of signatures, no plurality of pilot ports, or no plurality of pilot sequences, optionally, the mapping relationship may not include selection of the frequency multiplexed PUSCH time-frequency resources, the time multiplexed PUSCH time-frequency resources, the signature groups, the signatures, the pilot ports, or the pilot sequences.

The foregoing association relationship 3A is applicable to a case in which the signature is a code-domain resource or a code-domain resource hopping pattern, a space-domain resource or a space-domain resource hopping pattern, a frequency-domain resource hopping pattern, a time-domain pattern, or the like. One or more code-domain resources or space-domain resources used for sending the data on the PUSCH time-frequency resource may be determined based on the determined signature index.

In the association relationship 3A, the terminal device needs to determine one or more of the PUSCH time-frequency resource, the pilot resource, the signature, and the like that participate in mapping. The one or more of the PUSCH time-frequency resource, the pilot resource, the signature, and the like may be determined in a pre-agreed manner, or may be configured or reconfigured by the network device by using signaling such as RRC, a MAC CE, or DCI. The RRC signaling may be cell-specific RRC signaling such as broadcast information, system information, or paging information, or may be UE-specific RRC signaling. The DCI may be UE-specific DCI, or may be group DCI or common DCI.

The mapping relationship 3B may be:

the R SSBs are selected from the plurality of SSBs in increasing order of indexes of the SSBs, and S combinations of a PUSCH time-frequency resource and a signature that are mapped to the R SSBs may be first selected in increasing order of frequency-domain resource indexes of the plurality of frequency multiplexed PUSCH time-frequency resources if there are a plurality of frequency multiplexed PUSCH time-frequency resources, then in increasing order of signature indexes, and thirdly in increasing order of time-domain resource indexes of the plurality of time multiplexed PUSCH time-frequency resources if there are a plurality of time multiplexed PUSCH time-frequency resources.

When the signature index increases, if there are a plurality of signature groups (the signature group may be determined based on a division manner of the signature group in Manner 1), the signature index may be determined in increasing order of indexes in a signature group and then in increasing order of indexes between signature groups, or first in increasing order of group indexes and then in increasing order of indexes in a signature group. The time-domain resource index of a time multiplexed PUSCH time-frequency resource may be determined in increasing order of time-domain resource indexes of PUSCH time-frequency resources in a PUSCH slot and then in increasing order of PUSCH slot indexes.

It should be understood that, a selection order of the signature, the frequency multiplexed PUSCH time-frequency resource, and the time multiplexed PUSCH time-frequency resource in the foregoing sequence may be further randomly combined. When there is a signature group, a selection order of the signature in the signature group, the signature group, the frequency multiplexed PUSCH time-frequency resource, and the time multiplexed PUSCH time-frequency resource in the foregoing sequence may be further randomly combined.

It should be further understood that, when there are no plurality of frequency multiplexed PUSCH time-frequency resources, no plurality of time multiplexed PUSCH resources, no plurality of signature groups, or no plurality of signatures, optionally, the mapping relationship may not include selection of the frequency multiplexed PUSCH time-frequency resources, the time multiplexed PUSCH time-frequency resources, the signature groups, or the signatures.

The foregoing association relationship 3B may be applicable to a case in which the signature is a frequency-domain resource hopping pattern, a hopping pattern of a resource group including a frequency-domain resource, a code-domain resource, a code-domain resource hopping pattern, a space-domain resource, or a space-domain resource hopping pattern. One or more code-domain resources, frequency-domain resources, or space-domain resources used for sending the data on the PUSCH time-frequency resource may be determined based on the determined signature index. The association relationship 3B is further applicable to a case in which the signature is a time-domain pattern. The terminal device may determine, based on the determined signature index, one or more time-domain resources used for sending data.

In some implementations, the association relationship 3B may be further applicable to a case in which the signature is a two-dimensional or multi-dimensional resource group including a pilot resource, a code-domain resource,

or a space-domain resource or a hopping pattern of a resource group.

In the association relationship 3B, the terminal device needs to determine one or more of the PUSCH time-frequency resource, the signature, and the like that participate in mapping. The one or more of the PUSCH time-frequency resource, the signature, and the like may be determined in a pre-agreed manner, or may be configured or reconfigured by the network device by using signaling such as RRC, a MAC CE, or DCI. The RRC signaling may be cell-specific RRC signaling such as broadcast information, system information, or paging information, or may be UE-specific RRC signaling. The DCI may be UE-specific DCI, or may be group DCI or common DCI.

The mapping relationship 3C may be:

the R SSBs are selected from the plurality of SSBs in increasing order of indexes of the SSBs, and S combinations of a pilot resource and a signature that are mapped to the R SSBs may be first selected in increasing order of frequency-domain resource indexes of a plurality of frequency multiplexed time-frequency resource groups if there are a plurality of frequency multiplexed time-frequency resource groups, then in increasing order of signature indexes, thirdly in increasing order of pilot resource indexes, and fourthly in increasing order of time-domain resource indexes of a plurality of time multiplexed time-frequency resource groups if there are a plurality of time multiplexed time-frequency resource groups.

As shown in FIG. 14, the time-frequency resource group includes a plurality of time-frequency resources, and each time-frequency resource may be used for one repetition of data transmission, for example, one PUSCH occasion, or may be used for a plurality of repetitions of data transmission, or each time-frequency resource may be used for transmission of a part of data. The plurality of time-frequency resources in the time-frequency resource group may be consecutive or inconsecutive in time domain, or consecutive or inconsecutive in frequency domain. The time-frequency resource groups may be consecutive or inconsecutive in time domain, or consecutive or inconsecutive in frequency domain.

When the signature index increases, if there are a plurality of signature groups (the signature group may be determined based on a division manner of the signature group in Manner 1), the signature index may be determined in increasing order of indexes in a signature group and then in increasing order of indexes between signature groups, or first in increasing order of group indexes and then in increasing order of indexes in a signature group. The pilot resource index may be determined in increasing order of pilot port indexes and then in increasing order of pilot sequences.

It should be understood that, a selection order of the plurality of frequency multiplexed time-frequency resource groups, the signature, the pilot port, the pilot sequence, and the plurality of time multiplexed time-frequency resource groups in the foregoing sequence may be further randomly combined. When there is a signature group, a selection order of the plurality of frequency multiplexed time-frequency resource groups, the signature in the signature group, the signature group, the pilot port, the pilot sequence, and the plurality of time multiplexed time-frequency resource groups in the foregoing sequence may be further randomly combined.

It should be further understood that, when there are no plurality of frequency multiplexed PUSCH time-frequency resource groups, no plurality of time multiplexed PUSCH resource groups, no plurality of signature groups, no plurality of signatures, no plurality of pilot ports, or no plurality of pilot sequences, optionally, the mapping relationship may not include selection of the frequency multiplexed PUSCH time-frequency resource groups, the time multiplexed PUSCH time-frequency resource groups, the signature groups, the signatures, the pilot ports, or the pilot sequences.

The association relationship 3C is applicable to a case in which the signature is a frequency-domain resource hopping pattern, or a hopping pattern of a resource group including a frequency-domain resource. The terminal device may determine, based on the determined signature index, one or more frequency-domain resources (for example, a frequency-domain resource of a PUSCH time-frequency resource) used for sending data. For example, the signature is a frequency-domain hopping pattern, and the terminal device may determine, in one time-frequency resource group based on the frequency-domain hopping pattern, a frequency-domain resource used at each hopping moment.

The association relationship 3C is further applicable to a case in which the signature is a time-domain pattern. The terminal device may determine, based on the determined signature index, one or more time-domain resources used for sending data.

In the association relationship 3C, the terminal device needs to determine one or more of a time-frequency resource, such as the PUSCH time-frequency resource or the time-frequency resource group, the pilot resource, the signature, and the like that participate in mapping. The one or more of the time-frequency resource, the pilot resource, the signature, and the like may be determined in a pre-agreed manner, or may be configured or reconfigured by the network device by using signaling such as RRC, a MAC CE, or DCI. The RRC signaling may be cell-specific RRC signaling such as broadcast information, system information, or paging information, or may be UE-specific RRC signaling. The DCI may be UE-specific DCI, or may be group DCI or common DCI.

The mapping relationship 3D may be:

the R SSBs are selected from the plurality of SSBs in increasing order of indexes of the SSBs, and the S signatures mapped to the R SSBs may be first selected in increasing order of frequency-domain resource indexes of a plurality of frequency multiplexed time-frequency resource groups if there are a plurality of frequency multiplexed time-frequency resource groups, then in increasing order of signature indexes, and thirdly in increasing order of time-domain resource indexes of a plurality of time multiplexed time-frequency resource groups if there are a plurality of time multiplexed time-frequency resource groups.

For descriptions of the time-frequency resource group, refer to the descriptions of the time-frequency resource group in the mapping relationship 3C. Details are not described again. When the signature index increases, if there are a plurality of signature groups (the signature group may be determined based on a division manner of the signature group in Manner 1), the signature index may be determined in increasing order of indexes in a signature group and then in increasing order of indexes between signature groups, or first in increasing order of group indexes and then in increasing order of indexes in a signature group.

It should be understood that, a selection order of the plurality of frequency multiplexed time-frequency resource groups, the signature, and the plurality of time multiplexed time-frequency resource groups in the foregoing sequence may be further randomly combined. When there is a signature group, a selection order of the plurality of frequency multiplexed time-frequency resource groups, the signature in the signature group, the signature group, and the plurality of time multiplexed time-frequency resource groups in the foregoing sequence may be further randomly combined.

It should be further understood that, when there are no plurality of frequency multiplexed PUSCH time-frequency resource groups, no plurality of time multiplexed PUSCH resource groups, no plurality of signature groups, or no plurality of signatures, optionally, the mapping relationship may not include selection of the frequency multiplexed PUSCH time-frequency resource groups, the time multiplexed PUSCH time-frequency resource groups, the signature groups, or the signatures.

The association relationship 3D is applicable to a case in which the signature is a frequency-domain resource hopping pattern, or a hopping pattern of a resource group including a frequency-domain resource. The terminal device may determine, based on the determined signature index, one or more frequency-domain resources (for example, a frequency-domain resource of a PUSCH time-frequency resource) used for sending data. For example, the signature is a frequency-domain hopping pattern, and the terminal device may determine, in one time-frequency resource group based on the frequency-domain hopping pattern, a frequency-domain resource used at each hopping moment.

The association relationship 3D is further applicable to a case in which, for example, the signature includes a pilot resource and a frequency-domain resource. For example, the signature is a two-dimensional resource group including a pilot resource and a frequency-domain resource or a hopping pattern of a resource group, or a multi-dimensional resource group including a pilot resource, a frequency-domain resource, and another resource such as a code-domain resource or a space-domain resource or a hopping pattern of a resource group.

The association relationship 3D is further applicable to a case in which the signature is a time-domain pattern. The terminal device may determine, based on the determined signature index, one or more time-domain resources used for sending data.

In some implementations, when a pilot resource included in the signature is a pilot port, the terminal device further needs to determine the pilot sequence. In an example, there is an association relationship between a signature or a signature group and a pilot sequence, and the terminal device may determine a used pilot sequence based on the signature or the signature group.

In another example, the pilot sequence may alternatively be used as an independent resource to participate in mapping in increasing order of indexes. For example, N consecutive preambles on a PRACH time-frequency resource in a PRACH slot are mapped to S signatures and associated pilot sequences. The S signatures and the associated pilot sequences are selected in the following order: first selecting in increasing order of frequency-domain resource indexes of a plurality of frequency multiplexed time-frequency resource groups if there are a plurality of frequency multiplexed time-frequency resource groups, then in increasing order of signature indexes, thirdly in increasing order of pilot sequence indexes, and fourthly in increasing order of time-domain resource indexes of a plurality of time multiplexed time-frequency resource groups if there are a plurality of time multiplexed time-frequency resource groups.

It should be understood that, a selection order of the plurality of frequency multiplexed time-frequency resource groups, the signature, the pilot sequence, and the plurality of time multiplexed time-frequency resource groups in the foregoing sequence may be further randomly combined. When there is a signature group, a selection order of the plurality of frequency multiplexed time-frequency resource groups, the signature in the signature group, the signature group, the pilot sequence, and the plurality of time multiplexed time-frequency resource groups in the foregoing sequence may be further randomly combined.

It should be further understood that, when there are no plurality of frequency multiplexed PUSCH time-frequency resource groups, no plurality of time multiplexed PUSCH resource groups, no plurality of signature groups, no plurality of signatures, no plurality of pilot ports, or no plurality of pilot sequences, optionally, the mapping relationship may not include selection of the frequency multiplexed PUSCH time-frequency resource groups, the time multiplexed PUSCH time-frequency resource groups, the signature groups, the signatures, the pilot ports, or the pilot sequences.

In some implementations, the signature may alternatively be a frequency-domain resource hopping pattern, or a hopping pattern of a resource group including a frequency-domain resource. The terminal device may further determine, based on the determined signature index, one or more frequency-domain resources (for example, a frequency-domain resource of a PUSCH time-frequency resource) used for sending data. For example, the signature is a frequency-domain hopping pattern, and the terminal device may determine, in one time-frequency resource group based on the pattern, a frequency-domain resource used at each hopping moment.

In the association relationship 3D, the terminal device needs to determine one or more of a time-frequency resource, such as the PUSCH time-frequency resource or the time-frequency resource group, the pilot resource, the pilot sequence, the signature, and the like that participate in mapping. The one or more of the time-frequency resource, the pilot resource, the pilot sequence, the signature, and the like may be determined in a pre-agreed manner, or may be configured or reconfigured by the network device by using signaling such as RRC, a MAC CE, or DCI. The RRC signaling may be cell-specific RRC signaling such as broadcast information, system information, or paging information, or may be UE-specific RRC signaling. The DCI may be UE-specific DCI, or may be group DCI or common DCI.

It should be understood that, R and S in the foregoing association relationships 3A to 3D are positive integers. In some implementations, at least one of R and S is 1. For example, when R is an integer greater than or equal to 1, S=1; or when R=1, S is an integer greater than 1. In other words, a mapping relationship between an SSB and a signature, a combination of a PUSCH occasion and a pilot resource and a signature, a combination of a PUSCH occasion and a signature, and a combination of a pilot resource and a signature may be one-to-one, many-to-one, or one-to-many. Specifically, the mapping relationship may be determined by the terminal device based on a quantity of SSBs and a quantity of combinations of a PUSCH occasion and a pilot resource and a signature, a quantity of combinations of a PUSCH occasion and a signature and a quantity of combinations of a pilot resource and a signature, or may be configured or reconfigured by the network device by using signaling such as RRC, a MAC CE, or DCI.

In the foregoing association relationships 3A to 3D, when signatures are not grouped, optionally, the sequence of the signature indexes meets the following requirement: a sequence of K signature indexes orthogonal to each other or with good orthogonality (for example, a correlation is lower than a correlation threshold) are consecutive. For example, in the signatures, K signatures whose indexes are from n+1 to n+K are orthogonal or the correlation is lower than the correlation threshold.

In Manner 3, the terminal device may determine the to-be-used signature in a configured grant (configured grant, CG) or preconfigured uplink resource (preconfigured uplink resource, PUR) transmission process.

Manner 4: There is a mapping relationship between a plurality of SSBs and a plurality of resources, and there is a mapping relationship between a plurality of resources and a plurality of signatures. The terminal device determines, based on the first SSB, the first resource from the plurality of resources, and determines, based on the first resource, the at least one signature from the plurality of signatures. The resources are a pilot resource and a time-frequency resource (for example, a PUSCH time-frequency resource) for sending data.

The mapping relationship between a plurality of SSBs and a plurality of resources may include a mapping relationship between an SSB and a PRACH time-frequency resource and a preamble, and a mapping relationship between a PRACH time-frequency resource and a preamble and a time-frequency resource (for example, a PUSCH time-frequency resource) and a pilot resource.

Specifically, the terminal device may determine, based on a mapping relationship (or an association relationship) between an SSB and a PRACH time-frequency resource and a preamble, a preamble and a PRACH time-frequency resource for sending the preamble from the PRACH time-frequency resource and the preamble that are associated with the first SSB. For a specific implementation of determining, by the terminal device, a preamble and a PRACH time-frequency resource for sending the preamble, refer to the implementation in Manner 2. Details are not described again. Then, the terminal device determines, based on the mapping relationship between a PRACH time-frequency resource and a preamble and a time-frequency resource (for example, a PUSCH time-frequency resource) and a pilot resource, the PUSCH time-frequency resource and the pilot resource as the first resource for sending the data.

In a possible implementation, the mapping relationship between a PRACH time-frequency resource and a preamble and a time-frequency resource (for example, a PUSCH time-frequency resource) and a pilot resource may be N preambles (for example, N consecutive preambles on a PRACH occasion in one PRACH slot), and the N preambles may be first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources.

The PUSCH time-frequency resource and the associated pilot resource that are mapped to the N preambles may first selected in increasing order of frequency-domain resource indexes of frequency multiplexed PUSCH time-frequency resources, then in increasing order of pilot resource indexes (the pilot resource index may be determined in increasing order of pilot port indexes and then in increasing order of pilot sequences), and thirdly in increasing order of time-domain resource indexes of time multiplexed PUSCH time-frequency resources (the time-domain resource index of the PUSCH time-frequency resource may be determined in increasing order of time-domain resource indexes of a PUSCH occasion in a PUSCH slot, and then in increasing order of PUSCH slot indexes).

In some implementations, the terminal device may further determine the pilot resource and the PUSCH time-frequency resource in the manner of determining the time-frequency resource and the pilot resource that are used for sending the data in Manner 2 and Manner 3.

The mapping relationship between a plurality of resources (a pilot resource and a time-frequency resource) and a plurality of signatures may be a mapping relationship between P pilot resources on the PUSCH time-frequency resource and Q signatures.

The mapping relationship between P pilot resources on the PUSCH time-frequency resource and Q signatures may be:

the P pilot resources (for example, P consecutive pilot resources on a PUSCH time-frequency resource in one PUSCH time-frequency resource periodicity) may be first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resource; and

the Q signatures mapped to the P pilot resources may be first selected in increasing order of signature group indexes, and then in increasing order of signature group indexes; or the Q signatures mapped to the P pilot resources may be first selected in increasing order of indexes in a signature group, and then in increasing order of signature group indexes.

The Q signatures mapped to the P pilot resources may also be selected in increasing order of signature indexes.

The PUSCH time-domain resource periodicity may be one or more symbols, slots, mini-slots, subframes, frames, or the like, and may be configured by the network device.

It should be understood that, when there are no plurality of frequency multiplexed PUSCH time-frequency resources, no plurality of time multiplexed PUSCH resources, no plurality of signature groups, no plurality of signatures, no plurality of pilot ports, or no plurality of pilot sequences, optionally, the mapping relationship may not include selection of the frequency multiplexed PUSCH time-frequency resources, the time multiplexed PUSCH time-frequency resources, the signature groups, the signatures, the pilot ports, or the pilot sequences.

Manner 4 is applicable to a case in which the signature is a code-domain resource, a code-domain resource hopping pattern, a space-domain resource, or a space-domain resource hopping pattern. It should be understood that, P and Q are positive integers. In some implementations, at least one of P and Q is 1. For example, when P is an integer greater than or equal to 1, Q=1; or when P=1, Q is an integer greater than 1.

In some implementations, when signatures are not grouped, optionally, the sequence of the signature indexes meets the following requirement: a sequence of K signature indexes orthogonal to each other or with good orthogonality (for example, a correlation is lower than a correlation threshold) are consecutive. For example, in the signatures, K signatures whose indexes are from n+1 to n+K are orthogonal or the correlation is lower than the correlation threshold.

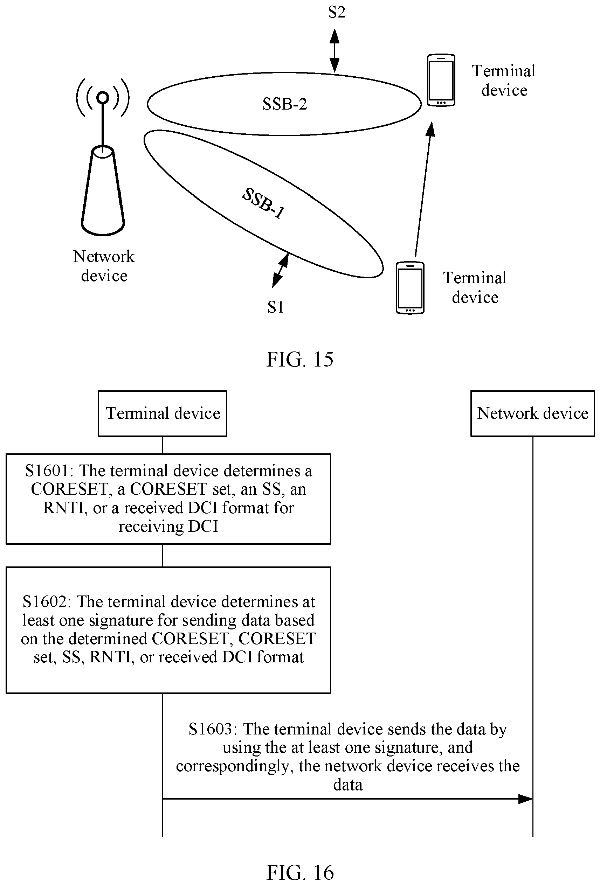

According to the communication method shown in FIG. 4, the terminal device may determine the signature based on the determined first SSB and the mapping or association relationship between the SSB and the signature. As shown in FIG. 15, an example in which the at least one signature is determined in Manner 1 is used. When the terminal device moves from coverage of the SSB-1 to coverage of the SSB-2, the terminal device may determine the at least one signature in a signature set S2 associated with the SSB-2. This can prevent the network device from frequently configuring signatures for the terminal device, to reduce signaling overheads and power consumption. According to the communication method shown in FIG. 4, limited orthogonal signatures may be allocated in an optimized manner based on the SSBs, so that the orthogonal signatures are used to distinguish terminal devices (for example, terminal devices covered by a same SSB) that cannot be distinguished by beam domains, and the non-orthogonal signatures are used to distinguish terminal devices (for example, terminal devices covered by adjacent SSBs) that have a poor beam domain differentiation effect, to fully utilize characteristics of beams and signatures and combine advantages of the beams and signatures. This helps reduce interference between the terminal devices and improve resource multiplexing performance.

That the terminal device sends the data by using the signature may mean that the terminal device determines, based on the signature, one or more of resources such as a time-domain resource, a frequency-domain resource, a code-domain resource, a power-domain resource, a pilot resource, and a space-domain resource that are used for sending the data, and sends the data by using the resources. When the signature is a resource hopping pattern, the terminal device determines, based on the signature, one or more of the resources such as a frequency-domain resource, a code-domain resource, a power-domain resource, a pilot resource, and a space-domain resource used at each hopping moment or by each hopping unit, and send the data by using the resources at the corresponding hopping moment or in the hopping unit. The terminal device may directly determine, based on the signature, a time-domain resource, a frequency-domain resource, a code-domain resource, a power-domain resource, a pilot resource, and a space-domain resource that are used for sending the data, or may generate or determine, based on the signature, a time-domain resource, a frequency-domain resource, a code-domain resource, a power-domain resource, a pilot resource, and a space-domain resource that are used for sending the data.

Specifically, that the terminal device sends the data by using the code-domain resource may be that the terminal device processes the to-be-sent data by using the code-domain resource and then sends the to-be-sent data. The processing herein includes but is not limited to bit-level or symbol-level processing. The bit-level processing includes bit-level coding, scrambling, interleaving, and the like. The symbol-level processing includes modulation (for example, mapping a bit to a symbol), spreading (for example, multiplying a modulation symbol by a sequence), scrambling, interleaving, resource mapping, precoding, layer mapping, and the like.

That the terminal device sends the data by using the power-domain resource may be that the terminal device performs power control on the to-be-sent data based on a power class, a power control parameter, and the like, and then sends the to-be-sent data.

That the terminal device sends the data by using the space-domain resource may be that the terminal device performs a space-domain operation on the to-be-sent data by using the space-domain resource and then sends the to-be-sent data. The space-domain operation herein includes but is not limited to precoding, layer mapping, antenna selection, and the like.

That the terminal device sends the data by using the pilot resource may be that the terminal device sends a pilot sequence.

Manner 1 mainly describes a case in which an SSB is associated with a signature set. In addition, because coverage directions and coverage areas of different TRPs, IAB nodes, DU nodes, relay nodes, or cells are different, in the foregoing solution, the signature set may be further associated with the TRP, the IAB node, the DU node, the relay node, or the cell. When the terminal device selects a TRP, an IAB node, a DU node, a relay node, or a cell, the terminal device may further send the data by using at least one signature in a signature set associated with the TRP, the IAB node, the DU node, the relay node, or the cell.

In an example, in a TRP scenario, in a specific implementation, the signature may be associated with a control resource set (control resource set, CORESET), a CORESET set, a search space (search space, SS), a DCI format (format), a radio network temporary identifier (radio network temporary identifier, RNTI) used to scramble DCI, and the like. A specific implementation may be shown in FIG. 16.

S1601: The terminal device determines a CORESET, a CORESET set, an SS, an RNTI, or a received DCI format for receiving DCI.

The DCI may be a message 2 (Msg2) for scheduling four-step random access, a message B (MsgB) for scheduling two-step random access, or DCI of system information.

S1602: The terminal device determines at least one signature for sending data based on the determined CORESET, CORESET set, SS, RNTI, or received DCI format.

Specifically, the association relationship between a signature set and a CORESET, a CORESET set, an SS, an RNTI, or a received DCI format may be established in a manner of establishing the association relationship between an SSB and a signature set, and the terminal device determines the at least one signature in a corresponding signature set.

S1603: The terminal device sends the data by using the at least one signature, and correspondingly, the network device receives the data.

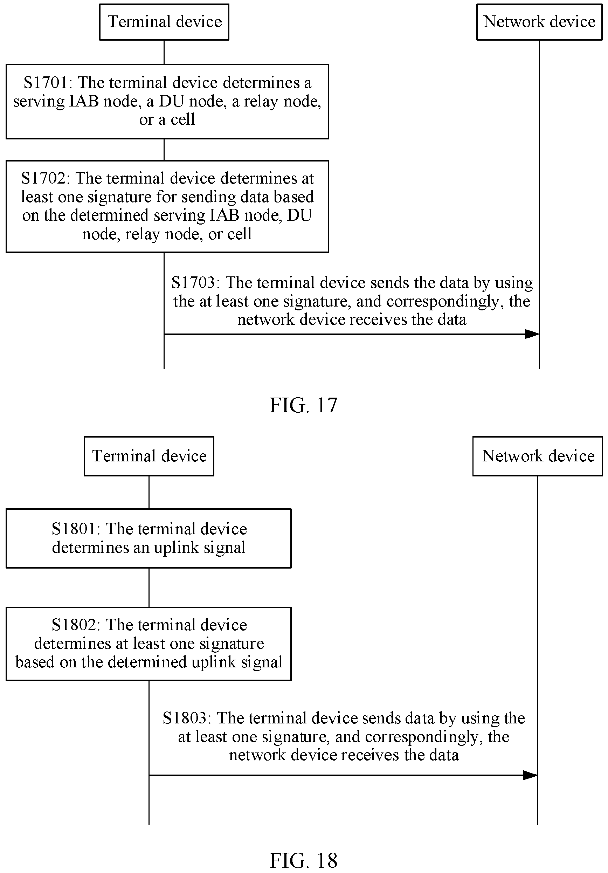

Similarly, in a scenario including a plurality of IAB nodes, a plurality of DU nodes, a plurality of relay nodes, or a plurality of cells, the signature set may further be associated with the plurality of IAB nodes, the plurality of DU nodes, the plurality of relay nodes, or the plurality of cells. A specific implementation may be shown in FIG. 17.

S1701: The terminal device determines a serving IAB node, a DU node, a relay node, or a cell. S1702: The terminal device determines at least one signature for sending data based on the determined serving IAB node, DU node, relay node, or cell.

Specifically, an association relationship between a signature set and a plurality of IAB nodes, a plurality of DU nodes, a plurality of relay nodes, or a plurality of cells may be established in a manner of establishing the association relationship between an SSB and a signature set, and the terminal device may determine the at least one signature in a signature set associated with the determined serving IAB node, DU node, relay node, or cell.

S1703: The terminal device sends the data by using the at least one signature, and correspondingly, the network device receives the data.

In addition, because an uplink signal (for example, an uplink reference signal) of the terminal device can also represent a spatial characteristic of the signal, a spatial direction, a beam direction, and the like, in the foregoing solution, the signature set may also be associated with the uplink signal. The uplink signal herein includes but is not limited to an SRS, a DMRS, a reference signal having a sensing function, and the like. A specific implementation may be shown in FIG. 18.

S1801: The terminal device determines an uplink signal.

Because the terminal device sends the uplink signal, the terminal device cannot determine which uplink signal is optimal from a plurality of sent uplink signals. Therefore, the network device needs to determine, based on signal quality and the like, one uplink signal (for example, an uplink signal with highest RSRP) from the plurality of uplink signals sent by the terminal device, and may indicate the terminal device in an implicit or explicit manner by using signaling such as RRC, DCI, or a MAC CE.

S1802: The terminal device determines at least one signature based on the determined uplink signal. Specifically, an association relationship between a plurality of uplink signals and a plurality of signature sets may be established in a manner of establishing the association relationship between an SSB and a signature set, and the terminal device determines the at least one signature in a signature set associated with the determined uplink signal.

S1803: The terminal device sends the data by using the at least one signature, and correspondingly, the network device receives the data.

In the solutions in FIG. 4 and FIG. 16 to 18, a downlink signal (for example, an SSB), a TRP, an IAB node, a DU node, a relay node, a cell, a CORESET, a CORESET set, an SS/RNTI, or a DCI format may alternatively be a terminal device group. In other words, the terminal device group is associated with a signature set, and the terminal device determines, based on the terminal device group to which the terminal device belongs, a signature for sending the data. In this case, the terminal device may determine, by determining the downlink signal, the TRP, the IAB node, the DU node, the relay node, the cell, the CORESET, the CORESET set, the SS/RNTI, or the DCI format, a terminal device group to which the terminal device belongs, or may determine, by using an indication of the network device, a terminal device group to which the terminal device belongs, to select a signature from a signature set associated with the terminal device group.

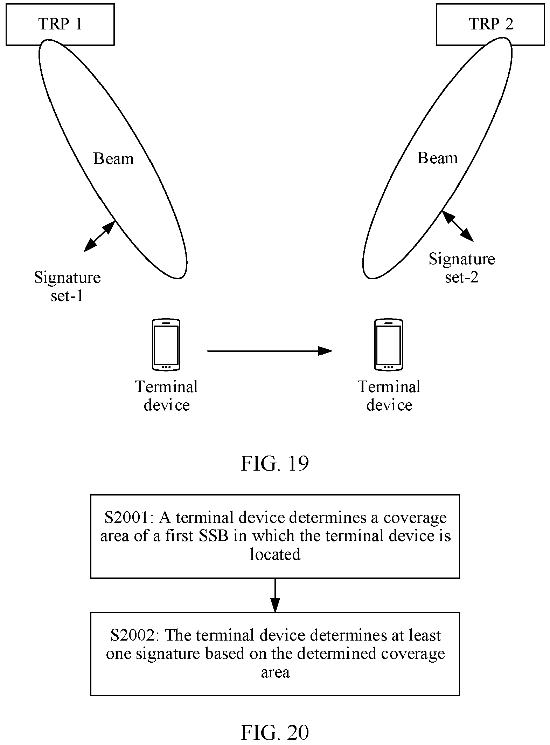

When one or more of the downlink signal, the CORESET, the CORESET set, the SS, the RNTI, the DCI format, the IAB node, the DU node, the relay node, the cell, the uplink signal, the terminal device group, and the like determined by the terminal device change or are switched (which may be triggered by the terminal device, or may be indicated by the network device), the terminal device may correspondingly change, based on an association (or mapping) relationship, at least one signature for sending the data. As shown in FIG. 19, when the terminal device moves from a TRP 1 to a TPR 2, the at least one signature used by the terminal device also changes from at least one signature in a signature set-1 to at least one signature in a signature set-2.

When the terminal device is located in different areas of the first downlink signal (for example, the SSB), the serving IAB node, the DU node, the relay node, or the cell, for example, a coverage edge area and a coverage center area, different interference may occur. In some implementations, the terminal device may further determine and use a signature based on a coverage area in which the terminal device is located. An example in which the downlink signal is an SSB and the terminal device determines the at least one signature based on the signature set associated with the first SSB is still used. Specifically, a method for determining a signature by the terminal device may be shown in FIG. 20. The method includes the following steps.

S2001: The terminal device determines a coverage area of a first SSB in which the terminal device is located.

The coverage area may be classified into a coverage edge area and a coverage center area (a non-coverage edge area). A condition for determining, by the terminal device, that the terminal device is located in an edge area of the first SSB may include one or more of the following:

> signal quality of the first SSB is less than or equal to a first threshold;
> signal quality of a third SSB is greater than or equal to a second threshold;
> an absolute value of a difference between signal quality of the third SSB and signal quality of the first SSB is less than or equal to a third threshold; or
> a ratio of signal quality of the third SSB to signal quality of the first SSB is greater than or equal to a fourth threshold.

Optionally, the third SSB is an SSB with highest signal quality in the plurality of SSBs other than the first SSB. The first threshold, the second threshold, the third threshold, and the fourth threshold may be agreed on by the network device and the terminal device in advance, or may be indicated by the network device to the terminal device by using signaling such as RRC, a MAC CE, or DCI. It should be understood that, in a case in which there are a plurality of IAB nodes, a plurality of DU nodes, a plurality of relay nodes, a plurality of cells, or a plurality of TRPs, the first SSB (or first downlink signal) may be a downlink signal of a serving IAB node, a DU node, a relay node, a cell, or a TRP, and the third SSB (or third downlink signal) may be an SSB (or a downlink signal) of an IAB node, a DU node, a relay node, or a cell with highest signal quality in the plurality of IAB nodes, the plurality of DU nodes, the plurality of relay nodes, or the plurality of cells other than the serving IAB node, the DU node, the relay node, or the cell. Alternatively, the terminal device may determine, in the foregoing manner, that the terminal device is located in a coverage area of the serving IAB node, the DU node, the relay node, or the cell.

S2002: The terminal device determines at least one signature based on the determined coverage area.

Specifically, different coverage areas may be associated with different signature sets. For example, a coverage center area and a coverage edge area of the first SSB may be associated with different signature subsets, each signature subset may include one or more signatures or signature groups, and signature subsets associated with the coverage center area and the coverage edge area are different. The difference herein means that the signature subsets associated with the coverage center area and the coverage edge area may have an intersection or no intersection, but cannot be completely the same.

For example, the coverage edge area of the first SSB is associated with a first signature subset (S-edge), the coverage center area is associated with a second signature subset (S_center), and S-edge and S_center are subsets of a signature set S associated with the first SSB. A relationship between S_center and S-edge may be but is not limited to the following.

(1) S-edge is a proper subset of S_center, or has an intersection with S_center.

In an example, in the S_center, other than a signature that is the same as a signature in the S-edge, remaining signatures are orthogonal to the signatures in the S-edge, or has good orthogonality (a correlation is less than a correlation threshold).

(2) S-edge and S_center have no intersection.

For example, S-edge and S_center are orthogonal, that is, any two signatures from two subsets are orthogonal, that is, any two signatures in the two subsets are orthogonal, or S-edge and S_center have good orthogonality (for example, a correlation between any two signatures is lower than a correlation threshold).

Signature sets associated with coverage areas of different SSBs may meet the following relationship, where S1-edge and S1_center, and S2-edge and S2_center respectively indicate that a coverage edge area of any two of the plurality of SSBs is associated with a first signature subset and a coverage center area of any two of the plurality of SSBs is associated with a second signature subset. For example, S 1-edge and S1_center respectively indicate that a coverage edge area of the first SSB is associated with the first signature subset and a coverage center area is associated with the second signature subset, S2-edge and S2_center respectively indicate that a coverage edge area of a second SSB is associated with the first signature subset and a coverage center area of the second SSB is associated with the second signature subset, and the second SSB is an SSB that is in the plurality of SSBs and that is different from the first SSB.

Relationships between S1-edge, S1_center, S2-edge, and S2_center may be but are not limited to the following.

(1) S 1-edge is orthogonal to at least one of S2-edge, S2_center, or S2, or a correlation between S1-edge and at least one of S2-edge, S2_center, or S2 is less than a correlation threshold, where S2 is a signature set associated with the second SSB, and S2-edge and S2_center are subsets of S2.

(2) Orthogonality between S1-edge and S2-edge is better than orthogonality between S1-center and S2-edge, and/or orthogonality between S1-edge and S2_center is better than orthogonality between S1-center and S2_center, and/or orthogonality between S1-edge and S2 is better than orthogonality between S 1-center and S2.

That two signature sets are orthogonal may mean that any two signatures from two signature sets are orthogonal, and that two signature sets are not orthogonal may mean that at least two signatures from two signature sets are not orthogonal. That the orthogonality of two signature sets is better than the orthogonality of other two signature sets may mean that a correlation between signatures of the two signature sets is lower than a correlation between signatures of the other two signature sets. The definition of the correlation between signatures in signature sets may be the same as the definition of the correlation between signatures in signature groups described above, that is, defined as a minimum value, a maximum value, or an average value of a correlation between two signatures each selected from each of the two signature sets.

In some implementations, for any SSB, a signature subset S_center associated with a coverage center area of the SSB may be equal to a signature set S associated with the SSB, that is, the same as the signature set S associated with the SSB.

For signature sets associated with coverage areas of other different downlink signals, or different IAB nodes, DU nodes, relay nodes, cells, or TRPs, refer to implementation of signature sets associated with coverage areas of different SSBs. Details are not described again.

Coverage of a same SSB (the SSB is used below to replace a downlink signal, a TRP, an IAB node, a DU node, a relay node, a serving cell, or the like) may be adjacent to coverage of more than one SSB. Therefore, in step S2002, coverage of one SSB may be divided into a plurality of coverage areas, for example, one coverage center area and two or more coverage edge areas. Each coverage area is associated with a signature subset. A relationship between the signature subset associated with the coverage center area and the signature subset associated with any coverage edge area is the same as that described above. In this application, a relationship between signature subsets associated with different coverage edge areas in coverage of a same SSB is not limited. When the coverage of the SSB is divided into a plurality of coverage edge areas, the terminal device may further determine a coverage edge area in which the terminal device is located, to determine a to-be-used signature subset.

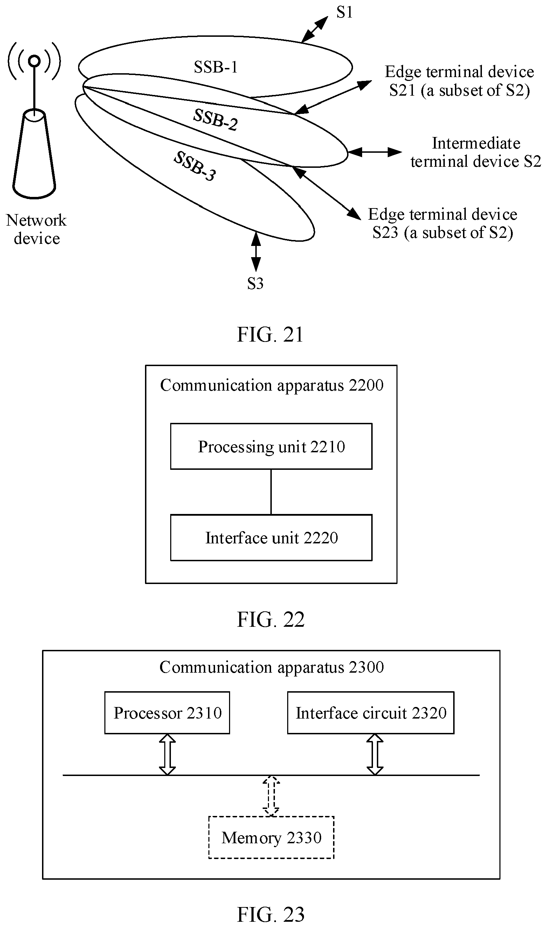

As shown in FIG. 21, the RSRP of the SSB-2 measured by a terminal device 1 and a terminal device 2 is optimal, and therefore both the terminal device 1 and the terminal device 2 select the SSB-2. However, the RSRP of the SSB-1 measured by the terminal device 1 is greater than a preset threshold. Therefore, the terminal device 1 considers that the terminal device 1 is located in a coverage edge area of the SSB-2 and is close to coverage of the SSB-1, and correspondingly uses an associated signature subset S21. The terminal device 2 measures that the RSRP of the SSB-3 is greater than a preset threshold. Therefore, the terminal device 2 also considers that the terminal device 2 is located in the coverage edge area of the SSB-2 and is close to coverage of the SSB-2, and correspondingly uses a signature subset S23. To ensure performance of an edge terminal device, selection of S21 is related to a signature set S1 associated with the SSB-1. For example, S21 is orthogonal to or has good orthogonality with S1 or a subset of S1, and selection of S23 is related to a signature set S3 associated with the SSB-3. For example, S23 is orthogonal to or has good orthogonality with S3 or a subset of S3.

It should be understood that, in this embodiment of this application, the coverage area may also be described as an interference area, an interference level, a coverage level, or the like.

In some implementations, after determining the coverage area in which the terminal device is located, the terminal device may further report information about the coverage area in which the terminal device is located to the network device, the network device delivers configuration information, and the terminal device determines the at least one signature based on the configuration information delivered by the network device.

In an example, the terminal device may report, to the network device in an explicit manner, the information about the coverage area in which the terminal device is located, for example, send the information to the network device by using signaling such as RRC, a MAC CE, or UCI. Certainly, the terminal device may alternatively report, to the network device in an implicit manner, the information about the coverage area in which the terminal device is located. For example, the terminal device selects a preamble, a DMRS, a time-frequency resource, and the like based on the coverage area of the first SSB in which the terminal device is located, and implicitly indicates, to a base station by using the selected preamble, the DMRS, and the time-frequency resource, the coverage area in which the terminal device is located.

For example, in a random access scenario, the terminal device may implicitly indicate, by using a selected preamble or a time-frequency resource for sending the preamble, a coverage area in which the terminal device is located.

For another example, in a CG or PUR scenario, the terminal device may implicitly indicate, by using a selected DMRS or a time-frequency resource for sending the DMRS, a coverage area in which the terminal device is located.

In a possible implementation, the configuration information delivered by the network device to the terminal device by delivering the signaling such as the RRC, the MAC CE, or the DCI may be used to configure an association relationship between a coverage area and a signature subset (or a signature set). The RRC signaling may be cell-specific RRC signaling such as broadcast information, system information, or paging information, or may be UE-specific RRC signaling. The DCI may be UE-specific DCI, or may be group DCI or common DCI. The terminal device may determine the at least one signature from the signature subset (or the signature set) based on the association relationship between a coverage area and a signature subset.

The configuration information delivered by the network device may also be used to configure the signature used by the terminal device. Specifically, the network device may determine the at least one signature based on an association relationship between a coverage area (for example, the edge coverage area of the first SSB) and a signature subset (or a signature set), and then configure the at least one signature for the terminal device.

In another possible implementation, a terminal device group to which the terminal device belongs may be further determined based on a coverage area, and then the at least one signature is determined based on an association relationship between a terminal device group and a signature (signature set). In other words, there is no direct association relationship between the coverage area and the signature (signature set), but the coverage area is associated with the signature by using the terminal device group.

When the terminal device is located in different areas of a downlink signal (for example, an SSB), an IAB node, a DU node, a relay node, or a cell, interference of the terminal device may be different. In some implementations, when the terminal device is located in different areas of a downlink signal, an IAB node, a DU node, a relay node, or a cell, the terminal device may further send the data by using different transmission parameters.

In an example, for sending the data by using the at least one signature, when the terminal device is located in the coverage edge area of the first downlink signal, the terminal device may send the data by using a first transmission parameter and the at least one signature; or when the terminal device is located in a non-coverage edge area of the first downlink signal, the terminal device may send the data by using a second transmission parameter and the at least one signature.

The transmission parameter includes one or more of a power class, a power control parameter, a transport block size (transport block size, TBS), a modulation and coding scheme (modulation and coding scheme, MCS), a quantity of repetitions (repetition), a quantity of retransmissions (retransmissions), or the like. The association relationship between the coverage area and the transmission parameter may be configured or reconfigured by the network device by using signaling such as RRC (for example, system information SI), a MAC CE, and DCI.

When the transmission parameter is a power class or a power control parameter, a power class associated with the coverage center area is higher than a power class associated with the coverage edge area, or a power determined by a power control parameter associated with the coverage center area is higher than a power determined by a power control parameter associated with the coverage edge area. Interference between terminal devices in the coverage edge area is severe. A level of interference between the terminal devices in the coverage edge area can be controlled to some extent by controlling a transmit power of the terminal devices in the coverage edge area. This may be applicable to a case in which whether the terminal device is located in a coverage edge area or a coverage center area is not considered when the terminal device determines the at least one signature.

Alternatively, a power class associated with the coverage center area is lower than a power class associated with the coverage edge area, or a power determined by a power control parameter associated with the coverage center area is lower than a power determined by a power control parameter associated with the coverage edge area. This may be applicable to a case in which whether the terminal device is located in a coverage edge area or a coverage center area is considered when the terminal device determines the signature. For example, orthogonality between the signature subset associated with the coverage center area of the SSB 1 and the signature set associated with the SSB 2 is poorer. Therefore, a transmit power of the terminal device in the coverage center area of the SSB 1 needs to be controlled, to reduce interference between the terminal device covered by the SSB 2. However, orthogonality between the signature subset associated with the coverage edge area of the SSB 1 and the signature set associated with the SSB 2 is good. Therefore, a power of the coverage edge area of the SSB 1 may be larger, to obtain a larger communication gain.

After determining the power class or the power control parameter, the terminal device may perform power control on the data based on the determined power class or the determined power control parameter, and then send the data.

When the transmission parameter is a TBS or an MCS, a level of the TBS or the MCS associated with a coverage center area may be higher than a level of the TBS or the MCS associated with a coverage edge area. This may be applicable to a case in which whether the terminal device is located in a coverage edge area or a coverage center area is considered when the terminal device determines the signature.

Alternatively, a level of the TBS or the MCS associated with the coverage center area may be lower than a level of the TBS or the MCS associated with the coverage edge. This may be applicable to a case in which whether the terminal device is located in a coverage edge area or a coverage center area is considered when the terminal device determines the signature.

After determining the TBS, the terminal device may determine a data volume of the data based on the determined TBS, and then send the data. After determining the MCS, the terminal device may perform coding and modulation on the data based on the determined MCS, and then send the data. When the transmission parameter is a quantity of repetitions or a quantity of times of retransmission, the quantity of repetitions or the quantity of times of retransmission associated with the coverage center area may be greater than the quantity of repetitions or the quantity of times of retransmission associated with the coverage edge area. This may be applicable to a case in which whether the terminal device is located in a coverage edge area or a coverage center area is considered when the terminal device determines the signature.

Alternatively, the quantity of repetitions or the quantity of times of retransmission associated with the coverage center area may be less than the quantity of repetitions or the quantity of times of retransmission associated with the coverage edge area. This may be applicable to a case in which whether the terminal device is located in a coverage edge area or a coverage center area is considered when the terminal device determines the signature.

After determining the quantity of repetitions or the quantity of times of retransmission, the terminal device may send the data for a plurality of times or retransmit the data for a plurality of times based on the quantity of repetitions or the quantity of times of retransmission.

In another possible implementation, a terminal device group to which the terminal device belongs may be further determined based on a coverage area, and then the at least one signature is determined based on an association relationship between a terminal device group and a signature (signature set). In other words, there is no direct association relationship between the coverage area and the signature (signature set), but the coverage area is associated with the signature by using the terminal device group.

In another possible implementation, a terminal device group to which the terminal device belongs may be further determined based on a coverage area, and then the transmission parameter is determined based on an association relationship between a terminal device group and a transmission parameter. In other words, the coverage area is not directly associated with the transmission parameter, but is associated with the transmission parameter by using the terminal device group.

Different interference and/or multiplexing levels also affect data transmission performance. In some implementations, when sending the data, the terminal device may further determine an interference and/or multiplexing level, for example, determine an interference and/or multiplexing level on a time-frequency resource for sending the data, and determine a transmission parameter (for example, a third transmission parameter) based on the interference and/or multiplexing level, to send the data. For example, when the terminal device sends the data by using the at least one signature, the terminal device may send the data by using the determined third transmission parameter and the at least one signature.

In a possible implementation, the third transmission parameter determined by the terminal device based on the interference and/or multiplexing level meets the following characteristic: a higher interference and/or multiplexing level indicates a lower power corresponding to the third transmission parameter.

For the interference and/or multiplexing level of the terminal device, the terminal device may listen to or measure an uplink signal strength on a time-frequency resource by using a technology such as listen before talk (listen before talk, LBT) or sensing, to determine the interference or the resource multiplexing level. For example, a larger uplink signal strength indicates a higher interference or resource multiplexing level.

Alternatively, the terminal device may determine the interference or resource multiplexing level based on a measurement result of the downlink signal. Higher signal quality indicates a lower interference or resource multiplexing level.

Certainly, the network device may also notify the terminal device of the interference or resource multiplexing level by using signaling such as RRC (for example, system information SI), a MAC CE, or DCI.

A plurality of transmission parameters may be configured on the terminal device, and the plurality of transmission parameters may respectively correspond to different interference or resource multiplexing levels. The terminal device may use, based on the determined interference or resource multiplexing level, a transmission parameter corresponding to the interference or resource multiplexing level as the third transmission parameter.

Specifically, the transmission parameter may include one or more of a power class, a power control parameter, a TBS, an MCS, a quantity of repetitions or a quantity of times of retransmission, and the like. In some implementations, a parameter that can represent the interference/resource multiplexing level, for example, $\Delta$interference, may be further introduced, to determine a transmit power of the terminal device. There is a mapping relationship between the parameter and the interference/resource multiplexing level. The mapping relationship may be in a form of a formula or a table, and may be agreed on in advance, or may be configured by the network device for the terminal device by using signaling such as RRC, a MAC CE, or DCI. The RRC signaling may be cell-specific RRC signaling such as broadcast information, system information, or paging information, or may be UE-specific RRC signaling. The DCI may be UE-specific DCI, or may be group DCI or common DCI. In an example, after the parameter is introduced, an uplink power may be determined by using the following formula:

$$P_{\text{PUSCH},b,f,c}(i, j, q_d, l) = \min \left\{ \begin{array}{l} P_{\text{CMAX},f,c}(i), \\ P_{\text{O\_PUSCH},b,f,c}(j) + 10 \log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i, l) + \Delta interference \end{array} \right\}$$

. $P_{\text{PUSCH},b,f,c}(i,j,q_d,l)$ is an uplink power of a PUSCH at a transmission occasion $i$ (that is, a PUSCH time-frequency resource $i$), $P_{\text{O\_PUSCH},b,f,c}(j) + 10 \log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i)$ may be considered as an open-loop power control part, and $f_{b,f,c}(i,l)$ may be considered as a closed-loop power control part.

A maximum transmit power $P_{\text{CMAX},f,c}(i)$ that is of the PUSCH and that is on a carrier $f$ of a cell $c$ configured by the terminal device may be described as a power class (power class) supported by the terminal device. The terminal device sends the PUSCH to the network device on the BWP $b$ of the carrier $f$ of the cell $c$.

$P_{\text{O\_PUSCH},b,f,c}(j)$ is an expected (target) receive power, a parameter value may be indicated or configured by the network device for the terminal device by using signaling (for example, RRC signaling, system information, or DCI), and the parameter may include a cell-specific part and a user-specific part. The network device may configure a plurality of sets of $\{P_{\text{O\_PUSCH},b,f,c}, \alpha_{b,f,c}\}$ for the terminal device, and indicate, by using signaling (for example, DCI), a set of $\{P_{\text{O\_PUSCH},b,f,c}, \alpha_{b,f,c}\}$ used by the terminal device, that is, $j$ is an index value of a set of $\{P_{\text{O\_PUSCH},b,f,c}, \alpha_{b,f,c}\}$ used by the terminal device indicated by using signaling, and the index value is an index of $\{P_{\text{O\_PUSCH},b,f,c}, \alpha_{b,f,c}\}$ used by the terminal device in the plurality of sets of $\{P_{\text{O\_PUSCH},b,f,c}, \alpha_{b,f,c}\}$.

$\alpha_{b,f,c}(j)$ is a partial path loss compensation factor, and a range of the parameter is (0,1]. A parameter value may be indicated or configured by the network device for the terminal device by using signaling (for example, RRC signaling, system information, or DCI).

$\mu$ is a subcarrier spacing configuration of the PUSCH, where the subcarrier spacing of the PUSCH is 15 kHz (kilohertz)* $2^{\mu}$, and a value of $\mu$ may be an integer such as 0, 1, 2, or 4. $M_{\text{RB},b,f,c}^{\text{PUSCH}}(i)$ is a quantity of RBs to which the PUSCH is mapped, or is a quantity of RBs for sending the PUSCH, and a parameter value may be indicated or configured by the network device for the terminal device by using signaling (for example, RRC signaling or DCI).

$PL_{b,f,c}(q_d)$ is a path loss estimation value, and is used to perform path loss compensation. A parameter value may be a path loss estimated by the terminal device by performing downlink measurement on a downlink reference

signal $q_d$.

$\Delta_{\text{TF}b,f,c}(i)$ is a parameter value related to a modulation scheme and a channel coding rate of a current PUSCH transmission.

$f_{b,f,c}(i,l)$ is a power adjustment value determined based on a transmit power control (transmit power control, TPC) command of a closed-loop power control (power control) process $l$, and the TPC command may be indicated or configured by the network device for the terminal device by using signaling (for example, RRC signaling or DCI). The transmit power control command may also be referred to as a power control command for short.

For closed-loop power control, the terminal device side may support closed-loop power control processes greater than or equal to 1. For example, two closed-loop power control processes may be supported. For example, a closed-loop power control process is denoted as $l$, and a power adjustment value of the closed-loop power control process $l$ is denoted as $f_{b,f,c}(i,l)$. When the terminal device supports two closed-loop power control processes, a value of $l$ is 0 or 1, and is used to select a determined power adjustment value from the two closed-loop power control processes supported by the terminal device. A type of closed-loop power control may be accumulated (accumulated) or absolute (absolute).

After receiving the TPC command of the closed-loop power control process $l$ from the network device, when the terminal device determines $f_{b,f,c}(i,l)$ based on the TPC command, the terminal device may determine $f_{b,f,c}(i,l)$ by using the following accumulated closed-loop power control method or absolute closed-loop power control method.

Accumulated:

$$f_{b,f,c}(i,l) = f_{b,f,c}(i - i_0, l) + \sum_{m=0}^{\ell(D_i)-1} \delta_{\text{PUSCH},b,f,c}(m,l),$$

where $\delta_{\text{PUSCH},b,f,c}$ is a parameter value (which may also be referred to as a TPC command value) indicated by a TPC command, $f_{b,f,c}(i-i_0,l)$ is a closed-loop power adjustment value of a PUSCH at a transmission occasion $i - i_0$, and

$$\sum_{m=0}^{\ell(D_i)-1} \delta_{\text{PUSCH},b,f,c}(m,l)$$

represents accumulation of power adjustment steps indicated by ($D_i$) received TPC commands between a transmission occasion $i - i_0$ and a transmission occasion $i$, where the PUSCH at the transmission occasion $i$ may also be understood as an $i$ th transmission of the PUSCH.

Absolute: $f_{b,f,c}(i,l) = \delta_{\text{PUSCH},b,f,c}(i,l)$, where $\delta_{\text{PUSCH},b,f,c}(i,l)$ is a TPC command value sent by the network device to the terminal device on a PUSCH at a transmission occasion $i$.

It should be understood that, the interference/resource multiplexing level may be alternatively replaced with another target quantity that can represent an interference degree to which the terminal device is interfered, for example, an interference degree level.

It can be understood that, to implement the functions in the foregoing embodiments, the terminal device and the network device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

FIG. 22 and FIG. 23 are schematic diagrams of structures of possible communication apparatuses according to an embodiment of this application. The communication apparatus may be configured to implement functions of a terminal device or a network device in the foregoing method embodiment. Therefore, beneficial effects of the foregoing method embodiment can also be implemented. In a possible implementation, the communication apparatus may be the terminal device shown in FIG. 1 or FIG. 2, or may be the network device shown in FIG. 1 or FIG. 2, or may be a module (for example, a chip) applied to the terminal device or the network device.

As shown in FIG. 22, the communication apparatus 2200 includes a processing unit 2210 and an interface unit 2220. The interface unit 2220 may further be a transceiver unit or an input/output interface. The communication apparatus 2200 may be configured to implement functions of the terminal device or the network device in the method embodiment shown in FIG. 4, FIG. 16, FIG. 17, or FIG. 18.

When the communication apparatus 2200 is configured to implement the functions of the terminal device in the method embodiment shown in FIG. 4, FIG. 16, FIG. 17, or FIG. 18,

the processing unit 2210 is configured to: determine a first downlink signal from a plurality of downlink signals, and determine at least one signature based on the first downlink signal; and

the interface unit 2220 is configured to send data by using the at least one signature.

In a possible design, when determining the at least one signature based on the first downlink signal, the processing unit 2210 is specifically configured to: determine, based on the first downlink signal, a first resource from a plurality of resources that have a mapping relationship with the plurality of downlink signals; and determine, based on the first resource, the at least one signature from a plurality of signatures that have a mapping relationship with the plurality of resources.

In a possible design, the resources are a preamble (preamble) and a physical random access channel PRACH time-frequency resource for sending the preamble; and the mapping relationship between a plurality of resources and a plurality of signatures includes: a mapping relationship between N preambles on the PRACH time-frequency resource and M combinations of a physical uplink shared channel PUSCH time-frequency resource, a pilot resource, and a signature; a mapping relationship between N preambles on the PRACH time-frequency resource and M combinations of a PUSCH time-frequency resource and a signature; a mapping relationship between N preambles on the PRACH time-frequency resource and M combinations of a pilot resource and a signature; or a mapping relationship between N preambles on the PRACH time-frequency resource and M signatures, where M and N are positive integers. Optionally, at least one of M and N is 1.

In a possible design, the mapping relationship between N preambles on the PRACH time-frequency resource and M combinations of a PUSCH time-frequency resource and a signature includes: the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

In a possible design, the resources are a pilot resource and a PUSCH time-frequency resource, and the mapping relationship between a plurality of resources and a plurality of signatures includes: a mapping relationship between P pilot resources on the PUSCH time-frequency resource and Q signatures, where P and Q are positive integers. Optionally, at least one of P and Q is 1.

In a possible design, the mapping relationship between P pilot resources on the PUSCH time-frequency resource and Q signatures includes: the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and the Q signatures mapped to the P pilot resources are first selected in increasing order of signature group indexes, and then in increasing order of indexes in a signature group, where the signature is a code-domain resource, a code-domain resource hopping pattern, a space-domain resource, or a space-domain resource hopping pattern.

In a possible design, the interface unit 2220 is further configured to receive configuration information from a network device, where the configuration information is used to configure the mapping relationship between a plurality of resources and a plurality of signatures.

In a possible design, there is a mapping relationship between a plurality of downlink signals and a plurality of signatures, and the at least one signature is a signature that is in the plurality of signatures and that is mapped to the first downlink signal; and the mapping relationship between a plurality of downlink signals and a plurality of signatures includes: a mapping relationship between R downlink signals in the plurality of downlink signals and S combinations of a PUSCH time-frequency resource, a pilot resource, and a signature; a mapping relationship between R downlink signals in the plurality of downlink signals and S combinations of a PUSCH time-frequency resource and a signature; a mapping relationship between R downlink signals in the plurality of downlink signals and S combinations of a pilot resource and a signature; or a mapping relationship between R downlink signals in the plurality of downlink signals and S signatures, where R and S are positive integers. Optionally, at least one of R and S is 1.

In a possible design, the mapping relationship between R downlink signals in the plurality of downlink signals and S combinations of a PUSCH time-frequency resource and a signature includes: the R downlink signals are selected from the plurality of downlink reference signals in increasing order of indexes; and the S combinations of a PUSCH time-frequency resource and a signature that correspond to the R downlink signals are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

In a possible design, the interface unit 2220 is further configured to receive configuration information from a network device, where the configuration information is used to configure the mapping relationship between a plurality of downlink signals and a plurality of signatures.

In a possible design, when determining the at least one signature based on the first downlink signal, the processing unit 2210 is specifically configured to determine the at least one signature in a signature set associated with the first downlink signal, where each of the plurality of downlink signals has an associated signature set.

In a possible design, when determining the at least one signature in the signature set associated with the first downlink signal, the processing unit 2210 is specifically configured to: when the processing unit 2210 determines that the communication apparatus is located in a coverage edge area of the first downlink signal, determine the at least one signature in a first signature subset, where the first signature subset and a signature set associated with a second downlink signal are orthogonal to each other; a correlation between the first signature subset and the signature set associated with the second downlink signal is lower than a correlation threshold; and the first signature subset is a subset of the signature set associated with the first downlink signal, and the second downlink signal is one of the plurality of downlink signals.

In a possible design, when the interface unit 2220 sends the data by using the at least one signature, the interface unit 2220 is specifically configured to: when the processing unit 2210 determines that the communication apparatus is located in the coverage edge area of the first downlink signal, send the data by using a first transmission parameter and the at least one signature; or the interface unit 2220 is specifically configured to: when the processing unit 2210 determines that the communication apparatus is located in a non-coverage edge area of the first downlink signal, send the data by using a second transmission parameter and the at least one signature.

In a possible design, a condition for determining, by the processing unit 2210, that the communication apparatus is located in the coverage edge area of the first downlink signal includes one or more of the following: signal quality of the first downlink signal is less than or equal to a first threshold; signal quality of a third downlink signal is greater than or equal to a second threshold; an absolute value of a difference between signal quality of a third downlink signal and signal quality of the first downlink signal is less than or equal to a third threshold; or a ratio of signal quality of a third downlink signal to signal quality of the first downlink signal is greater than or equal to a fourth threshold; and the third downlink signal is a downlink signal with highest signal quality in the plurality of downlink signals other than the first downlink signal.

In a possible design, the processing unit 2210 is further configured to: determine an interference and/or multiplexing level of a time-frequency resource for sending the data; and determine a third transmission parameter based on the interference and/or multiplexing level of the time-frequency resource, where the third parameter meets the following characteristic: a higher interference and/or multiplexing level of the time-frequency resource indicates a lower power corresponding to the third transmission parameter; and when sending the data by using the at least one signature, the interface unit 2220 is specifically configured to send the data by using the third transmission parameter and the at least one signature.

In a possible design, any two signatures in the signature set associated with the first downlink signal are orthogonal to each other; and at least one signature in the signature set associated with the first downlink signal is not orthogonal to at least one signature in a signature set associated with a fourth downlink signal, and the fourth downlink signal is one of the plurality of downlink signals.

In a possible design, the signature is at least one of a code-domain resource, a pilot resource, a power resource, a space-domain resource, and a resource hopping pattern.

In a possible design, the downlink signal is an SSB.

When the communication apparatus 2200 is configured to implement the functions of the network device in the method embodiment shown in FIG. 4, FIG. 16, FIG. 17, or FIG. 18,

the processing unit 2210 is configured to determine configuration information, where the configuration information is used to configure a mapping relationship between a plurality of resources and a plurality of signatures, or configure a mapping relationship between a plurality of downlink signals and a plurality of signatures; and the interface unit 2220 is configured to send the configuration information to a terminal device.

In a possible design, the resources are a preamble (preamble) and a physical random access channel PRACH time-frequency resource for sending the preamble; and the mapping relationship between a plurality of resources and a plurality of signatures includes: a mapping relationship between N preambles on the PRACH time-frequency resource and M combinations of a physical uplink shared channel PUSCH time-frequency resource, a pilot resource, and a signature; a mapping relationship between N preambles on the PRACH time-frequency resource and M combinations of a PUSCH time-frequency resource and a signature; a mapping relationship between N preambles on the PRACH time-frequency resource and M combinations of a pilot resource and a signature; or a mapping relationship between N preambles on the PRACH time-frequency resource and M signatures, where M and N are positive integers. Optionally, at least one of M and N is 1.

In a possible design, the mapping relationship between N preambles on the PRACH time-frequency resource and M combinations of a PUSCH time-frequency resource and a signature includes: the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

In a possible design, the resources are a pilot resource and a PUSCH time-frequency resource, and the mapping relationship between a plurality of resources and a plurality of signatures includes: a mapping relationship between P pilot resources on the PUSCH time-frequency resource and Q signatures, where P and Q are positive integers. Optionally, at least one of P and Q is 1.

In a possible design, the mapping relationship between P pilot resources on the PUSCH time-frequency resource and Q signatures includes: the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and the Q signatures mapped to the P pilot resources are first selected in increasing order of signature group indexes, and then in increasing order of indexes in a signature group, where the signature is a code-domain resource, a code-domain resource hopping pattern, a space-domain resource, or a space-domain resource hopping pattern.

In a possible design, the mapping relationship between a plurality of downlink signals and a plurality of signatures includes: a mapping relationship between R downlink signals in the plurality of downlink signals and S combinations of a PUSCH time-frequency resource, a pilot resource, and a signature; a mapping relationship between R downlink signals in the plurality of downlink signals and S combinations of a PUSCH time-frequency resource and a signature; a mapping relationship between R downlink signals in the plurality of downlink signals and S combinations of a pilot resource and a signature; or a mapping relationship between R downlink signals in the plurality of downlink signals and S signatures, where R and S are positive integers. Optionally, at least one of R and S is 1.

In a possible design, the mapping relationship between R downlink signals in the plurality of downlink signals and S combinations of a PUSCH time-frequency resource and a signature includes: the R downlink signals are selected from the plurality of downlink reference signals in increasing order of indexes; and the S combinations of a PUSCH time-frequency resource and a signature that correspond to the R downlink signals are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, where the signature is a frequency-domain resource hopping pattern, a hopping pattern of a resource group including a frequency-domain resource, a code-domain resource, a code-domain resource hopping pattern, a space-domain resource, or a space-domain resource hopping pattern.

In a possible design, the downlink signal is an SSB.

As shown in FIG. 23, the communication apparatus 2300 includes a processor 2310 and an interface circuit 2320. The processor 2310 is coupled to the interface circuit 2320. It can be understood that the interface circuit 2320 may be a transceiver or an input/output interface. Optionally, the communication apparatus 2300 may further include a memory 2330, configured to store instructions executed by the processor 2310, or store input data required by the processor 2310 to run the instructions, or store data generated after the processor 2310 runs the instructions. Optionally, the memory 2330 may be further integrated with the processor 2310.

When the communication apparatus 2300 is configured to implement the method shown in FIG. 4, FIG. 16, FIG. 17, or FIG. 18, the processor 2310 is configured to implement the function of the processing unit 2210, and the interface circuit 2320 is configured to implement the function of the interface unit 2220.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device or another terminal device to the terminal device; or the chip in the terminal device sends information to another module (for example, a radio frequency module or an antenna) in the terminal device, where the information is sent by the terminal device to the network device or another terminal device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs and instructions. When the computer programs or instructions are loaded and executed on a computer, all or some of the processes or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that, the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In addition, in embodiments of this application, information (information), a signal (signal), a message (message), and a channel (channel) may be interchangeably used sometimes. It should be noted that meanings expressed by the terms are consistent when differences are not emphasized. Terms "of (of)" and "corresponding (corresponding, relevant)" may be interchangeably used sometimes. It should be noted that meanings expressed by the terms are consistent when differences of the terms are not emphasized.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1.   A communication method, comprising:

>   determining, by a terminal device, a first downlink signal from a plurality of downlink signals;
>   determining, by the terminal device, at least one signature based on the first downlink signal; and
>   sending, by the terminal device, data by using the at least one signature.

2.   The method according to claim 1, wherein the determining, by the terminal device, at least one signature based on the first downlink signal comprises:

>   determining, by the terminal device based on the first downlink signal, a first resource from a plurality of resources that have a mapping relationship with the plurality of downlink signals; and
>   determining, by the terminal device based on the first resource, the at least one signature from a plurality of signatures that have a mapping relationship with the plurality of resources.

3.   The method according to claim 2, wherein the resources are a preamble preamble and a physical random access channel PRACH time-frequency resource for sending the preamble; and
the mapping relationship between a plurality of resources and a plurality of signatures comprises:

>   a mapping relationship between N preambles on the PRACH time-frequency resource and M combinations of a physical uplink shared channel PUSCH time-frequency resource, a pilot resource, and a signature;
>   a mapping relationship between N preambles on the PRACH time-frequency resource and M combinations of a PUSCH time-frequency resource and a signature;
>   a mapping relationship between N preambles on the PRACH time-frequency resource and M combinations of a pilot resource and a signature; or
>   a mapping relationship between N preambles on the PRACH time-frequency resource and M signatures, wherein M and N are positive integers.

4.   The method according to claim 3, wherein the mapping relationship between N preambles on the PRACH time-frequency resource and M combinations of a PUSCH time-frequency resource and a signature comprises:

>   the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and
>   the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, wherein
>   the signature is a frequency-domain resource hopping pattern, a hopping pattern of a resource group comprising a frequency-domain resource, a code-domain resource, a code-domain resource hopping pattern, a space-domain resource, or a space-domain resource hopping pattern.

5.   The method according to claim 2, wherein the resources are a pilot resource and a PUSCH time-frequency resource; and
the mapping relationship between a plurality of resources and a plurality of signatures comprises:

>   a mapping relationship between P pilot resources on the PUSCH time-frequency resource and Q signatures, wherein
>   P and Q are positive integers.

6. The method according to claim 5, wherein the mapping relationship between P pilot resources on the PUSCH time-frequency resource and Q signatures comprises:

the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and
the Q signatures mapped to the P pilot resources are first selected in increasing order of signature group indexes, and then in increasing order of indexes in a signature group, wherein
the signature is a code-domain resource, a code-domain resource hopping pattern, a space-domain resource, or a space-domain resource hopping pattern.

7. The method according to any one of claims 2 to 6, wherein the method further comprises:
receiving, by the terminal device, configuration information from a network device, wherein the configuration information is used to configure the mapping relationship between a plurality of resources and a plurality of signatures.

8. The method according to claim 1, wherein there is a mapping relationship between a plurality of downlink signals and a plurality of signatures, and the at least one signature is a signature that is in the plurality of signatures and that is mapped to the first downlink signal; and
the mapping relationship between a plurality of downlink signals and a plurality of signatures comprises:

a mapping relationship between R downlink signals in the plurality of downlink signals and S combinations of a PUSCH time-frequency resource, a pilot resource, and a signature;
a mapping relationship between R downlink signals in the plurality of downlink signals and S combinations of a PUSCH time-frequency resource and a signature;
a mapping relationship between R downlink signals in the plurality of downlink signals and S combinations of a pilot resource and a signature; or
a mapping relationship between R downlink signals in the plurality of downlink signals and S signatures, wherein R and S are positive integers.

9. The method according to claim 8, wherein the mapping relationship between R downlink signals in the plurality of downlink signals and S combinations of a PUSCH time-frequency resource and a signature comprises:

the R downlink signals are selected from the plurality of downlink reference signals in increasing order of indexes; and
the S combinations of a PUSCH time-frequency resource and a signature that correspond to the R downlink signals are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, wherein
the signature is a frequency-domain resource hopping pattern, a hopping pattern of a resource group comprising a frequency-domain resource, a code-domain resource, a code-domain resource hopping pattern, a space-domain resource, or a space-domain resource hopping pattern.

10. The method according to claim 1, wherein the determining, by the terminal device, at least one signature based on the first downlink signal comprises:
determining, by the terminal device, the at least one signature in a signature set associated with the first downlink signal, wherein each of the plurality of downlink signals has an associated signature set.

11. The method according to claim 10, wherein the determining, by the terminal device, the at least one signature in a signature set associated with the first downlink signal comprises:

when the terminal device is determined to locate in a coverage edge area of the first downlink signal, determining, by the terminal device, the at least one signature in a first signature subset, wherein
the first signature subset and a signature set associated with a second downlink signal are orthogonal to each other;
a correlation between the first signature subset and the signature set associated with the second downlink signal is lower than a correlation threshold; and
the first signature subset is a subset of the signature set associated with the first downlink signal, and the second downlink signal is one of the plurality of downlink signals.

12. The method according to claim 11, wherein the sending, by the terminal device, data by using the at least one signature comprises:

when the terminal device is located in the coverage edge area of the first downlink signal, sending, by the terminal device, the data by using a first transmission parameter and the at least one signature; or
when the terminal device is located in a non-coverage edge area of the first downlink signal, sending, by the terminal device, the data by using a second transmission parameter and the at least one signature.

13. The method according to claim 11 or 12, wherein a condition for determining that the terminal device is located in the coverage edge area of the first downlink signal comprises one or more of the following:

signal quality of the first downlink signal is less than or equal to a first threshold;
signal quality of a third downlink signal is greater than or equal to a second threshold;
an absolute value of a difference between signal quality of a third downlink signal and signal quality of the first downlink signal is less than or equal to a third threshold; or
a ratio of signal quality of a third downlink signal to signal quality of the first downlink signal is greater than or equal to a fourth threshold; and
the third downlink signal is a downlink signal with highest signal quality in the plurality of downlink signals other than the first downlink signal.

14. The method according to claim 10, wherein the method further comprises:

determining, by the terminal device, an interference and/or multiplexing level of a time-frequency resource for sending the data; and
determining, by the terminal device, a third transmission parameter based on the interference and/or multiplexing level of the time-frequency resource, wherein the third parameter meets the following characteristic: a higher interference and/or multiplexing level of the time-frequency resource indicates a lower power corresponding to the third transmission parameter; and
the sending, by the terminal device, data by using the at least one signature comprises:
sending, by the terminal device, the data by using the third transmission parameter and the at least one signature.

15. The method according to any one of claims 10 to 14, wherein any two signatures in the signature set associated with the first downlink signal are orthogonal to each other; and
at least one signature in the signature set associated with the first downlink signal is not orthogonal to at least one signature in a signature set associated with a fourth downlink signal, and the fourth downlink signal is one of the plurality of downlink signals.

16. The method according to any one of claims 10 to 15, wherein the signature is at least one of a code-domain resource, a pilot resource, a power resource, a space-domain resource, and a resource hopping pattern.

17. The method according to any one of claims 1 to 16, wherein the downlink signal is a synchronization signal block SSB.

18. A communication method, comprising:

determining, by a network device, configuration information, wherein the configuration information is used to configure a mapping relationship between a plurality of resources and a plurality of signatures; and
sending, by the network device, the configuration information to a terminal device.

19. The method according to claim 18, wherein the resources are a preamble preamble and a physical random access channel PRACH time-frequency resource for sending the preamble; and
the mapping relationship between a plurality of resources and a plurality of signatures comprises:

a mapping relationship between N preambles on the PRACH time-frequency resource and M combinations of a physical uplink shared channel PUSCH time-frequency resource, a pilot resource, and a signature;

a mapping relationship between N preambles on the PRACH time-frequency resource and M combinations of a PUSCH time-frequency resource and a signature;

a mapping relationship between N preambles on the PRACH time-frequency resource and M combinations of a pilot resource and a signature; or

a mapping relationship between N preambles on the PRACH time-frequency resource and M signatures, wherein M and N are positive integers.

20. The method according to claim 19, wherein the mapping relationship between N preambles on the PRACH time-frequency resource and M combinations of a PUSCH time-frequency resource and a signature comprises:

the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and

the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, wherein

the signature is a frequency-domain resource hopping pattern, a hopping pattern of a resource group comprising a frequency-domain resource, a code-domain resource, a code-domain resource hopping pattern, a space-domain resource, or a space-domain resource hopping pattern.

21. The method according to claim 18, wherein the resources are a pilot resource and a PUSCH time-frequency resource; and
the mapping relationship between a plurality of resources and a plurality of signatures comprises:

a mapping relationship between P pilot resources on the PUSCH time-frequency resource and Q signatures, wherein
P and Q are positive integers.

22. The method according to claim 21, wherein the mapping relationship between P pilot resources on the PUSCH time-frequency resource and Q signatures comprises:

the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and

the Q signatures mapped to the P pilot resources are first selected in increasing order of signature group indexes, and then in increasing order of indexes in a signature group, wherein
the signature is a code-domain resource, a code-domain resource hopping pattern, a space-domain resource, or a space-domain resource hopping pattern.

23. A communication apparatus, comprising an interface unit and a processing unit, wherein

the processing unit is configured to: determine a first downlink signal from a plurality of downlink signals, and determine at least one signature based on the first downlink signal; and
the interface unit is configured to send data by using the at least one signature.

24. The apparatus according to claim 23, wherein when determining the at least one signature based on the first downlink signal, the processing unit is specifically configured to: determine, based on the first downlink signal, a first resource from a plurality of resources that have a mapping relationship with the plurality of downlink signals; and determine, based on the first resource, the at least one signature from a plurality of signatures that have a mapping relationship with the plurality of resources.

25. The apparatus according to claim 24, wherein the resources are a preamble preamble and a physical random access channel PRACH time-frequency resource for sending the preamble; and

the mapping relationship between a plurality of resources and a plurality of signatures comprises:

a mapping relationship between N preambles on the PRACH time-frequency resource and M combinations of a physical uplink shared channel PUSCH time-frequency resource, a pilot resource, and a signature;
a mapping relationship between N preambles on the PRACH time-frequency resource and M combinations of a PUSCH time-frequency resource and a signature;
a mapping relationship between N preambles on the PRACH time-frequency resource and M combinations of a pilot resource and a signature; or
a mapping relationship between N preambles on the PRACH time-frequency resource and M signatures, wherein M and N are positive integers.

26. The apparatus according to claim 25, wherein the mapping relationship between N preambles on the PRACH time-frequency resource and M combinations of a PUSCH time-frequency resource and a signature comprises: the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, wherein the signature is a frequency-domain resource hopping pattern, a hopping pattern of a resource group comprising a frequency-domain resource, a code-domain resource, a code-domain resource hopping pattern, a space-domain resource, or a space-domain resource hopping pattern.

27. The apparatus according to claim 24, wherein the resources are a pilot resource and a PUSCH time-frequency resource; and the mapping relationship between a plurality of resources and a plurality of signatures comprises: a mapping relationship between P pilot resources on the PUSCH time-frequency resource and Q signatures, wherein P and Q are positive integers.

28. The apparatus according to claim 27, wherein the mapping relationship between P pilot resources on the PUSCH time-frequency resource and Q signatures comprises: the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and the Q signatures mapped to the P pilot resources are first selected in increasing order of signature group indexes, and then in increasing order of indexes in a signature group, wherein the signature is a code-domain resource, a code-domain resource hopping pattern, a space-domain resource, or a space-domain resource hopping pattern.

29. The apparatus according to any one of claims 24 to 28, wherein the interface unit is further configured to receive configuration information from a network device, wherein the configuration information is used to configure the mapping relationship between a plurality of resources and a plurality of signatures.

30. The apparatus according to claim 23, wherein there is a mapping relationship between a plurality of downlink signals and a plurality of signatures, and the at least one signature is a signature that is in the plurality of signatures and that is mapped to the first downlink signal; and
the mapping relationship between a plurality of downlink signals and a plurality of signatures comprises: a mapping relationship between R downlink signals in the plurality of downlink signals and S combinations of a PUSCH time-frequency resource, a pilot resource, and a signature; a mapping relationship between R downlink signals in the plurality of downlink signals and S combinations of a PUSCH time-frequency resource and a signature; a mapping relationship between R downlink signals in the plurality of downlink signals and S combinations of a pilot resource and a signature; or a mapping relationship between R downlink signals in the plurality of downlink signals and S signatures, wherein R and S are positive integers.

31. The apparatus according to claim 30, wherein the mapping relationship between R downlink signals in the plurality of downlink signals and S combinations of a PUSCH time-frequency resource and a signature comprises: the R downlink signals are selected from the plurality of downlink reference signals in increasing order of indexes; and

the S combinations of a PUSCH time-frequency resource and a signature that correspond to the R downlink signals are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, wherein the signature is a frequency-domain resource hopping pattern, a hopping pattern of a resource group comprising a frequency-domain resource, a code-domain resource, a code-domain resource hopping pattern, a space-domain resource, or a space-domain resource hopping pattern.

32. The apparatus according to claim 23, wherein when determining the at least one signature based on the first downlink signal, the processing unit is specifically configured to determine the at least one signature in a signature set associated with the first downlink signal, wherein each of the plurality of downlink signals has an associated signature set.

33. The apparatus according to claim 32, wherein when determining the at least one signature in the signature set associated with the first downlink signal, the processing unit is specifically configured to: when the processing unit determines that the communication apparatus is located in a coverage edge area of the first downlink signal, determine the at least one signature in a first signature subset, wherein the first signature subset and a signature set associated with a second downlink signal are orthogonal to each other; a correlation between the first signature subset and the signature set associated with the second downlink signal is lower than a correlation threshold; and the first signature subset is a subset of a signature set associated with the first downlink signal, and the second downlink signal is one of the plurality of downlink signals.

34. The apparatus according to claim 33, wherein when sending the data by using the at least one signature, the interface unit is specifically configured to: when the processing unit determines that the communication apparatus is located in the coverage edge area of the first downlink signal, send the data by using a first transmission parameter and the at least one signature; or when the processing unit determines that the communication apparatus is located in a non-coverage edge area of the first downlink signal, send the data by using a second transmission parameter and the at least one signature.

35. The apparatus according to claim 33 or 34, wherein a condition for determining, by the processing unit, that the communication apparatus is located in the coverage edge area of the first downlink signal comprises one or more of the following: signal quality of the first downlink signal is less than or equal to a first threshold; signal quality of a third downlink signal is greater than or equal to a second threshold; an absolute value of a difference between signal quality of a third downlink signal and signal quality of the first downlink signal is less than or equal to a third threshold; or a ratio of signal quality of a third downlink signal to signal quality of the first downlink signal is greater than or equal to a fourth threshold; and the third downlink signal is a downlink signal with highest signal quality in the plurality of downlink signals other than the first downlink signal.

36. The apparatus according to claim 32, wherein the processing unit is further configured to: determine an interference and/or multiplexing level of a time-frequency resource for sending the data; and determine a third transmission parameter based on the interference and/or multiplexing level of the time-frequency resource, wherein the third parameter meets the following characteristic: a higher interference and/or multiplexing level of the time-frequency resource indicates a lower power corresponding to the third transmission parameter; and when sending the data by using the at least one signature, the interface unit is specifically configured to send the data by using the third transmission parameter and the at least one signature.

37. The apparatus according to any one of claims 32 to 36, wherein any two signatures in the signature set associated with the first downlink signal are orthogonal to each other; and at least one signature in the signature set associated with the first downlink signal is not orthogonal to at least one signature in a signature set associated with a fourth downlink signal, and the fourth downlink signal is one of the plurality of downlink signals.

38. The apparatus according to any one of claims 32 to 37, wherein the signature is at least one of a code-domain resource, a pilot resource, a power resource, a space-domain resource, and a resource hopping pattern.

39. The apparatus according to any one of claims 23 to 38, wherein the downlink signal is a synchronization signal block SSB.

40. A communication apparatus, comprising an interface unit and a processing unit, wherein

the processing unit is configured to determine configuration information, wherein the configuration information is used to configure a mapping relationship between a plurality of resources and a plurality of signatures; and the interface unit is configured to send the configuration information to a terminal device.

41. The apparatus according to claim 40, wherein the resources are a preamble preamble and a physical random access channel PRACH time-frequency resource for sending the preamble; and the mapping relationship between a plurality of resources and a plurality of signatures comprises:

a mapping relationship between N preambles on the PRACH time-frequency resource and M combinations of a physical uplink shared channel PUSCH time-frequency resource, a pilot resource, and a signature; a mapping relationship between N preambles on the PRACH time-frequency resource and M combinations of a PUSCH time-frequency resource and a signature; a mapping relationship between N preambles on the PRACH time-frequency resource and M combinations of a pilot resource and a signature; or a mapping relationship between N preambles on the PRACH time-frequency resource and M signatures, wherein M and N are positive integers.

42. The apparatus according to claim 41, wherein the mapping relationship between N preambles on the PRACH time-frequency resource and M combinations of a PUSCH time-frequency resource and a signature comprises:

the N preambles are first selected in increasing order of preamble indexes on the PRACH time-frequency resource, then in increasing order of frequency-domain resource indexes of a plurality of frequency multiplexed PRACH time-frequency resources, and thirdly in increasing order of time-domain resource indexes of a plurality of time multiplexed PRACH time-frequency resources; and the M combinations of a PUSCH time-frequency resource and a signature that are mapped to the N preambles are first selected in increasing order of frequency-domain resource indexes of a plurality of frequency multiplexed PUSCH time-frequency resources, then in increasing order of indexes in a signature group, thirdly in increasing order of signature group indexes, and fourthly in increasing order of time-domain resource indexes of a plurality of time multiplexed PUSCH time-frequency resources, wherein the signature is a frequency-domain resource hopping pattern, a hopping pattern of a resource group comprising a frequency-domain resource, a code-domain resource, a code-domain resource hopping pattern, a space-domain resource, or a space-domain resource hopping pattern.

43. The apparatus according to claim 40, wherein the resources are a pilot resource and a PUSCH time-frequency resource; and the mapping relationship between a plurality of resources and a plurality of signatures comprises:

a mapping relationship between P pilot resources on the PUSCH time-frequency resource and Q signatures, wherein P and Q are positive integers.

44. The apparatus according to claim 43, wherein the mapping relationship between P pilot resources on the PUSCH time-frequency resource and Q signatures comprises:

the P pilot resources are first selected in increasing order of frequency-domain resource indexes of a plurality of frequency multiplexed PUSCH time-frequency resources, then in increasing order of pilot port indexes on the PUSCH time-frequency resource, thirdly in increasing order of pilot sequence indexes on the PUSCH time-frequency resource, and fourthly in increasing order of time-domain resource indexes of a plurality of time multiplexed PUSCH time-frequency resources; and the Q signatures mapped to the P pilot resources are first selected in increasing order of signature group indexes, and then in increasing order of indexes in a signature group, wherein the signature is a code-domain resource, a code-domain resource hopping pattern, a space-domain resource, or a space-domain resource hopping pattern.

45. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 17 or the method according to any one of claims 18 to 22 by using a logic circuit or executing code instructions.

46. A computer program product, comprising program code, wherein when the program code is executed, the method according to any one of claims 1 to 17 is implemented, or the method according to any one of claims 18 to 22 is implemented.

47. A chip, wherein the chip is configured to implement the method according to any one of claims 1 to 17, or is configured to implement the method according to any one of claims 18 to 22.

48. A computer-readable storage medium, wherein the storage medium stores a computer program or instructions, and when the computer program or the instructions is/are executed, the method according to any one of claims 1 to 17 is implemented, or the method according to any one of claims 18 to 22 is implemented.

FIG. 1

FIG. 2

◄— Bit-level processing —► ◄— Symbol-level processing —►

| EFC encoder | → | Bit-level interleaver /scrambler | → | Bit-to-symbol mapping | → | Symbol-to-resource element mapping | → | IFFT |

NOMA transmitter

Channel

NOMA receiver

| FEC decoder | | Interference cancellation | | Multi-user detector | | FFT |

Advanced receiver with a multi-user detector and interference cancellation

FIG. 3

| Terminal device | | Network device |

S401: The terminal device determines a first downlink signal from a plurality of downlink signals

S402: The terminal device determines at least one signature based on the first downlink signal

S403: The terminal device sends data by using the at least one signature, and correspondingly, the network device receives the data

FIG. 4

FIG. 5

FIG. 6

FIG. 7

P1

P2

| | Slot 1 | Slot 2 | Slot 3 | Slot 4 |
|---|---|---|---|---|
| RB 1 | | P2 | P1 | |
| RB 2 | | | P2 | |
| RB 3 | P2 | P1 | | P1 |
| RB 4 | P1 | | | P2 |

FIG. 8

| | Symbol 1 | Symbol 2 | Symbol 3 | Symbol 4 | Symbol 5 | Symbol 6 | Symbol 7 |
|---|---|---|---|---|---|---|---|
| SC 12<br>SC 11<br>SC 10<br>SC 9 | Codebook 1 | Codebook 4 | Codebook 2 | Codebook 3 | Codebook 1 | Codebook 4 | Codebook 2 |
| SC 8<br>SC 7<br>SC 6<br>SC 5 | Codebook 2 | Codebook 1 | Codebook 3 | Codebook 4 | Codebook 2 | Codebook 1 | Codebook 3 |
| SC 4<br>SC 3<br>SC 2<br>SC 1 | Codebook 3 | Codebook 3 | Codebook 4 | Codebook 4 | Codebook 3 | Codebook 3 | Codebook 4 |

FIG. 9

| SC 12 | | | | | | | |
|-------|---|---|---|---|---|---|---|
| SC 11 | Resource group 1 | Resource group 4 | Resource group 2 | Resource group 3 | Resource group 1 | Resource group 4 | Resource group 2 |
| SC 10 | | | | | | | |
| SC 9 | | | | | | | |
| SC 8 | | | | | | | |
| SC 7 | Resource group 2 | Resource group 1 | Resource group 3 | Resource group 4 | Resource group 2 | Resource group 1 | Resource group 3 |
| SC 6 | | | | | | | |
| SC 5 | | | | | | | |
| SC 4 | | | | | | | |
| SC 3 | Resource group 3 | Resource group 3 | Resource group 4 | Resource group 4 | Resource group 3 | Resource group 3 | Resource group 4 |
| SC 2 | | | | | | | |
| SC 1 | | | | | | | |
| | Symbol 1 | Symbol 2 | Symbol 3 | Symbol 4 | Symbol 5 | Symbol 6 | Symbol 7 |

FIG. 10

Network device

SSB-1 → S1

SSB-2 → S2

SSB-3 → S3

FIG. 11

FIG. 12

FIG. 13

FIG. 14

FIG. 15

S1601: The terminal device determines a CORESET, a CORESET set, an SS, an RNTI, or a received DCI format for receiving DCI

S1602: The terminal device determines at least one signature for sending data based on the determined CORESET, CORESET set, SS, RNTI, or received DCI format

S1603: The terminal device sends the data by using the at least one signature, and correspondingly, the network device receives the data

FIG. 16

Terminal device

Network device

S1701: The terminal device determines a serving IAB node, a DU node, a relay node, or a cell

S1702: The terminal device determines at least one signature for sending data based on the determined serving IAB node, DU node, relay node, or cell

S1703: The terminal device sends the data by using the at least one signature, and correspondingly, the network device receives the data

FIG. 17

Terminal device

Network device

S1801: The terminal device determines an uplink signal

S1802: The terminal device determines at least one signature based on the determined uplink signal

S1803: The terminal device sends data by using the at least one signature, and correspondingly, the network device receives the data

FIG. 18

FIG. 19

S2001: A terminal device determines a coverage area of a first SSB in which the terminal device is located

S2002: The terminal device determines at least one signature based on the determined coverage area

FIG. 20

S1

SSB-1

Edge terminal device
S21 (a subset of S2)

SSB-2

Intermediate
terminal device S2

SSB-3

Edge terminal device
S23 (a subset of S2)

Network
device

S3

FIG. 21

Communication apparatus 2200

Processing unit 2210

Interface unit 2220

FIG. 22

Communication apparatus 2300

Processor 2310

Interface circuit 2320

Memory 2330

FIG. 23

## INTERNATIONAL SEARCH REPORT

| International application No. |
| --- |
| **PCT/CN2022/132544** |

| A. | CLASSIFICATION OF SUBJECT MATTER |
| --- | --- |
| | H04W 74/08(2009.01)i |

According to International Patent Classification (IPC) or to both national classification and IPC

| B. | FIELDS SEARCHED |
| --- | --- |

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 签名, 资源, 映射, 多址接入, MA, 正交, 非正交, OMA, NOMA, 下行信号, SSB, signature, resource, mapping, multiple access, orthogonal, non-orthogonal, downlink signal

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | ZTE. "Summary of AI 7.2.1.3 on procedures for NOMA"<br>*3GPP TSG RAN WG1 Meeting #94b R1-1811979*, 12 October 2018 (2018-10-12),<br> section 2 | 1-48 |
| X | SAMSUNG. "Discussion on NoMA related procedure"<br>*3GPP TSG RAN WG1 Meeting #93 R1-1806753*, 25 May 2018 (2018-05-25),<br> section 2 | 1-48 |
| X | CN 110475378 A (BEIJING SAMSUNG TELECOM R&D CENTER et al.) 19 November<br>2019 (2019-11-19)<br> description, paragraphs [0006]-[0030] | 1-48 |
| A | CN 111698777 A (RESEARCH INSTITUTE OF CHINA MOBILE COMMUNICATIONS<br>CORPORATION et al.) 22 September 2020 (2020-09-22)<br> entire document | 1-48 |
| A | US 2019132870 A1 (MEDIATEK INC.) 02 May 2019 (2019-05-02)<br> entire document | 1-48 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 December 2022** | **09 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/132544**

| Patent document cited in search report | | | Publication date (day/month/year) | Patent family member(s) | | | Publication date (day/month/year) |
|---|---|---|---|---|---|---|---|
| CN | 110475378 | A | 19 November 2019 | KR | 20200141992 | A | 21 December 2020 |
| | | | | US | 2021136827 | A1 | 06 May 2021 |
| | | | | EP | 3777409 | A1 | 17 February 2021 |
| | | | | WO | 2019216586 | A1 | 14 November 2019 |
| | | | | IN | 202037048318 | A | 05 February 2021 |
| CN | 111698777 | A | 22 September 2020 | None | | | |
| US | 2019132870 | A1 | 02 May 2019 | WO | 2019080923 | A1 | 02 May 2019 |
| | | | | TW | 202017427 | A | 01 May 2020 |
| | | | | CN | 110521162 | A | 29 November 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111432232